(19) Europäisches Patentamt
European Patent Office
Office européen des brevets

(11) EP 2 376 376 B1

(12) EUROPEAN PATENT SPECIFICATION

(45) Date of publication and mention of the grant of the patent:
**29.03.2017 Bulletin 2017/13**

(21) Application number: **09775109.3**

(22) Date of filing: **11.12.2009**

(51) Int Cl.:
***H01M 2/16*** *(2006.01)* ***C01B 25/45*** *(2006.01)*
***H01M 4/58*** *(2010.01)*

(86) International application number:
**PCT/EP2009/008879**

(87) International publication number:
**WO 2010/066439 (17.06.2010 Gazette 2010/24)**

(54) **USE OF AN ARROJADITE PHOSPHATE BASED COMPOUND IN AN ELECTROCHEMICAL STORAGE DEVICE**

VERWENDUNG EINER ARROJADITE PHOSPHAT BASIERTE VERBINDUNG IN EINER ELEKTROCHEMISCHEN SPEICHERVORRICHTUNG

UTILISATION D'UN COMPOSÉ À BASE DE PHOSPHATE ARROJADITE DANS UN DISPOSITIF DE STOCKAGE ÉLECTROCHIMIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **12.12.2008 EP 08021669**

(43) Date of publication of application:
**19.10.2011 Bulletin 2011/42**

(73) Proprietor: **Max-Planck-Gesellschaft zur Förderung der Wissenschaften e.V.
80539 München (DE)**

(72) Inventors:
- **KALLFASS, Christoph
74523 Schwäbisch Hall (DE)**
- **SCHIER, Hermann
70563 Stuttgart (DE)**
- **SCHUBERT, Helmut
13465 Berlin (DE)**

(74) Representative: **Manitz, Finsterwald & Partner GbR
Martin-Greif-Strasse 1
80336 München (DE)**

(56) References cited:
**US-A- 4 289 612**

- **DEMARTIN F ET AL: "Sigismundite, (Ba,K,Pb)Na3(Ca,Sr)(Fe,Mg,Mn)14Al(OH)2(PO4 ) 12, a new Ba-rich member of the arrojadite group from Spluga Valley, Italy", CANADIAN MINERALOGIST, MINERALOGICAL ASSOCIATION OF CANADA, OTTAWA, CA, vol. 34, no. 4, 1 January 1996 (1996-01-01), pages 827-834, XP008111772, ISSN: 0008-4476**
- **SHINNO I ET AL: "Octahedral site Fe2+ quadrupole splitting distributions from the Mossbauer spectra of arrojadite", AMERICAN MINERALOGIST, WASHINGTON, DC, US, US, vol. 83, no. 11-12, part 1, 1 January 1998 (1998-01-01), pages 1316-1322, XP008111769, ISSN: 0003-004X**
- **CAMARA F ET AL: "The arrojadite enigma: I. A new formula and a new model for the arrojadite structure", AMERICAN MINERALOGIST, WASHINGTON, DC, US, US, vol. 91, no. 8-9, 1 January 2006 (2006-01-01), pages 1249-1259, XP008111770, ISSN: 0003-004X**
- **N. RAVET, Y. CHOUINARD, J.F. MAGNAN, S. BESNER, M. GAUTHIER, M. ARMAND: "Electroactivity of natural and synthetic triphylite", JOURNAL OF POWER SOURCES, vol. 97-98, 1 July 2001 (2001-07-01), pages 503-507, XP002546063,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

- **DATABASE CA [Online] CHEMICAL ABSTRACTS SERVICE, COLUMBUS, OHIO, US; 13 July 1986 (1986-07-13), YAKUBOVICH, O. V. ET AL: "Crystal structure of synthetic iron(3+) arrojadite with an ideal formula K2Na3Fe142+Fe3+[PO4]12(OH)2", XP002624393, retrieved from STN Database accession no. 105:9344 -& YAKUBOVICH O V ET AL: "Crystal structure of synthetic iron(3+) arrojadite with an ideal formula K2Na3Fe142+Fe3+[PO4]12(OH)2", MOSKOVSKII GOSUDARSTVENNYI UNIVERSITET. VESTNIK. SERIYA 4: GEOLOGIYA, IZDATEL'STVO MOSKOVSKOGO GOSUDARSTVENNOGO UNIVERSITETA IM. M. V. LOMONOSOVA, RU, vol. 4, 1 January 1986 (1986-01-01), pages 36-47, XP008133248, ISSN: 0579-9406 cited in the application**
- **CHOPIN C ET AL: "The arrojadite enigma: II. Compositional space, new members, and nomenclature of the group", AMERICAN MINERALOGIST, WASHINGTON, DC, US, US, vol. 91, no. 8-9, 1 January 2006 (2006-01-01), pages 1260-1270, XP008111771, ISSN: 0003-004X**
- **MOORE P B ET AL: "The arrojadite -dickinsonite series, KNa4Ca(Fe,Mn)142+Al(OH)2(PO4)12: crystal structure and crystal chemistry", AMERICAN MINERALOGIST, WASHINGTON, DC, US, US, vol. 66, no. 9-10, 1 January 1981 (1981-01-01), pages 1034-1049, XP008111768, ISSN: 0003-004X cited in the application**
- **S. MERLINO, M. MELLINI: "Structure of Arrojadite, KNa4CaMn4Fe10Al(PO4)12(OH,F)2", ACTA CRYSTALLOGRAPHICA, vol. B37, no. 9, 1 September 1981 (1981-09-01), pages 1733-1736, XP002546064, cited in the application**

## Description

The present invention relates to an Arrojadite phosphate based compound having a novel structure and suitable, amongst other things, for use as an electrode material such as a cathode or an anode or as an electroactive material in a primary or secondary battery or in another type of electrochemical storage device or electrochemical cell and also to methods of preparing such a material.

In the last eleven years the material $LiFePO_4$, an ortho-phosphate, has adopted a central position in the research, development and optimization of new cathode materials, in particular for use in lithium ion batteries. The first description of the electrical properties of this synthetically manufactured ortho-phosphate dates from the year 1997 and was the starting point for rapid development, to the extent that it is nowadays a preferred cathode material used in lithium-ion batteries. More recently it has been found that the naturally occurring mineral triphylite, with the simplified chemical formula $LiFePO_4$, is likewise suitable as a cathode material. This is described in the paper by Ravet, N., Chouinard, J., Besner, S., Gautier, M. Armand, M. entitled "Electroactivity of natural and synthetic triphylite" in the Journal of power sources, 97-98:503-507, 2001.

The $LiFePO_4$ materials used to date are isostructural to olivine.

Despite the extensive development work which has gone into the development of $LiFePO_4$ materials the commercially available versions still have many disadvantages and are far from satisfactory. Thus, there is a wide diversity of $LiFePO_4$ materials which do not have the same properties.

There is an ongoing endeavour to achieve ever more powerful battery materials with excellent chemical, electrical, mechanical and environmentally compatible characteristics such as are necessary for use in the most diverse technical communication apparatus and drive technologies.

The article by Demartin F. et al, titled "Sigismundite, (Ba, K, Pb) Na3(ca, Sr)(Fe, Mg, Mn)14Al(OH2(PO4)12, a new Ba-rich member of the arrojadite group from Spluga Valley, Italy" published in Canadian Mineralogist, Mineralogical Association of Canada Ottowa, Ca in volume 34, no. 14 on January 1, 1996 on pages 827-834 discloses a phosphate compound in crystalline form.

Further prior art can be found in the documents: SHINNO I ET AL, "Octahedral site Fe2+ quadrupole splitting distributions from the Mossbauer spectra of arrojadite", American Mineralogist, Washington, DC, US, vol. 83, no. 11-12, part 1, PAGE 1316 - 1322, CAMARA F ET AL, "The arrojadite enigma: I. A new formula and a new model for the arrojadite structure", American Mineralogist, Washington, DC, US, vol. 91, no. 8-9, PAGE 1249 - 1259, and US4,289,612.

The principal object underlying the present invention is to provide a new class of materials which are ideally suited for use as an electroactive material particularly in batteries, especially but not only in lithium ion batteries and also materials with excellent storage capacities for various types of ions. It is a further object to provide a new class of materials which is superior in many respects to $LiFePO_4$, not just in its physical, chemical and electrochemical properties but also with respect to its ease of manufacture, favourable cost and environmentally friendly properties.

In order to satisfy this object there is provided a use of an Arrojadite phosphate based compound as an electroactive material in accordance with claim 1. The phosphate based compound comprising:

- A: exchangeable cations used in charging and discharging and being at least one of Li, Na, K and Ag,
    - wherein up to 25 Mol-% of the compound may be present in each of the following categories:
        - elements of Group 1 of the periodic table of elements,
        - elements of Group 2 of the periodic table of elements,
        - elements of Group 13 of the periodic table of elements,
        - elements of the group of transition metals, group 3 - 12 of the periodic table of elements, e. g. Mn, Fe, Ag
        - elements of Group 14 of the periodic table of elements, e. g. Pb
- B: non-exchangeable cations from the transition metals, e. g. Fe, Mn, Co, Cr, Ti, V, Cu, Sc
    - wherein 9 Mol-% - 23 Mol-%, preferably 16 Mol-% of the compound may be present in each of the following categories:
        - elements of Group 1 of the periodic table of elements,
        - elements of Group 2 of the periodic table of elements,
        - elements of Group 13 of the periodic table of elements,
        - elements of the group of transition metals, group 3 - 12 of the periodic table of elements, e. g. Mn, Fe,
        - elements of Group 14 of the periodic table of elements, e. g. Pb

- C: 60 Mol-% - 90 Mol-%, preferably 75 Mol-% of the compound being phosphate $(PO_4)^{3-}$ anions where oxygen is or may be partially substituted by a halide (e. g. F, Cl) and/or $OH^-$ to a maximum concentration of 10 Mol-% of the oxygen of the anions,
    - wherein said $(PO_4)^{3-}$ anions may be partially substituted by one or more of:
        - $SiO_4^{4-}$ silicate,
        - $BO_3^{3-}$ borate,
        - $CO_3^{2-}$ carbonate,
        - $H_2O$ water up to a maximum amount of < 31 Mol-% of the anions,
- said compound being in crystalline form and having elongate channels extending through the unit cell of the structure and
- with the compound being present either in single crystal form or as an anisotropic microcrystalline or nanocrystalline material,

wherein said compound in crystalline form has been treated to remove said extractable cations to leave open elongate channels extending through the unit cell of the compound, said elongate channels optionally being subsequently filled with a desired species of cation.

The value of less than 31 Mol-% is selected because at 31 Mol-% the compound becomes unstable and for this reason values higher than 30 Mol-% should preferably not be selected.

The compound can additionally comprise at least one element selected from the group consisting of Group 2 of the periodic table of elements and aluminium. Aluminium is optional.

Moreover, the element selected from the group of transition metals can comprise at least one of Sc, Ti, V, Cr, Mn, Fe, Co, Ni, Cu and Zn. In the following text the expression "transistion metal" is a synonym for the elements of Group 3-12 of the periodic table of elements (Fig. 9).

Some materials of the general class described above are known and are generally referred to as "Arrojadites". In the following the term "Arrojadite" will be used as a generic term or synonym to describe the crystalline structure in accordance with the present invention. Arrojadites are known per se and seven different structure models have been described in five publications (as listed in Fig. 1).

These compositions are either naturally occurring forms of Arrojadite or synthetically prepared forms. Although their crystalline nature has been identified no-one has hitherto recognised that they include elongate channels extending through the respective unit cells from one side to the other, but are described as isolated parts of the framework or as vacancies.

These partially unoccupied lattice sites are usually described as mixed positions of at least two different ions, e.g. for Nickel Plate Arrojadite Fe and Al, which show up as a pseudo atom, e.g. "$Cr^{3+}$", with approximately the same electron density (24 electrons, taken from 92 % $Fe^{III}$ and 8 % $Al^{III}$) in the structural model, data provided as Computer Interchange Format (CIF). The flexible occupations of the different sites offer the technical advantage of filling up these sites with a variety of mobile cations, e.g. Na, Li, K, Ag. In addition, if the split positions are divided between the cations and part of the framework C, the amount of exchangeable cations is even more enhanced.

One important recognition underlying the present invention is that the element or elements filling these elongate channels can readily be removed chemically or electrochemically to form open elongate channels which can subsequently be used to accommodate and reversibly store ions such as Li, Na, K and/or Ag thus making the materials particularly suitable for use as a cathode material in an Li, Na, K or Ag based battery.

The Arrojadite phosphate based compound can be readily used an electroactive material in the form of an electrode material such as a cathode or anode for a primary or secondary battery or in another form of electrochemical storage device such as a supercapacitor. It can also be used generally as an electroactive material e.g. as a semipermeable membrane used as separator in electrochemical cells or battery.

The material is particularly beneficial when used in an electrochemical storage device because a relatively large amount of the relevant ions can be stored resulting in a high exploitable electrical capacity, which can certainly be increased when the new material has been fully developed. Moreover, the material is dimensionally and chemically stable. Thus there is virtually no change in size of the electrode material when the battery is charged or discharged so that the battery or electrochemical storage device does not suffer mechanical damage due to size changes during the work cycles and has a long working life. Moreover, the fact that there is no chemical change in the structural framework involved during the storage, removal or transport of the relevant ions means that the charge capacity and particularly the useful charge capacity is maintained over very many cycles. This has already been proved experimentally over 5000 charge and discharge cycles and there is no reason why the number of cycles should be limited. This is in stark contrast to other cathode materials, e.g. $LiFePO_4$, where chemical and structural changes take place during charging and discharging cycles resulting in a significant and progressive reduction in the useful charge capacity from the first charge/discharge cycle onwards.

When used in a lithium battery, the element selected for the exchangeable cations is Li or, when used in a sodium battery, the element selected for the exchangeable cations is Na or, when used in a potassium battery the element selected for the exchangeable cations is K or when used in a silver battery, the element selected for the exchangeable cations is Ag.

The material of the invention is not however restricted to use as an electrode in a battery or supercapacitor, it can for example, as suggested earlier in this specification, also be used as a semipermeable membrane for a separator in a battery with the elongate channels serving as a transport passage for the relevant conductive ions or, alternatively, as an ion exchange material, for example in chromatography.

Thus the invention also relates to an electrochemical storage device comprising an electrode formed of a phosphate based compound as described above and to a separator formed from such a phosphate based compound.

The Arrojadite phosphate based compound of the present invention can be prepared by a method comprising the steps of:

- removing from the earth in a suitable location, e. g. the Nickel Plate mine in South Dakota, USA or the Hagendorf mine in the Oberpfalz, Bavaria, Germany, a naturally occurring compound having the chemical composition of any one of claims 1 to 3 together with impurities,
- purification of the naturally occurring compound to remove the impurities, and
- chemically treating the naturally occurring compound, preferably after purification, to remove, so far as possible, exchangeable cations of the type A and the naturally occurring impurities to open up the elongate channels extending through the unit cell of the structure, i.e. to unload or clean them and leave open elongate channels.

The cleaning process can, for example, comprise a flotation process.

It will be appreciated that these processes are very straightforward and can be readily carried out on a large scale and in an environmentally friendly manner so that a favourably priced product can be realised.

In this case, the cleaned compound is chemically treated to remove the exchangeable cation or cations, i.e. Li, Na, K, Ca, Mg, Sr, Al, Fe, Mn, Zn and/or Ag to unload the structure and leave open elongate channels extending through the unit cell of the structure.

The chemical treatment step is conveniently carried out using a complexing agent such as EDTA (2-[2-(Bis(carboxymethyl)amino)ethyl-(carboxymethyl)amino]acetic acid), pentan-2,4-dione (acetyl-acetone), crown-ethers e.g. 18-crown-6 or 1,5-diphenylthiocarbazone (dithiozone). EDTA is particularly favoured as it is a water based and thus environmentally particularly friendly compound.

The method of preparation can also include the further step of at least partially filling the elongate channels with an active element selected from Group 1 of the periodic table of elements and/or Ag. This can, for example, be carried out by immersing said compound in a salt melt, by suspension or electrochemically.

As an alternative to mining the phosphate based compound in accordance with the present invention can also be synthesised, for example using the method proposed by O. V. Yakubovich, E. N. Matvienko, M. A. Simonov and O.K. Mel'nikov in the publication entitled "Crystal Structure of Synnthetic Fe3+- Arrojadite with ideal formula of K2Na5Fe2+14Fe3+(PO4)12(OH)2", Vestnik Moskovskogo Universiteta, Geologiya, Vol. 41, No. 1, pages 36 - 47, 1986.

That is to say the Arrojadite phosphate based compound of the present invention can be synthesised by hydrothermal synthesis, carried out using:

B: non-exchangeable cations, e.g. in the form of an oxide of one or more transition metals, e. g. $Fe_2O_3$
C: anions in the form of a phosphate, e. g. $(NH4)_2HPO_4$ or $(Na,K)_2HPO_4$,
A: exchangeable cations as a soluble salt of one of Li, Na, K and Ag, e. g. KCl, the method being carried out in a pressure vessel in the presence of water in a temperature range of 300° C - 600° C, e. g. 450° C, with the initial concentration of the aqueous solution being selected so that the concentration of A cations, e. g. KCl amounts to 30 - 70 wt%, preferably to about 50 wt% and with CsCl being present in an mount of 70 - 30 wt%, preferably e. g. 50 wt%.

After the synthesis has been completed the material of the invention is present as a crystalline material in an aqueous solution which can be removed leaving the crystalline product with the elongate channels filled with type A cations such as Li, Na, K and/or Ag.

In this case, the synthesised compound is made by synthesis and is not chemically treated to remove the exchangeable cation or cations, because the exchangeable ions are provided directly during the hydrothermal synthesis. The amount of lattice sites for exchangeable cations is highest for the synthetic compound and differs amongst the naturally occurring minerals, e.g. from Nickel Plate and Hagendorf.

The invention will now be described in more detail with reference to the accompanying drawings especially

with reference to use of the invention as a cathode material in a lithium ion battery and with the properties of the new material and its preparation being contrasted with that of $LiFePO_4$, currently one of the most promising cathode materials for commercial use in the near future. In the drawings there are shown:

| | |
|---|---|
| Fig. 1 | a table showing the articles dealing with the different crystal models for Arrojadites, which are published in the Inorganic Single Crystal Database (ICSD), |
| Figs. 2A to 2E | are representations of the unit cell of an Arrojadite crystal in accordance with the present invention as seen in the direction of the $\alpha$-axis (Fig. 2A), c-axis (Fig. 2B) and b-axis (Fig. 2C), with the coordination polyhedra of the type A-cations being shown with lined hatching, with the framework of the type B-cations being shown with squared hatching and with the framework of the type C-anions being shown in white, with Fig. 2D showing the same view as Fig. 2C but presenting only the framework of type B cations building up the channels and omitting all other components for the sake of clarity and with Fig. 2E presenting the same view as Fig. 2C but as an artistic impression of the unit cell in three dimensions when viewed along the b-axis, with the elongate channels being shown as approximately black cylinders, although the open channels are not of strictly cylindrical shape, |
| Figs. 3A, 3B and 3C | flow diagrams illustrating the manufacture of an Arrojadite material in accordance with the present invention from a mined material and by synthesis (Figs. 3A and 3B) in contrast to the manufacture of $LiFePO_4$ (Fig. 3C), |
| Figs. 4A and 4B | diagrams showing the reversible heat cycle of Arrojadite (Fig.4A) and the decomposition of $LiFePO_4$ (Fig.4B) when heated in air, |
| Figs. 5A and 5B | diagrams showing the reversible heat cycle of Arrojadite (Fig.5A) and the decomposition of $LiFePO_4$ (Fig.5B) when heated in a nitrogen atmosphere, |
| Fig. 6 | a representation of the unit cell of the prior art material $LiFePO_4$ as seen in the direction of the b-axis for comparison purposes, with the coordination polyhedra of $Li^+$ being shown with lined hatching, with the coordination polyhedra of $Fe^{2+}$ being shown with squared hatching and with the coordination polyhedra of $(PO_4)^{3-}$ being shown in white, |
| Fig. 7 | changes in powder patterns of Arrojadite samples in dependence on the stirring time in 0.01 M EDTA solution using $Cu_{\kappa\alpha 1}$ radiation for recording the powder patterns of the samples 0h, 2h, 21h, 90h, and 189h, these being respectively shifted by 1000 relative intensity units relative to the respectively preceding powder pattern for the sake of clarity, |
| Fig. 8 | a table showing the lattice parameters of $LiFePO_4$ and $FePO_4$ at T = 293K. |
| Fig. 9 | the Periodic Table of the Elements, IUPAC version 22 June 2007 as referred to herein, |
| Fig. 10 | a schematic view of a lithium ion battery and |
| Fig. 11 | an alternative schematic view of a lithium ion battery. |

Figs 2A to 2C now show a typical unit cell for a naturally occurring Arrojadite crystal from Nickel Plate, a phosphate based compound of the following formula:

- A: exchangeable cations used in charging and discharging, in this case Li, Na, K, Ag,
  - wherein 10.13 Mol-% of the compound is present in each of the following categories:
  - the following elements of Group 1 of the periodic table of elements: Li 0.57 Mol-%, Na 5.83 Mol-%, K 1.26 Mol-%,
  - the following elements of Group 2 of the periodic table of elements: Mg 1.13 Mol-%, Ca 1.14 Mol-%, Sr 0.02 Mol-%, Ba 0.01 Mol-%,
  - the following elements of the group of transition metals: Fe 2.9 Mol-%, Zn 0.14 Mol-%, Mn traces,
  - the following element of Group 13 of the periodic table of elements: Al 0.09 Mol-%,
  - the following element of Group 14 of the periodic table of elements: Pb 0.03 Mol-%,

- B: non-exchangeable cations from the transition metals in this case Fe, Mn, Co, Cr, Ti, V, Cu, Sc
  - wherein 16.4 Mol-% of the compound is present in each of the following categories:
  - traces of the following elements of Group 1 of the periodic table of elements: e.g. Li
  - traces of the following elements of Group 2 of the periodic table of elements: e.g. Mg, Ca:
  - the following elements of the group of transition metals: Fe 7.16 Mol-%, Mn 5.13 Mol-%, Ti 0.01 Mol-%, Zn traces,
  - the following elements of Group 13 of the periodic table of elements: Al 1.13 Mol-%,
  - the following elements of Group 14 of the periodic table of elements: Pb traces

- C: anions, with 73.45 Mol-% of the compound being anionic in the form of phosphate $(PO_4)^{3-}$ where oxygen is partially substituted by halide, e.g. $F^-$, $Cl^-$ and/or $OH^-$ to a maximum concentration of 10 Mol-% of the oxygen of the anions,
  - wherein said $(PO_4)^{3-}$ anions are partially substituted by one or more of:
    - traces of $SiO_4^{4-}$ silicate,
    - traces of $BO_3^{3-}$ borate,
    - traces of $CO_3^{2-}$ carbonate,
    - $H_2O$ water 2.4 Mol-%
  - in respective amounts of 3.27 Mol-% of the anions.

The compound is present in crystalline form and has elongate channels extending through the unit cell of the structure. It is present here in an anisotropic microcrystalline form.

The individual coordination polyhedra are identified in the figures by different hatching of the coordination polyhedra. Fig. 2D shows the same view as Fig. 2C but presents only the framework of type B cations building up the channels and omits all other components for the sake of clarity. Fig. 2E presents the same view as Fig. 2C but as an artistic impression of the unit cell in three dimensions when viewed along the b-axis, with the elongate channels 10 being shown as approximately black cylinders passing through the unit cell in the direction of the b-axis. Thus Fig. 2E shows a three-dimensional artist's representation of the unit cell of Figs. 2A to 2C which has been shaded to show the presence of elongate channels 10 passing through the unit cell in the direction of the b-axis.

It should be emphasised here that the Arrojadite material of the present invention can be present in the form of single crystal material, in which case the channels 10 extend right through the single crystal (other than at any dislocations which may be present) It is however by no means necessary for the Arrojadite material to be present in single crystal form. Instead it can be present in microcrystalline, 500 $\mu$m - 1 $\mu$m, or nanocrystalline, 1 $\mu$m - 0.001 $\mu$m, form and indeed will normally be present as a powder optionally together with a suitable binder such as poly-vinyl-difluoride (PVDF).

When the powder, for example produced by grinding, is pressed into tablet or film form a certain reorientation of the individual small crystals takes place so that the channels 10 tend to be aligned.

The manufacture of lithium-enriched Arrojadite and the manufacture of $LiFePO_4$ are fundamentally different. In the case of lithium-enriched Arrojadite a mineral or a synthetic manufactured Arrojadite with a defined chemical composition and defined thermal and structural properties is used as an educt and modified chemically in a two-stage process as illustrated in Fig. 3A or in a one-step process for the synthetic material as illustrated in Fig. 3B, in order to be used, for example, as a cathode material for the lithium ion battery.

As shown in Fig. 3A the starting point for the manufacture of a lithium-enriched Arrojadite material is a naturally occurring mined product symbolised in box 20 which has been cleaned by, for example, flotation as shown by arrow 21 to produce a cleaned mineral as an educt as symbolised in box 22. In this connection the educt Arrojadite is mined as a naturally occurring mineral, for example from corresponding deposits such as the Nickel Plate mine in USA as described in the paper by Lindberg, M.L. with the title "Arrojadite, hühnerkobelite and graftonite" in the Am. Mineral., 35:59-76,1950.

The product obtained in box 22 then forms the starting product "educt" for the first process step of cation extraction carried out using a suitable complexing agent such as EDTA, acetyl-acetone, 18-crown-6 or dithiozone. This extraction process can be carried out at room temperature (T = 293 K) as shown in box 24.

The process step of box 24 is then followed by a second process step illustrated in box 26 in the form of lithium enrichment. This can be done in several ways. For example the material from box 24 can be placed in a lithium salt melt for lithium enrichment, e.g. for $LiClO_4$ the melt temperature is about T = 510 K. Alternatively the Lithium enrichment can take place in a suspension of, for example, lithium perchlorate in water, typically at a temperature about T = 340 K. As a further alternative the insertion of lithium into the open elongate channels can take place in a charge cycle when using the material from process step 24 as an electrode material in a lithium ion battery, for example at room temperature or

simply in an electrochemical cell used for this purpose. If the enrichment with lithium takes place by a charge cycle in a cell resembling a lithium ion battery in which the material is used as the electrode then the resulting electrode material of step 24, can be prepared into an electrode for a lithium ion battery, for example by pasting it with a binder on a conductive material.

As an alternative Arrojadite materials can be manufactured synthetically, for example by means of hydrothermal processes as described by Yakubovich, O., Matvienko, E. N., Simonov, M. A, Mellnikov, O. K. entitled "Crystal structure of synthetic Fe3+ - arrojadite with ideal formula of K2Na5Fe2+14Fe3+(PO4)12(OH)2" in Geologiya 41:36-47, 1986. This synthesis is illustrated as a flow diagram in Fig. 3B.

After the synthesis has been completed the material of the invention is present as a crystalline material in an aqueous solution which can be removed leaving the crystalline product with the elongate channels filled with type A exchangeable cations such as Li, Na, K and/or Ag.

When the compound is made by synthesis then it is not treated chemically to remove the exchangeable cations because the exchangeable cations are provided during the hydrothermal synthesis.

At this stage it should be emphasised that lithium is only quoted as an example here for the enrichment step and any other suitable ions, for example, Na, K or Ag could be used in one of the procedures mentioned above.

Thus, using methods of "green chemistry" i.e. avoiding organic solvents the manufacture of lithium-enriched Arrojadite material is a two-stage process which is simple to carry out consisting basically of cation extraction and lithium enrichment. This ability to readily remove the elements filling the channels makes it possible to manufacture the material at very competitive cost and with little technical complexity in air using non-poisonous and favourably priced chemicals which can be manufactured on a large scale technically such as EDTA and lithium perchlorate.

It can readily be seen that the process of manufacturing a suitable Arrojadite material is straightforward and does not involve any serious temperature constraints.

In contrast the manufacture of a conventional $LiFePO_4$ material is much more complicated as can be seen from Fig. 3C which generally illustrates the manufacture of $LiFePO_4$ by means of solid state reaction as described by Yamada, A, Chung, S. C., Hinokuma, K in the paper "Optimised LiFePO4 for lithium battery cathodes" in Journal of the Electrochemical Society 148:A224-229, 2001.

The starting point for this process is to form a mixture of $Fe(CH_3COO)_2$, $Li_2CO_3$ and $NH_4H_2PO_4$ (boxes 30, 32 and 34) and to mix and grind the mixture in acetone (box 36). In order to achieve a sufficient electric conductivity of the material on activation carbon or a carbon-containing compound has to be added, either at this point (box 38) or at a later step in the process chain, box 48.

Thereafter the vaporization of the acetone is effected (box 40) which is followed by calcination in an $N_2$ flow (for 10 h, T = 593 K) as indicated in box 42. The product of this process then has to be ground again, as indicated at box 44, prior to a sintering step (box 46) in an $N_2$ flow (this time for 24h at a temperature $673 < T < 1073$ K).

If the activation with carbon was not done at the beginning, box 36, the product will not have sufficient electric conductivity and needs to be activated by additional carbon or carbon-containing compounds, box 48. Then the product is ground again (box 52) and subsequently sintered again (box 54) in an $N_2$ flow to obtain the $LiFePO_4$ material (box 56) which has then to be finally processed into the cathode of a lithium ion battery (box 58).

The lithium enrichment leads with Arrojadite material to an improvement of the electrical conductivity by six orders of magnitude from $\sigma \approx 3 \cdot 10^{-10}$ S/cm to $\sigma \approx 4 \cdot 10\text{-}4$ S/cm. The thermal and structural properties are not substantially changed.

In comparison to this the material-typical properties of $LiFePO_4$ such as for example the chemical composition and the structural layout are strongly dependent on the manufacturing process and ultimately lead to $LiFePO_4$ materials with different properties.

The lithium enrichment of Arrojadite in the standard process takes place with lithium perchlorate. By isotope marking using lithium-6, whose natural occurrence in the earths crust is 7.5 %, it was possible to obtain a direct proof of the successful lithium enrichment in Arrojadite material by means of Li-MAS-NMR solid state spectroscopy.

The changing of individual method parameters within a process stage leads to directly understandable changes in the intermediate product that arises. Thus, for example, the extraction time (stirring time) of the educt in the EDTA solution during the first process step affects its grain size, with the grain size reducing with increasing stirring duration. In the second process step there is likewise a simple and direct linking of the method parameters with the manufactured product. Thus the degree of lithium enrichment is dependent on whether a salt melt or an aqueous suspension of lithium perchlorate and Arrojadite is used for the manufacture of the lithium-enriched material. The highest enrichment was obtained using a suspension of Arrojadite powder and $LiClO_4$.

In comparison to lithium-enriched Arrojadite material no simple linkage exists with $LiFePO_4$ between method parameters and manufacturing process and the characteristics of the respectively manufactured product.

The low electrical conductivity of the undoped carbon-free $LiFePO_4$ material has a negative effect on its use as a cathode material above all on the maximum exploitable capacity and the long term stability of such a lithium ion battery.

Various proposals for solving this problem by "activation" of a high ohmic intermediate product in order to

manufacture an electrically (highly) conductive cathode material have been published in recent years. In addition to the chemical modification of $LiFePO_4$ material by doping of the Fe lattice sites and the Li lattice sites, as well as the reaction with carbon (variation of the carbon content), proposals such as the optimization of the solid state reaction (for example the sinter temperature, mechanochemical activation) and the investigation of novel synthesis routes (for example hydrothermal processes and sol gel processes) have been at the centre of interest.

The activation by carbon-containing compounds or elementary carbon can take place at two points during the manufacturing process, during synthesis of $LiFePO_4$ or after conclusion in further process steps (Fig. 3C). In dependence on the time of the activation partly differing material properties and side products form. The influence of the side products necessarily formed in dependence on the synthesis route (for example iron phosphide, lithium phosphate and $Fe^{III}$ normal oxide), on the one hand, and the effects of the time point of the addition of carbon or carbon compounds into manufacturing process (activation), on the other hand, have effects on the electrical properties of the $LiFePO_4$ material and is the subject of numerous discussions in technical literature. These interactions, which have hitherto not been comprehensively researched and documented, between the choice of the synthesis route, the educts that are used and the influence of the carbon material on the properties of the product have wide ranging consequences. No clear association between for example the particle/crystallite size and also the total (in situ) carbon content of the powder, on the one hand, and the capacity of the lithium ion batteries respectively manufactured from them, on the other hand, could be derived from six different commercially manufactured carbon-containing $LiFePO_4$ powders of different manufacturers.

The thermal stability of the two materials Arrojadite and $LiFePO_4$ is fundamentally different when used in different reactive gas atmosphere (oxidizing, reducing and inert). It is illustrated in Figs. 4A and 4B for heating in air and in Figs. 5A and 5B for heating in nitrogen.

The structure of the Arrojadite is maintained both during heating up to a temperature of $T \leq 820K$ and also during subsequent cooling down to room temperature. This circumstance applies both for oxidizing air and also for an inert gas atmosphere of the nitrogen and has been confirmed by independent experiments using in situ high temperature powder diffraction with synchrotron and X-ray radiation (Figs. 4A and 5A). The thermal expansion of the material Arrojadite in the temperature range $293K \leq T \leq 733K$ in the direction of the three crystallographic axes is very small with values for the thermal expansion coefficient $\alpha^a \approx \alpha^b \approx \alpha^c \approx 1 \cdot 10^{-5} \ \frac{1}{K}$. The increase of the volume of the unit cell in this temperature range amounts to only $\Delta V \approx 0.11$ %.

In comparison to this the material $LiFePO_4$ shows a different thermal behaviour. During heating of $LiFePO_4$ in air in the temperature interval $293\ K \leq T \leq 823K$ the material irreversibly decomposes, by the increasing oxidation of the divalent iron contained therein, into a multi-phase system. At T = 823K a mixture of amongst other things $Li_3Fe_2^{III}(PO_4)_3$, $Fe_2^{III}O_3$ and a small proportion of the educt $LiFe^{II}PO_4$ is present. This multi-phase mixture is preserved with a luminous bright red colour after cooling down to room temperature (Fig. 4B).

After the first charging and discharging cycle of a lithium ion battery of $LiFePO_4$ a mixture of $LiFePO_4$ and $FePO_4$ is present. During heating (temperature interval $293K \leq T \leq 623K$) of a mixture of this kind of $Li_{0.68}FePO_4$ and $FePO_4$ in a nitrogen atmosphere (Fig. 5B), heating to above $T \geq 473K$ leads to the formation of a $Li_xFePO_4$ phase. During heating to temperatures above $T \geq 773K$ a decomposition of the $Li_xFePO_4$ phase into a plurality of phases takes place. During the cooling process from $623K \geq T \geq 293K$ a mixture of a plurality of phases is formed when the temperature goes below 413K. These phases have different chemical compositions ($LiFePO_4$ $FePO_4$, $Li_{y1}FePO_4$ and $Li_{y2}FePO_4$ with $y1 \neq y2$ and $0 < y1,y2 < 1$) and also slightly differing lattice parameters.

The results of the thermocalorimetric and gravimetric measurements of Arrojadite and $LiFePO_4$ samples are significantly different. The structural changes on heating Arrojadite samples in different gas atmospheres (air and nitrogen atmospheres) observed in independent experiments using in-situ high temperature powder diffraction with synchrotron and X-ray radiation agree with the results of the differential thermal analysis (DTA). In air the exothermic principle maximum of the DTA curve is in a temperature interval $820K \leq K \leq 890K$ which is caused by the decomposition of the Arrojadite structure as recorded by means of in situ high temperature powder diffractometry. The powder patterns of the resulting products from the DTA measurements correspond to those obtained by experiments using in situ high temperature powder diffraction with synchrotron or X-ray radiation in the same gas atmosphere. In a reducing forming gas atmosphere a product arises whose lattice constants can be refined from the powder pattern with those of Arrojadite.

In contrast to the simple phase behaviour of the Arrojadite, the thermal behaviour of $LiFePO_4$ is substantially more complex and is also a subject of current discussion. The observed structural changes during heating and cooling of a mixture of $Li_{0.68}FePO_4$ and $FePO_4$ in nitrogen atmosphere can be correlated with the differential thermocalometric experiments carried out in an argon atmosphere: during heating an endothermic maximum (T = 500K) and during cooling an exothermic maximum (T = 410K) occur.

The central difference between the materials Arrojadite and $LiFePO_4$ is the structural framework. That of $LiFePO_4$ is shown in Fig. 6 and can be compared with that of Arrojadite as shown, for example, in Fig. 2C. From this comparison significant distinctions result both with respect to the mechanical properties, the thermal stability, the electrical conductivity

and the long term stability of lithium ion batteries manufactured from the respective materials and also with respect to the possibility of optimizing the respective material by chemical modification.

Arrojadite has a space frame structure with channels 10 in Fig. 2D extending along the crystallographic b-axis. This places the Arrojadite structure in the area of the zeolites and zeolitex have not hitherto been considered useful for a lithium ion battery for many reasons. The structure of the zeolites is described in the book by Tomlinson A. A. G. Modern zeolites. Structure and function in detergents and petrochemicals. Trans Tech Publications Ltd., Uetikon-Zürich, 1998, ISBN 0-87849-794-0

The occupation of the lattice sites in the channels of the Arrojadite structure forms a basis for the chemical modification of the Arrojadite structure and the use as electro-active cathode material for, for example, a lithium ion battery. The extraction experiments with Arrojadite powder from the "Nickel Plate" mine using an aqueous EDTA solution confirm by experimental routes the occupation of the atomic positions within the channels. A mixed occupation of these atomic positions by the following cations is present: Fe > Na > Mn > Ca > Al > Mg > Zn. The lithium cations in the lithium enriched Arrojadite material move along the corresponding channels 10 opened by the extraction process.

The structure of the Arrojadite is, in contrast to most of the zeolites, despite increasing extraction of the cations from the channels 10 with aqueous EDTA solution so stable that in a time period between 2 and 90 hours extraction duration no changes of the powder pattern relative to the educt can be found in the recorded powder pattern of the respective product. After 189 hours extraction duration nanocrystalline powders have arisen as shown by the powder patterns of Fig. 7. The powder pattern shows reflexes with a full width at half maximum (FWHM) which can be attributed to mechanical reduction during the stirring process. Arrojadite nano-powders can be manufactured also by heating in an oxygen atmosphere under elevated pressure. The characterization of the electrical properties of the material Arrojadite in the form of nano-powders requires further investigation.

In comparison to the Arrojadite material the structure of $LiFePO_4$ material differs significantly: significantly shorter lattice parameters and smaller unit cell.

In the orthorhombic olivine structure of the $LiFePO_4$ material the oxygen anions form an approximately hexagonal closest packing with the layer sequence ABAB. The intermediate spaces which result are occupied by the $Li^+$, $Fe^{2+}$ and $P^{5+}$ cations as shown in Fig. 6. As a result of the arrangement of the Li lattice sites within the orthorhombic olivine structure two different conductive paths for Li cations are possible per unit cell which are perpendicular to each other. In contrast up to eight different conductive paths are present for cations per unit cell of the Arrojadite structure which are all in one direction and therefore their individual conductivities are summed up.

The comparison of the electrical conductivity of the material Arrojadite with that of the material $LiFePO_4$ results in significant differences. These originate from the different structural properties of the respective material.

The electrical conductivity of pressed powder pellets of Arrojadite shows a pronounced anisotropic behaviour and, in contrast to pellets of $LiFePO_4$, can be influenced by the choice of the pressing process by the formation of different orientations of the powder particles within the pellet. As a result, without chemical modification of the Arrojadite powder, an electrical conductivity higher by two orders of magnitude can be achieved in comparison to undoped carbon-free $LiFePO_4$ powder. Texture analyses show that the conductivity paths in the Arrojadite coincide with the channels 10 in the crystal structure. The degree of the lithium enrichment contributes to a further increase of the conductivity of the material Arrojadite, which shows that the conductivity is predominantly based on a lithium ion conduction.

In contrast, the lithium content of the material $LiFePO_4$ does not influence its electrical conductivity. With $LiFePO_4$ a significant increase of the conductivity can be achieved by the manufacture of differently doped powders with mixed occupations at the Li lattice sites or by mixed occupation of the Fe lattice sites. The electrical conductivity and the exploitable maximum capacity can be increased through the choice of the corresponding synthesis route using partly organic educts, sinter temperatures which are as low as possible or by the manufacture and use of nano-powders. The influence of the synthesis route on the resulting side products, such as for example iron phosphide, lithium phosphate and $Fe^{III}$oxide and the associated changes of the properties of the material $LiFePO_4$ are currently also the subject of discussion.

The direct comparison of the two lithium ion batteries of $LiFePO_4$ and of Arrojadite illustrates the significant distinctions with respect to the processes which are taking place during respective charging and discharging cycles and the effects associated therewith on the long term stability and the maximum exploitation period for a respective battery.

Both the charging cycle and the discharging cycle of a lithium ion battery of $LiFePO_4$ is associated with a phase transition of the 1st order $LiFePO_4$ to $FePO_4$. This migrates as a zone through each material particle. After the first charge and discharge cycle an initially small proportion of $FePO_4$ remains which cannot be converted again into $LiFePO_4$. The concentration of the $FePO_4$ increases with increasing number of the charge and discharge cycles. The phase transition $LiFePO_4$ to $FePO_4$ is also associated with structural changes. For example the length of the lattice parameters and change in size of the unit cell (Fig. 8). The opposing length changes of the lattice parameters $\Delta c \approx +2$ % and $\Delta b = -5.2$ % and $\Delta a = -3.7$ %, in combination with the volume change of $\Delta V \approx -7$ % leads mechanically to stresses and the increasing formation of dislocations. Both determine as limiting factors the maximum possible number of charge and discharge cycles and the exploitable capacity of a lithium ion battery incorporating the $LiFePO_4$ material as a cathode material.

In addition the maximum achievable number of cycles without a capacity loss of the order of magnitude of 10 % or more depends on the environmental temperature, i.e. on the temperature of use of this battery type, when $T \geq 25°$ C.

In comparison to the lithium ion battery of $LiFePO_4$ in a lithium ion battery of Arrojadite only very small changes of the lattice parameters of the material occur after several thousand charge and discharge cycles. The recorded powder pattern of such a lithium ion battery show with an increasing number of charge and discharge cycles only extremely small changes in the measured powder pattern.

The charge and discharge process of a lithium ion battery on the basis of the material Arrojadite proceeds in accordance with another mechanism than is the case with the material $LiFePO_4$. The zeolites serve as an example for the manner of operation of a lithium ion battery of Arrojadite material. The zeolites function as an ion exchange medium due to hollow cavities in the form of "cages" and channels within their scaffold structure. These hollow cavities can be reversibly occupied with different cations.

In the manufacture of lithium enriched Arrojadite material a part or all of the cations which are located at lattice sites within the channels 10 of the Arrojadite structure are extracted and replaced by Li cations. In a directly comparable manner to the ion exchange function of the zeolites Li cations occupy with the Arrojadite material the lattice sites within the channels reversibly and in dependence on the state of charge.

In the structural model of the naturally occurring Arrojadite from Nickel Plate the atom oppositions within the channels are occupied by monovalent (e.g. $K^+$) and multivalent ($Cr^{3+}$, $Fe^{2+}$ and $Fe^{3+}$) cations. The exchange of the pristine monovalent and multivalent cations results in a maximum enrichable lithium content of approximately 1.8 % by weight.

The lithium enrichment by an aqueous suspension of Arrojadite powder and lithium perchlorate achieves with 1.72 % by weight approximately 96 % on the theoretical value. The remaining inactive charge is due to Na cations of the Na-EDTA solution of the 1st process step that are present.

Using a customary laboratory powder diffractometer no structural changes of the Arrojadite can be measured in dependence on the state of charge of lithium ion battery. The Arrojadite material remains a single phase independently of the state of charge and there is no phase transition with the corresponding structural changes as with $LiFePO_4$ material.

The capacity of the lithium ion battery of Arrojadite material is almost independent of the number of charge and discharge cycles. This high cycle stability of the material Arrojadite favours the use on a technical scale. The achieved capacity for experimental lithium ion batteries of Arrojadite built to date is still below that of comparable $LiFePO_4$ batteries on initial charging but it must be borne in mind that the $LiFePO_4$ batteries have undergone a long period of over ten years optimization. Given further development it should be possible to significantly improve the capacity of batteries using Arrojadite cathodes, so that they are highly competitive with $LiFePO_4$ batteries on all counts.

The lithium ion battery of Arrojadite material is completely compatible with the modern technology of the lithium ion battery (3.5 V technology) and has, in contrast to cathode materials isostructural to olivine ($LiCoPO_4$ and $LiNiPO_4$) the potential for environmentally friendly, cobalt-free and nickel-free, high voltage battery technology (U = 5 V).

Examples of uses of the arrojadite material of the invention will now be given in the following:

Example 1: use as a cathode material

Referring now to Fig. 10 there is shown a diagram showing the basic configuration of a Li-ion battery 100 of a kind used for research. It typically comprises an anode (in this case a lithium anode) 110, a cathode 112, in this case of the material defined in claim 1 of the present application and more specifically with the specific composition set out above for a naturally occurring Arrojadite from the Nickel Plate mine, as described in connection with Figs. 2A to 2E at the start of the specific description of this application. The cathode material comprises the Arrojadite compound described immediately above which has been ground to a powder with an average particle size of 1μm. This size is not critical and average particle sizes in the range from 500nm to 200μm are also readily possible as are particle sizes below and above this range. The particles used typically have a Gaussian size distribution or a narrower distribution.

The powder is mixed with a binder, in this case polyvinyl difluoride (PVDF), at a weight ratio of nine parts arrojadite material to one part of PVDF and is then pasted onto an electrically conductive foil, in this example a copper foil of say 99.6% purity available from Goodfellow. Neither the binder material, nor the weight ratio nor the material of the conductive foil is critical.

The lithium electrode, i.e. the anode, 110 is, for example, a pure lithium foil available from Aldrich.

An electrolyte 114 is disposed in the space between the anode 110 and the cathode 112. The electrolyte can be any known electrolyte for a lithium ion battery and in this case is an electrolyte in the form of a solution of 1M $LiPF_6$ in ethylene carbonate (EC)/dimethyl carbonate (DMC) in the ratio 1:1 by volume obtained from Ube industries Ltd., which is accommodated in a glass fibre separator such as GF/D from Whatman.

This is only one example of a whole range of possible electrolytes. Present throughout the volume of the electrolyte 115 are also lithium ions 116 shown as circles with a cross in the middle, and anions 118 shown as larger circles with a single line through the middle. When an external circuit is connected to the battery, current flows in the

direction opposite to the arrow 120 during discharging and in the direction of the arrow during charging.

The cell of Figs. 10 is accommodated in a casing (not shown).

Example 2: use as a cathode material

This example is the same as Example 1 but uses a carbon material as an anode in place of lithium. The anode material can be in the form of a solid piece of graphite or powdered carbon in a binder. The carbon powder has an average particle size of 2μm and is mixed with a binder in the form of PVDF at a weight ratio of nine parts of carbon material to one of binder and is pasted on an electrically conductive foil, in this case an aluminium foil. Again neither the size of the particles, nor the material of the bindee, nor the type of foil are critical. Thus a copper foil of 99.6% purity from Goodfellow could again be used here instead of the aluminium foil.

Examples 3 and 4

Examples 3 and 4 are generally the same as examples 1 and 2 except that an electrolyte is used consisting of a polymer material with lithiumn ion salts in dissolved or particulate form such as $LiPF_6$ rather than $LiPF_6$ in EC/DMC as described for Examples 1 and 2.

Example 5: Use of Arrojadite material as an anode

Alternatively the anode 110 can be made of the material defined in claim 1 of the present application and more specifically with the specific composition set out in the above description, more specifically with the specific composition set out above for a naturally occurring Arrojadite from the Nickel Plate mine, as described in connection with Figs. 2A to 2E at the start of the specific description of this application. In this case the cathode 112 could for example consist of the lithium electrode, for example a pure lithum foil available for Aldrich. The electrolyte 114 can be any known electrolyte for a lithium ion battery as described above in examples 1 - 4. The electrical connections to the power supply, in case of example 5, is the reverse of that used in examples 1 - 4.

Reference should now be made to Fig. 11 which shows an alternative layout for a battery where the electrodes 110 and 112 are coiled in a spiral 113 with the electrolyte 115 disposed between them and the structure being encapsulated in a housing 117. Terminals connected to the anode 110 and the cathode 112 are provided at opposite ends of the housing (terminals not shown) in manner known per se. The same layout as shown in and described with reference to Fig. 11 can be used for a supercapacitor.

The materials can be the same as those described with reference to Fig. 10.

Examples 6 to 9.

These examples are the same as examples 1 to 4 given above except that the electrolyte used is one used and claimed in European patent 1505680B1. One example for the preparation of non-aqueous, anhydrous electrolytes given in that European patent is as follows:

> The composite electrolyte was prepared in the form of a mixture of fine particles of ceramic oxides ($SiO_2$, $TriO_2$ and $Al_2O_3$, radius : r ~ 0.15 μm) with a non-aqueous solution of 0.1M $LiClO_4$ in Methanol (MeOH). Although MeOH was selected for this test it is not a preferred solvent for lithium batteries. However, because the method is effective using MeOH it appears certain that it will work better in the preferred solvents, i.e. in a non-aqueous, anhydrous solvent selected from the group comprising DME/EC, DEC/EC, DMC/EC, PC, carbonate based solvents related to any of the foregoing, DMSO, organic sulphur compounds, THF, AN and mixtures of any of the foregoing, and indeed practical tests have confirmed this.

In this example the oxides were dried in vacuum at 250°C for 24 hours prior to composite preparation and all samples were prepared under an Argon atmosphere in a glove box (closed container with a window and gloves for handling the materials involved). Room temperature conductivity was measured for various volume fractions using impedance spectroscopy with the samples placed between two parallel stainless steel electrodes of a home-built cell (samples loaded under Argon). The impurity effects were excluded by pre-washing the oxides in the liquid solvents. The conductivity was better than $2 \cdot 10^{-3}$ S/cm.

When used in a lithium ion battery an electrolyte of this kind does not require a separator.

Examples 10 to 13:

In another alternative electrolyte a non-aqueous electrolyte is used including

at least one ionically conducting salt,

- at least one non-aqueous, anhydrous solvent for the ionically conductive salt, and

at least one oxide in a discrete particulate form having particles sizes in the range from 5 nm to 50 nm and comprising an oxide selected from the group of oxides exhibiting acidic properties, $SiO_2$, $TiO_2$, oxides exhibiting basic properties, $Al_2O_3$, MgO, mesoporous oxides, clays and any mixtures thereof, said oxide being present in the electrolyte in an amount by volume in the range from 0.005 to 0.2 %, said oxide being selected such that it is not soluble in said solvent and such that it is water-free.

The solvent is a compound according to the general formula (I):

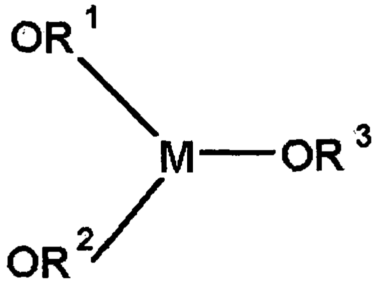

(I)

or a mixture of compounds of this kind
wherein:

M is selected from the group consisting of boron and aluminum, and
$R^1$, $R^2$ and $R^3$, independently from each other, are selected from the group consisting of alkyl, alkenyl, alkinyl, aryl, aralkyl, alkoxy, alkenyloxy, cycloalkyl, cycloalkenyl, cycloalkoxy, cycloalkenyloxy, aroxy, aralkoxy, alkylaroxy, cyanoalkyl, cyanoalkenyl, cyanoalkoxy, hydroxyalkyl, hydroxyalkenyl, hydroxylalkinyl, hydroxyaryl, hydroxyaralkyl, hydroxyalkoxy, hydroxyalkenyloxy, hydroxycycloalkyl, hydroxycycloalkenyl, hydroxycycloalkoxy, hydroxycycloalkenyloxy, hydroxyaroxy, hydroxyaralkoxy, hydroxyalkylaroxy, hydroxycyanoalkyl, hydroxycyanoalkenyl, hydroxycyanoalkoxy, halogenated alkyl, halogenated alkenyl, halogenated alkinyl, halogenated aryl, halogenated aralkyl, halogenated alkoxy, halogenated alkenyloxy, halogenated cycloalkyl, halogenated cycloalkenyl, halogenated cycloalkoxy, halogenated cycloalkenyloxy, halogenated aroxy, halogenated aralkoxy, halogenated alkylaroxy, halogenated cyanoalkyl, halogenated cyanoalkenyl, halogenated cyanoalkoxy, halogenated hydroxyalkyl, halogenated hydroxyalkenyl, halogenated hydroxylalkinyl, halogenated hydroxyaryl, halogenated hydroxyaralkyl, halogenated hydroxyalkoxy, halogenated hydroxyalkenyloxy, halogenated hydroxycycloalkyl, halogenated hydroxycycloalkenyl, halogenated hydroxycycloalkoxy, halogenated hydroxycycloalkenyloxy, halogenated hydroxyaroxy, halogenated hydroxyaralkoxy, halogenated hydroxyalkylaroxy, halogenated hydroxycyanoalkyl, halogenated hydroxycyanoalkenyl, halogenated hydroxycyanoalkoxy residues, ether group containing residues, thiol group containing residues, silicon containing residues, amide group containing residues and ester group containing residues.

More specifically the solvent used in the Examples 10 to 13 is a solvent according to the general formula (I) containing a lithium salt.

The at least one ionically conducting salt is a lithium salt and may, for example, be any salt selected from the group consisting of LiCl, LiF, $LiSO_3CF_3$, $LiClO_4$, $LiN(SO_2CF_3)_2$, lithium-bis[oxalato]borate (LiBOB), $LiPF_6$ and $LiN(SO_2CF_2CF_3)_2$.

The ionically conducting salt is dissolved in the solvent in a concentration of about 1 M and the specific oxide used in thes examples 10 to 13 is 0.005% by volume. The average particle size of the at least one oxide in a particulate

form is typically 20nm. The resulting electrolyte has a lithium transference number of 0.65 but a value anywhere between 0.5 and 0.75 is acceptable.

Other conventional electrolytes which are well known per se can also be used. However, such other electrolytes generally require a suitable separator and these are well known per se.

Example 14: Use as a separator

The material of the present invention is also particularly suited for use as a separator, for example in a molten salt cell such as the Zebra cell. This is a battery with a positive electrode of nickel in the discharged state and nickel chloride in the charged state. The negative electrode is molten sodium. The electrolyte is molten chloroaluminate ($NaAlCl_4$). In this case a separator based on the material claimed here is used instead of the traditional sodium conducting ß-alumina ceramic separator and the open elongate channels in the separator of the present teaching serve for the transport of sodium ions during charging and discharging of the battery.

For a more complete description of a Zebra battery reference can be made to the paper by J. L. Sudworth entitled "Zebra batteries" in the Journal of Power Sources, 51 (1994) 105-114, the content of which is incorporated herein by reference.

The precise crystallographical structures for the Arrojadite minerals from the Nickel Plate and Hagendorf mines will now be recited in CIF format.

Crystallographic structure of Arrojadite from the Hagendorf mine in CIF-Format

```
data_publ
_publ_contact_author_name
'Christoph Kallfa\&s'
_publ_contact_author_address
;
;
_publ_contact_author_email
XXX
loop_
_publ_author_name
'Christoph Kallfa\&s'
_publ_author_address
'Stuttgart'

_publ_section_title
;Crystal structure, chemical composition and
thermal behaviour of arrojadite
;
_publ_section_abstract
;
The crystal structure of arrojadite was reexamined and the disorder phe-
nomena were described applying modern X-ray diffraction and refinement
methodson samples from Hagendorf (Germany).The chemical composition of
different arrojadite samples was determined using SEM-EDX, ICP-OES and
ICP-MS, as a result of which a new Sr-rich member  of the dickinsonite-
arrojadite series was identified. It crystallizes in the monoclinic sys-
tem (space group C2/c) with the lattice parametersa = 1663.1(1) pm, b =
1007.4(1) pm, c = 2487.7(1) pm,\b = 105.13(1)\%.  The thermal decomposi-
tion processes under various conditions have been studied by in-situ syn-
chrotron powder diffraction experiments, and by simultaneous thermo ana-
lytical and mass-spectrometrical measurements.;

_publ_section_references
; IPDS2 (X-AREA Version 1.35, Stoe et Cie. 2006),
  PLATON (Spek 2006),
  SHELXL97/SHELXS97 (Sheldrick, 1997)
  JANA2000 (Petricek, Dusek, 2000),
  ENCIFER (Version 1.2, CCDC, 2005),
  OPENDX (Version 4.2.0, odendx.org, 2000),
  DRAWXTL (Version 5.1, Finger, Kroeker, Toby, 2005)
;
_audit_creation_method             JANA2000,ENCIFER
_chemical_name_systematic
'Sodium Strontium Aluminium Chromium Iron Manganese Phosphate Hydrate'
_chemical_name_common              'Arrojadite'
_chemical_formula_moiety           'Al Cr Fe7.25 H2 Mn6 Na3 O50 P12 Sr'
_chemical_formula_sum              'Al Cr Fe7.25 H2 Mn6 Na3 O50 P12 Sr'
_chemical_formula_weight           2143.8
_chemical_compound_source          'Hagendorf (Germany)'
_symmetry_cell_setting             monoclinic
_symmetry_space_group_name_H-M     'C 2/c'
_symmetry_space_group_name_Hall       '-C 2yc'
```

```
_symmetry_int_tables_number      15

loop_
_symmetry_equiv_pos_as_xyz
x,y,z
-x,y,1/2-z
-x,-y,-z
x,-y,1/2+z
1/2+x,1/2+y,z
1/2-x,1/2+y,1/2-z
1/2-x,1/2-y,-z
1/2+x,1/2-y,1/2+z

_cell_length_a                    16.6317(8)
_cell_length_b                    10.0736(6)
_cell_length_c                    24.8765(11)
_cell_angle_alpha                 90
_cell_angle_beta                  105.130(3)
_cell_angle_gamma                 90
_cell_volume                      4023.4(4)
_cell_formula_units_Z             4
_cell_measurement_reflns_used     27679
_cell_measurement_theta_min       3.4
_cell_measurement_theta_max       58.5
_cell_measurement_temperature     293(2)
_exptl_crystal_density_diffrn     3.524
_exptl_crystal_F_000              4106
_exptl_absorpt_coefficient_mu     6.549
_exptl_crystal_description        'xenomorphic fragment'
_exptl_crystal_size_max           0.32
_exptl_crystal_size_mid           0.23
_exptl_crystal_size_min           0.15
_exptl_crystal_colour             'pale green'
_exptl_absorpt_correction_type    multi-scan
_exptl_absorpt_process_details    'SHXABS in PLATON'
_exptl_absorpt_correction_T_min   0.3447
_exptl_absorpt_correction_T_max   0.7663
_diffrn_ambient_temperature       293(2)
_diffrn_radiation_probe           x-ray
_diffrn_radiation_type            'Mo K\a'
_diffrn_radiation_wavelength      0.71069
_diffrn_source                    'fine-focus sealed tube'
_diffrn_radiation_monochromator   graphite
_diffrn_measurement_device_type   'STOE IPDS2'
_diffrn_measurement_method        '\w scan'
_diffrn_reflns_number             19061
_diffrn_reflns_theta_min          1.70
_diffrn_reflns_theta_max          29.24
_diffrn_reflns_theta_full         29.24
_diffrn_measured_fraction_theta_max 0.981
_diffrn_measured_fraction_theta_full 0.981
_diffrn_reflns_av_R_equivalents   0.0220
_diffrn_reflns_av_sigmaI/netI     0.0172
_diffrn_reflns_limit_h_min        -22
_diffrn_reflns_limit_h_max        22
```

```
_diffrn_reflns_limit_k_min       -13
_diffrn_reflns_limit_k_max       13
_diffrn_reflns_limit_l_min       -34
_diffrn_reflns_limit_l_max       31
_refine_special_details
;
Refinement of F^2^ against ALL reflections. The weighted R-factor wR and
goodness of fit S are based on F^2^, conventional R-factors R are basedon
F, with F set to zero for negative F^2^. The threshold expression of F^2^
> 2 sigma(F^2^) is used only for calculating R-factors(gt) etc. and is
not relevant to the choice of reflections for refinement.  R-factors
based on F^2^ are statistically about twice as large as those based on F,
and R-factors based on ALL data will be even larger. The anisotropic dis-
placement of the atoms Na(2) and Fe(7) were refined with anharmonic 3rd
order tensors. Highest residual electron density peak is in direct vicin-
ity of Fe(7).Structural model includes displacement disorder, mixed and
fractional occupation of several sites.;

_reflns_number_total             5371
_reflns_number_gt                4838
_reflns_threshold_expression     I>2\s(I)
_refine_ls_structure_factor_coef Fsqd
_refine_ls_R_factor_gt           0.0378
_refine_ls_wR_factor_gt          0.0447
_refine_ls_R_factor_all          0.0498
_refine_ls_wR_factor_ref         0.0872
_refine_ls_goodness_of_fit_ref   1.044
_refine_ls_number_reflns         14879
_refine_ls_number_parameters     413
_refine_ls_number_restraints     4
_refine_ls_number_constraints    0
_refine_ls_weighting_scheme      sigma
_refine_ls_weighting_details     w=1/\s^2^(I)
_refine_ls_hydrogen_treatment    undef
_refine_ls_shift/su_max          0.0009
_refine_ls_shift/su_mean         0.0000
_refine_diff_density_max         5.12
_refine_diff_density_min         -1.54
_refine_diff_density_rms         0.196
_refine_ls_extinction_method
'B-C type 1 Gaussian isotropic (Becker & Coppens, 1974)'
_refine_ls_extinction_coef       0.003529

loop_
_atom_type_symbol
_atom_type_scat_dispersion_real
_atom_type_scat_dispersion_imag
_atom_type_scat_source
_atom_type_scat_Cromer_Mann_a1
_atom_type_scat_Cromer_Mann_b1
_atom_type_scat_Cromer_Mann_a2
_atom_type_scat_Cromer_Mann_b2
_atom_type_scat_Cromer_Mann_a3
_atom_type_scat_Cromer_Mann_b3
_atom_type_scat_Cromer_Mann_a4
```

```
_atom_type_scat_Cromer_Mann_b4
_atom_type_scat_Cromer_Mann_c
O 0.011 0.006 'International Tables Vol C Tables  4.2.6.8 and 6.1.1.4'
3.0485 13.2771 2.2868 5.7011 1.5463 0.3239 0.867 32.908901 0.2508
Na 0.036 0.025 'International Tables Vol C Tables  4.2.6.8 and 6.1.1.4'
4.7626 3.285 3.1736 8.8422 1.2674 0.3136 1.1128 129.423996 0.676
Al 0.064 0.051 'International Tables Vol C Tables  4.2.6.8 and 6.1.1.4'
6.4202 3.0387 1.9002 0.7426 1.5936 31.547199 1.9646 85.0886 1.1151
P 0.102 0.094 'International Tables Vol C Tables  4.2.6.8 and 6.1.1.4'
6.4345 1.9067 4.1791 27.157 1.78 0.526 1.4908 68.164497 1.1149
K 0.201 0.249 'International Tables Vol C Tables  4.2.6.8 and 6.1.1.4'
8.2186 12.7949 7.4398 0.7748 1.0519 213.186996 0.8659 41.684101 1.4228
Ca 0.226 0.306 'International Tables Vol C Tables  4.2.6.8 and 6.1.1.4'
8.6266 10.4421 7.3873 0.6599 1.5899 85.748398 1.0211 178.436996 1.3751
Mn 0.337 0.728 'International Tables Vol C Tables  4.2.6.8 and 6.1.1.4'
11.2819 5.3409 7.3573 0.3432 3.0193 17.867399 2.2441 83.754303 1.0896
Fe 0.346 0.844 'International Tables Vol C Tables  4.2.6.8 and 6.1.1.4'
11.7695 4.7611 7.3573 0.3072 3.5222 15.3535 2.3045 76.880501 1.0369
Mg 0.049 0.036 'International Tables Vol C Tables  4.2.6.8 and 6.1.1.4'
5.4204 2.8275 2.1735 79.261101 1.2269 0.3808 2.3073 7.1937 0.8584
Sr -1.531 3.250 'International Tables Vol C Tables  4.2.6.8 and 6.1.1.4'
17.566299 1.5564 9.8184 14.0988 5.422 0.1664 2.6694 132.376007 2.5064
Cr 0.321 0.624 'International Tables Vol C Tables  4.2.6.8 and 6.1.1.4'
10.6406 6.1038 7.3537 0.392 3.324 20.2626 1.4922 98.739899 1.1832

_computing_data_collection        'IPDS2'
_computing_cell_refinement        'IPDS2'
_computing_data_reduction         'IPDS2'
_computing_structure_refinement   'JANA2000'
_computing_molecular_graphics     'DRAWXTL,OPENDX'
_computing_publication_material   'JANA2000,ENCIFER'

loop_
_atom_site_label
_atom_site_type_symbol
_atom_site_adp_type
_atom_site_fract_x
_atom_site_fract_y
_atom_site_fract_z
_atom_site_U_iso_or_equiv
_atom_site_symmetry_multiplicity
_atom_site_occupancy
_atom_site_calc_flag
_atom_site_refinement_flags
_atom_site_disorder_assembly
_atom_site_disorder_group
Na1 Na Uani 0 0 0 0.0270(5) 4 1 d . . .
Na2 Na Uani 0.1382(2) 0.4826(3) 0.1186(1) 0.0516(6) 8 1 d . . .
Sr1 Sr Uani 0 0.50115(5) 0.25 0.0305(1) 4 1 d . . .
Mn1 Mn Uani 0.20589(2) 0.30006(4) 0.35184(2) 0.0101(1) 8 1 d . . .
Mn2 Mn Uani 0.28095(2) 0.20899(4) 0.15755(2) 0.0108(1) 8 1 d . . .
Mn3 Mn Uani 0.28725(2) 0.49137(4) 0.23317(2) 0.0115(1) 8 1 d . . .
Fe4 Fe Uani 0.10404(2) 0.01380(4) 0.64052(2) 0.0107(1) 8 1 d . . .
Fe5 Fe Uani 0.03462(2) 0.25693(4) 0.39971(2) 0.0102(1) 8 1 d . . .
Fe6 Fe Uani 0.47873(2) 0.24893(4) 0.09742(2) 0.0119(1) 8 1 d . . .
```

```
Fe7 Fe Uani 0.22009(9) 0.0973(2) 0.47426(8) 0.0403(4) 8 0.625(2) d . .
Al1 Al Uani 0 0.5 0 0.0056(3) 4 1 d . . .
Cr1 Cr Uani 0.26961(5) 0.28348(9) 0.01665(5) 0.0236(3) 8 0.5 d . . .
P1 P Uani 0.12513(4) 0.25097(6) 0.53813(3) 0.0071(2) 8 1 d . . .
P2 P Uani 0.12604(4) 0.27936(6) 0.21340(3) 0.0075(2) 8 1 d . . .
P3 P Uani 0.35867(4) 0.19936(6) 0.29485(3) 0.0104(2) 8 1 d . . .
P4 P Uani 0.10287(4) 0.23396(6) 0.04790(3) 0.0077(2) 8 1 d . . .
P5 P Uani 0.36905(4) 0.03500(5) 0.07586(3) 0.0079(2) 8 1 d . . .
P61 P Uani 0.38197(5) 0.4893(1) 0.13076(4) 0.0081(3) 8 0.677(2) d . . .
P62 P Uani 0.0823(1) 0.0059(2) 0.33579(9) 0.0102(7) 8 0.323(2) d . . .
O11 O Uani 0.5935(1) 0.1051(2) 0.03567(8) 0.0097(5) 8 1 d . . .
O12 O Uani 0.0839(1) 0.1670(2) 0.57500(9) 0.0129(6) 8 1 d . . .
O13 O Uani 0.2790(1) 0.2485(2) 0.43822(8) 0.0128(5) 8 1 d . . .
O14 O Uani 0.1066(1) 0.1877(2) 0.47988(8) 0.0138(6) 8 1 d . . .
O21 O Uani 0.1320(1) 0.1260(2) 0.21166(9) 0.0173(6) 8 1 d . . .
O22 O Uani 0.1264(1) 0.3321(2) 0.27106(8) 0.0126(6) 8 1 d . . .
O23 O Uani 0.2016(1) 0.3370(2) 0.19524(9) 0.0132(6) 8 1 d . . .
O24 O Uani 0.0453(1) 0.3290(2) 0.17268(9) 0.0138(6) 8 1 d . . .
O31 O Uani 0.2847(1) 0.1483(2) 0.31706(9) 0.0172(6) 8 1 d . . .
O32 O Uani 0.3546(1) 0.3523(2) 0.29380(9) 0.0138(6) 8 1 d . . .
O33 O Uani 0.3512(1) 0.1408(2) 0.23677(9) 0.0248(7) 8 1 d . . .
O34 O Uani 0.4414(1) 0.1508(2) 0.33334(9) 0.0179(6) 8 1 d . . .
O41 O Uani 0.4032(1) 0.3155(2) 0.01104(8) 0.0139(6) 8 1 d . . .
O42 O Uani 0.1936(1) 0.2671(2) 0.07717(8) 0.0147(6) 8 1 d . . .
O43 O Uani 0.0469(1) 0.3581(2) 0.04819(7) 0.0078(5) 8 1 d . . .
O44 O Uani 0.0654(1) 0.1308(2) 0.08046(8) 0.0119(6) 8 1 d . . .
O51 O Uani 0.2893(1) 0.0431(2) 0.02857(8) 0.0213(6) 8 1 d . . .
O52 O Uani 0.3714(1) 0.1553(2) 0.11515(8) 0.0145(6) 8 1 d . . .
O53 O Uani 0.4483(1) 0.0560(2) 0.05491(8) 0.0086(5) 8 1 d . . .
O54 O Uani 0.1231(1) 0.4027(2) 0.39283(9) 0.0156(6) 8 1 d . . .
O61 O Uani 0.4714(1) 0.4381(2) 0.13107(8) 0.0139(6) 8 1 d . . .
O62 O Uani 0.1141(1) 0.1392(2) 0.36282(8) 0.0129(6) 8 1 d . . .
O63 O Uani 0.3506(1) 0.4187(2) 0.1748(1) 0.0222(7) 8 1 d . . .
O614 O Uani 0.3175(2) 0.4566(3) 0.0756(1) 0.0216(9) 8 0.677(2) d . . .
O624 O Uani 0.0164(3) 0.0279(5) 0.2659(3) 0.0216(9) 8 0.323(2) d . . .
O7 O Uani 0.23118(8) -0.0003(2) 0.14090(7) 0.0137(5) 8 1 d . . .

loop_
_atom_site_aniso_label
_atom_site_aniso_type_symbol
_atom_site_aniso_U_11
_atom_site_aniso_U_22
_atom_site_aniso_U_33
_atom_site_aniso_U_12
_atom_site_aniso_U_13
_atom_site_aniso_U_23
Na1 Na 0.0316(8) 0.0151(7) 0.0241(9) -0.0038(8) -0.0109(7) -0.0029(8)
Na2 Na 0.097(1) 0.0157(6) 0.0182(6) -0.0079(8) -0.0279(8) 0.0014(6)
Sr1 Sr 0.0173(2) 0.0233(2) 0.0564(3) 0 0.0196(2) 0
Mn1 Mn 0.0099(2) 0.0119(2) 0.0078(2) 0.0006(1) 0.0013(2) -0.0002(2)
Mn2 Mn 0.0095(2) 0.0139(2) 0.0089(2) 0.0029(1) 0.0023(2) -0.0009(2)
Mn3 Mn 0.0134(2) 0.0090(2) 0.0096(2) -0.0000(2) -0.0014(1) 0.0000(2)
Fe4 Fe 0.0109(1) 0.0100(2) 0.0100(2) 0.0004(1) 0.0007(1) -0.0012(2)
Fe5 Fe 0.0077(2) 0.0127(2) 0.0095(2) 0.0003(1) 0.0010(2) 0.0004(2)
Fe6 Fe 0.0117(2) 0.0108(2) 0.0140(2) -0.0028(1) 0.0046(2) -0.0023(2)
```

```
Fe7 Fe 0.0223(5) 0.0597(8) 0.0465(7) 0.0257(4) 0.0228(4) 0.0403(6)
Al1 Al 0.0063(4) 0.0054(4) 0.0051(5) -0.0010(4) 0.0014(3) -0.0007(4)
Cr1 Cr 0.0213(5) 0.0254(5) 0.0313(6) 0.0120(4) 0.0196(4) 0.0147(4)
P1 P 0.0070(3) 0.0070(3) 0.0074(3) 0.0017(2) 0.0017(2) 0.0014(2)
P2 P 0.0081(3) 0.0071(3) 0.0064(3) -0.0003(2) 0.0004(3) 0.0001(2)
P3 P 0.0129(3) 0.0075(3) 0.0081(3) 0.0023(2) -0.0024(3) -0.0007(3)
P4 P 0.0071(3) 0.0077(3) 0.0074(3) 0.0008(2) 0.0004(2) 0.0019(2)
P5 P 0.0071(2) 0.0094(3) 0.0077(3) -0.0010(2) 0.0026(2) -0.0014(2)
P61 P 0.0075(4) 0.0083(4) 0.0088(6) 0.0000(3) 0.0026(4) 0.0007(4)
P62 P 0.0122(10) 0.0062(8) 0.013(1) -0.0018(8) 0.006(1) 0.0005(9)
O11 O 0.0087(8) 0.0103(8) 0.0083(9) -0.0027(6) -0.0008(7) -0.0001(7)
O12 O 0.0100(8) 0.0118(9) 0.018(1) -0.0003(6) 0.0051(8) 0.0050(7)
O13 O 0.0071(7) 0.0166(8) 0.013(1) 0.0016(7) 0.0000(7) 0.0024(7)
O14 O 0.0140(9) 0.0179(9) 0.008(1) 0.0049(7) 0.0003(8) -0.0033(8)
O21 O 0.025(1) 0.0073(9) 0.014(1) 0.0039(7) -0.0047(9) 0.0014(7)
O22 O 0.0160(9) 0.0137(9) 0.007(1) 0.0012(7) 0.0014(8) 0.0000(7)
O23 O 0.0102(8) 0.0165(9) 0.014(1) 0.0000(7) 0.0060(8) 0.0001(7)
O24 O 0.0091(8) 0.0167(9) 0.013(1) 0.0027(7) -0.0017(8) -0.0005(7)
O31 O 0.0132(9) 0.0165(9) 0.019(1) -0.0014(7) -0.0007(9) 0.0017(8)
O32 O 0.0197(9) 0.0089(8) 0.009(1) 0.0016(7) -0.0026(8) -0.0005(7)
O33 O 0.036(1) 0.021(1) 0.012(1) 0.0128(9) -0.0047(10) -0.0079(8)
O34 O 0.0169(9) 0.0144(9) 0.017(1) 0.0053(7) -0.0049(9) -0.0021(8)
O41 O 0.0181(9) 0.0143(9) 0.009(1) 0.0029(7) 0.0031(8) -0.0004(7)
O42 O 0.0068(7) 0.0206(9) 0.014(1) 0.0002(7) -0.0023(7) 0.0025(8)
O43 O 0.0102(8) 0.0070(7) 0.0073(9) 0.0009(6) 0.0041(7) 0.0003(6)
O44 O 0.0126(8) 0.0082(8) 0.014(1) -0.0008(6) 0.0021(8) 0.0023(7)
O51 O 0.0094(8) 0.042(1) 0.009(1) 0.0014(7) -0.0041(8) -0.0045(8)
O52 O 0.0163(9) 0.0133(9) 0.017(1) -0.0031(7) 0.0098(8) -0.0062(7)
O53 O 0.0089(7) 0.0089(7) 0.0101(9) 0.0001(6) 0.0061(7) -0.0004(6)
O54 O 0.0152(9) 0.0096(8) 0.026(1) -0.0003(7) 0.0130(9) -0.0045(8)
O61 O 0.0108(8) 0.0110(8) 0.021(1) 0.0001(6) 0.0068(8) -0.0027(7)
O62 O 0.0123(8) 0.0113(8) 0.016(1) -0.0012(6) 0.0054(8) -0.0029(7)
O63 O 0.027(1) 0.0140(9) 0.032(1) 0.0006(8) 0.018(1) 0.0025(8)
O614 O 0.016(1) 0.022(1) 0.029(2) 0.004(1) 0.009(1) 0.006(1)
O624 O 0.016(1) 0.022(1) 0.029(2) 0.004(1) 0.009(1) 0.006(1)
O7 O 0.0062(6) 0.0095(7) 0.026(1) -0.0002(7) 0.0054(6) 0.0004(9)

loop_
_geom_bond_atom_site_label_1
_geom_bond_atom_site_label_2
_geom_bond_site_symmetry_1
_geom_bond_site_symmetry_2
_geom_bond_distance
_geom_bond_publ_flag
Na1 O12 . 2_555 2.627(2) no
Na1 O12 . 4_554 2.627(2) no
Na1 O14 . 2_555 2.726(2) no
Na1 O14 . 4_554 2.726(2) no
Na1 O41 . 5_445 2.521(2) no
Na1 O41 . 7_555 2.521(2) no
Na1 O44 . . 2.406(2) no
Na1 O44 . 3_555 2.406(2) no
Na2 O11 . 5_455 2.352(3) no
Na2 O23 . . 2.418(3) no
Na2 O24 . . 2.771(4) no
```

```
Na2 O31 . 6_555 2.434(3) no
Na2 O34 . 6_555 2.624(4) no
Na2 O42 . . 2.668(4) no
Na2 O43 . . 2.357(3) no
Sr1 O22 . . 2.649(2) no
Sr1 O22 . 2_555 2.649(2) no
Sr1 O24 . . 2.834(2) no
Sr1 O24 . 2_555 2.834(2) no
Sr1 O33 . 5_455 2.793(2) no
Sr1 O33 . 6_555 2.793(2) no
Sr1 O34 . 5_455 2.928(2) no
Sr1 O34 . 6_555 2.928(2) no
Mn1 O13 . . 2.237(2) no
Mn1 O22 . . 2.122(2) no
Mn1 O31 . . 2.323(2) no
Mn1 O54 . . 2.177(2) no
Mn1 O62 . . 2.291(2) no
Mn1 O7 . 6_555 2.253(2) no
Mn2 O23 . . 2.221(2) no
Mn2 O33 . . 2.125(2) no
Mn2 O42 . . 2.221(2) no
Mn2 O52 . . 2.121(2) no
Mn2 O63 . . 2.394(2) no
Mn2 O7 . . 2.263(2) no
Mn3 O21 . 6_555 2.137(2) no
Mn3 O23 . . 2.153(2) no
Mn3 O31 . 6_555 2.171(2) no
Mn3 O32 . . 2.148(2) no
Mn3 O63 . . 2.133(2) no
Fe4 O12 . . 2.206(2) no
Fe4 O21 . 4_555 2.214(2) no
Fe4 O32 . 7_556 2.092(2) no
Fe4 O44 . 4_555 2.065(2) no
Fe4 O61 . 8_455 2.210(2) no
Fe4 O7 . 4_555 2.116(2) no
Fe5 O14 . . 2.156(2) no
Fe5 O24 . 2_555 2.071(2) no
Fe5 O43 . 2_555 2.340(2) no
Fe5 O44 . 2_555 2.249(2) no
Fe5 O54 . . 2.117(2) no
Fe5 O62 . . 2.152(2) no
Fe6 O12 . 8_554 2.144(2) no
Fe6 O34 . 2_655 2.124(2) no
Fe6 O41 . . 2.288(2) no
Fe6 O52 . . 2.163(2) no
Fe6 O53 . . 2.208(2) no
Fe6 O61 . . 2.097(2) no
Fe7 O13 . . 2.131(3) no
Fe7 O13 . 7_556 2.671(3) no
Fe7 O14 . . 2.133(3) no
Fe7 O51 . 4_555 2.084(2) no
Fe7 O62 . . 2.901(2) no
Fe7 O614 . 6_545 1.879(3) no
Al1 O11 . 5_455 1.898(2) no
Al1 O11 . 7_555 1.898(2) no
```

```
Al1 O43 . . 1.898(2) no
Al1 O43 . 3_565 1.898(2) no
Al1 O53 . 5_455 1.881(2) no
Al1 O53 . 7_555 1.881(2) no
Cr1 Cr1 . 7_555 1.134(1) no
Cr1 O41 . . 2.285(2) no
Cr1 O41 . 7_555 2.948(2) no
Cr1 O42 . . 2.210(2) no
Cr1 O42 . 7_555 2.613(2) no
Cr1 O51 . . 2.451(2) no
Cr1 O51 . 7_555 2.169(2) no
Cr1 O52 . . 2.893(2) no
Cr1 O614 . . 2.284(3) no
P1 O11 . 8_455 1.539(2) no
P1 O12 . . 1.535(2) no
P1 O13 . 7_556 1.549(2) no
P1 O14 . . 1.539(2) no
P2 O21 . . 1.549(2) no
P2 O22 . . 1.528(2) no
P2 O23 . . 1.554(2) no
P2 O24 . . 1.539(2) no
P3 O31 . . 1.561(2) no
P3 O32 . . 1.542(2) no
P3 O33 . . 1.535(2) no
P3 O34 . . 1.537(2) no
P4 O41 . 7_555 1.527(2) no
P4 O42 . . 1.532(2) no
P4 O43 . . 1.560(2) no
P4 O44 . . 1.545(2) no
P5 O51 . . 1.528(2) no
P5 O52 . . 1.551(2) no
P5 O53 . . 1.553(2) no
P5 O54 . 6_545 1.532(2) no
P61 P62 . 6_555 0.903(2) no
P61 O61 . . 1.573(2) no
P61 O62 . 6_555 1.5176(19) no
P61 O63 . . 1.509(3) no
P61 O614 . . 1.541(3) no
P62 O61 . 6_545 1.526(3) no
P62 O62 . . 1.533(3) no
P62 O63 . 6_545 1.497(3) no
P62 O624 . . 1.811(6) no
O624 O624 . 2_555 0.834(8) no

loop_
_geom_angle_atom_site_label_1
_geom_angle_atom_site_label_2
_geom_angle_atom_site_label_3
_geom_angle_site_symmetry_1
_geom_angle_site_symmetry_2
_geom_angle_site_symmetry_3
_geom_angle
_geom_angle_publ_flag
O12 Na1 O12 2_555 . 4_554 180 no
O12 Na1 O14 2_555 . 2_555 55.66(6) no
```

```
O12 Na1 O14 2_555 . 4_554 124.34(6) no
O12 Na1 O41 2_555 . 5_445 108.28(5) no
O12 Na1 O41 2_555 . 7_555 71.72(5) no
O12 Na1 O44 2_555 . . 106.35(5) no
O12 Na1 O44 2_555 . 3_555 73.65(5) no
O12 Na1 O12 4_554 . 2_555 180 no
O12 Na1 O14 4_554 . 2_555 124.34(6) no
O12 Na1 O14 4_554 . 4_554 55.66(6) no
O12 Na1 O41 4_554 . 5_445 71.72(5) no
O12 Na1 O41 4_554 . 7_555 108.28(5) no
O12 Na1 O44 4_554 . . 73.65(5) no
O12 Na1 O44 4_554 . 3_555 106.35(5) no
O14 Na1 O14 2_555 . 4_554 180 no
O14 Na1 O41 2_555 . 5_445 91.54(6) no
O14 Na1 O41 2_555 . 7_555 88.46(6) no
O14 Na1 O44 2_555 . . 69.03(5) no
O14 Na1 O44 2_555 . 3_555 110.97(5) no
O14 Na1 O14 4_554 . 2_555 180 no
O14 Na1 O41 4_554 . 5_445 88.46(6) no
O14 Na1 O41 4_554 . 7_555 91.54(6) no
O14 Na1 O44 4_554 . . 110.97(5) no
O14 Na1 O44 4_554 . 3_555 69.03(5) no
O41 Na1 O41 5_445 . 7_555 180 no
O41 Na1 O44 5_445 . . 118.43(7) no
O41 Na1 O44 5_445 . 3_555 61.57(7) no
O41 Na1 O41 7_555 . 5_445 180 no
O41 Na1 O44 7_555 . . 61.57(7) no
O41 Na1 O44 7_555 . 3_555 118.43(7) no
O44 Na1 O44 . . 3_555 180 no
O44 Na1 O44 3_555 . . 180 no
O11 Na2 O23 5_455 . . 169.4(2) no
O11 Na2 O24 5_455 . . 129.1(1) no
O11 Na2 O31 5_455 . 6_555 102.1(1) no
O11 Na2 O34 5_455 . 6_555 88.8(1) no
O11 Na2 O42 5_455 . . 98.7(1) no
O11 Na2 O43 5_455 . . 68.44(9) no
O23 Na2 O24 . . . 57.45(8) no
O23 Na2 O31 . . 6_555 81.4(1) no
O23 Na2 O34 . . 6_555 101.5(1) no
O23 Na2 O42 . . . 71.8(1) no
O23 Na2 O43 . . . 109.1(1) no
O24 Na2 O31 . . 6_555 109.2(1) no
O24 Na2 O34 . . 6_555 74.2(1) no
O24 Na2 O42 . . . 91.5(1) no
O24 Na2 O43 . . . 74.4(1) no
O31 Na2 O34 6_555 . 6_555 59.92(9) no
O31 Na2 O42 6_555 . . 129.5(1) no
O31 Na2 O43 6_555 . . 168.6(1) no
O34 Na2 O42 6_555 . . 165.5(2) no
O34 Na2 O43 6_555 . . 112.2(1) no
O42 Na2 O43 . . . 60.06(8) no
O22 Sr1 O22 . . 2_555 99.98(5) no
O22 Sr1 O24 . . . 53.35(5) no
O22 Sr1 O24 . . 2_555 79.05(6) no
O22 Sr1 O33 . . 5_455 168.74(6) no
```

```
O22 Sr1 O33 . . 6_555 70.54(6) no
O22 Sr1 O34 . . 5_455 125.75(5) no
O22 Sr1 O34 . . 6_555 94.46(6) no
O22 Sr1 O22 2_555 . . 99.98(5) no
O22 Sr1 O24 2_555 . . 79.05(6) no
O22 Sr1 O24 2_555 . 2_555 53.35(5) no
O22 Sr1 O33 2_555 . 5_455 70.54(6) no
O22 Sr1 O33 2_555 . 6_555 168.74(6) no
O22 Sr1 O34 2_555 . 5_455 94.46(6) no
O22 Sr1 O34 2_555 . 6_555 125.75(5) no
O24 Sr1 O24 . . 2_555 104.54(6) no
O24 Sr1 O33 . . 5_455 127.81(5) no
O24 Sr1 O33 . . 6_555 90.19(6) no
O24 Sr1 O34 . . 5_455 172.81(6) no
O24 Sr1 O34 . . 6_555 68.78(5) no
O24 Sr1 O24 2_555 . . 104.54(6) no
O24 Sr1 O33 2_555 . 5_455 90.19(6) no
O24 Sr1 O33 2_555 . 6_555 127.81(5) no
O24 Sr1 O34 2_555 . 5_455 68.78(5) no
O24 Sr1 O34 2_555 . 6_555 172.81(6) no
O33 Sr1 O33 5_455 . 6_555 119.51(6) no
O33 Sr1 O34 5_455 . 5_455 51.34(6) no
O33 Sr1 O34 5_455 . 6_555 96.08(6) no
O33 Sr1 O33 6_555 . 5_455 119.51(6) no
O33 Sr1 O34 6_555 . 5_455 96.08(6) no
O33 Sr1 O34 6_555 . 6_555 51.34(6) no
O34 Sr1 O34 5_455 . 6_555 118.02(6) no
O34 Sr1 O34 6_555 . 5_455 118.02(6) no
O13 Mn1 O22 . . . 173.32(7) no
O13 Mn1 O31 . . . 89.24(7) no
O13 Mn1 O54 . . . 84.96(7) no
O13 Mn1 O62 . . . 86.16(6) no
O13 Mn1 O7 . . 6_555 90.33(6) no
O22 Mn1 O31 . . . 91.17(7) no
O22 Mn1 O54 . . . 93.27(7) no
O22 Mn1 O62 . . . 87.16(7) no
O22 Mn1 O7 . . 6_555 95.85(6) no
O31 Mn1 O54 . . . 167.06(7) no
O31 Mn1 O62 . . . 92.13(7) no
O31 Mn1 O7 . . 6_555 108.77(6) no
O54 Mn1 O62 . . . 75.97(7) no
O54 Mn1 O7 . . 6_555 82.87(6) no
O62 Mn1 O7 . . 6_555 158.78(7) no
O23 Mn2 O33 . . . 92.24(8) no
O23 Mn2 O42 . . . 84.60(7) no
O23 Mn2 O52 . . . 159.26(7) no
O23 Mn2 O63 . . . 74.02(7) no
O23 Mn2 O7 . . . 112.89(6) no
O33 Mn2 O42 . . . 172.56(8) no
O33 Mn2 O52 . . . 95.16(8) no
O33 Mn2 O63 . . . 89.77(7) no
O33 Mn2 O7 . . . 87.39(7) no
O42 Mn2 O52 . . . 90.09(7) no
O42 Mn2 O63 . . . 95.80(7) no
O42 Mn2 O7 . . . 87.64(6) no
```

```
O52 Mn2 O63 . . . 86.64(7) no
O52 Mn2 O7 . . . 86.83(6) no
O63 Mn2 O7 . . . 172.62(6) no
O21 Mn3 O23 6_555 . . 166.66(9) no
O21 Mn3 O31 6_555 . 6_555 93.85(7) no
O21 Mn3 O32 6_555 . . 80.67(7) no
O21 Mn3 O63 6_555 . . 108.39(8) no
O23 Mn3 O31 . . 6_555 94.08(7) no
O23 Mn3 O32 . . . 90.06(7) no
O23 Mn3 O63 . . . 80.92(8) no
O31 Mn3 O32 6_555 . . 171.00(8) no
O31 Mn3 O63 6_555 . . 98.88(8) no
O32 Mn3 O63 . . . 89.65(8) no
O12 Fe4 O21 . . 4_555 174.49(6) no
O12 Fe4 O32 . . 7_556 94.67(7) no
O12 Fe4 O44 . . 4_555 90.01(7) no
O12 Fe4 O61 . . 8_455 79.22(7) no
O12 Fe4 O7 . . 4_555 90.42(7) no
O21 Fe4 O32 4_555 . 7_556 80.11(7) no
O21 Fe4 O44 4_555 . 4_555 95.19(7) no
O21 Fe4 O61 4_555 . 8_455 102.72(7) no
O21 Fe4 O7 4_555 . 4_555 87.37(7) no
O32 Fe4 O44 7_556 . 4_555 175.30(7) no
O32 Fe4 O61 7_556 . 8_455 93.26(7) no
O32 Fe4 O7 7_556 . 4_555 85.05(7) no
O44 Fe4 O61 4_555 . 8_455 87.97(7) no
O44 Fe4 O7 4_555 . 4_555 94.56(7) no
O61 Fe4 O7 8_455 . 4_555 169.35(7) no
O14 Fe5 O24 . . 2_555 173.24(8) no
O14 Fe5 O43 . . 2_555 83.71(7) no
O14 Fe5 O44 . . 2_555 83.00(7) no
O14 Fe5 O54 . . . 93.99(7) no
O14 Fe5 O62 . . . 87.81(7) no
O24 Fe5 O43 2_555 . 2_555 89.75(7) no
O24 Fe5 O44 2_555 . 2_555 92.57(7) no
O24 Fe5 O54 2_555 . . 89.34(7) no
O24 Fe5 O62 2_555 . . 98.56(8) no
O43 Fe5 O44 2_555 . 2_555 63.62(6) no
O43 Fe5 O54 2_555 . . 104.96(7) no
O43 Fe5 O62 2_555 . . 170.31(6) no
O44 Fe5 O54 2_555 . . 168.39(8) no
O44 Fe5 O62 2_555 . . 110.75(7) no
O54 Fe5 O62 . . . 80.24(7) no
O12 Fe6 O34 8_554 . 2_655 90.87(7) no
O12 Fe6 O41 8_554 . . 85.72(7) no
O12 Fe6 O52 8_554 . . 176.09(8) no
O12 Fe6 O53 8_554 . . 108.90(7) no
O12 Fe6 O61 8_554 . . 83.18(7) no
O34 Fe6 O41 2_655 . . 166.30(8) no
O34 Fe6 O52 2_655 . . 90.35(7) no
O34 Fe6 O53 2_655 . . 89.74(6) no
O34 Fe6 O61 2_655 . . 100.84(7) no
O41 Fe6 O52 . . . 92.24(7) no
O41 Fe6 O53 . . . 78.88(6) no
O41 Fe6 O61 . . . 91.93(7) no
```

```
O52 Fe6 O53 . . . 67.39(7) no
O52 Fe6 O61 . . . 100.24(7) no
O53 Fe6 O61 . . . 163.97(6) no
O13 Fe7 O13 . . 7_556 91.26(8) no
O13 Fe7 O14 . . . 103.58(9) no
O13 Fe7 O51 . . 4_555 121.40(9) no
O13 Fe7 O62 . . . 74.07(7) no
O13 Fe7 O614 . . 6_545 111.8(2) no
O13 Fe7 O13 7_556 . . 91.26(8) no
O13 Fe7 O14 7_556 . . 61.00(7) no
O13 Fe7 O51 7_556 . 4_555 88.95(9) no
O13 Fe7 O62 7_556 . . 124.55(7) no
O13 Fe7 O614 7_556 . 6_545 155.0(1) no
O14 Fe7 O51 . . 4_555 126.6(1) no
O14 Fe7 O62 . . . 70.95(7) no
O14 Fe7 O614 . . 6_545 102.6(1) no
O51 Fe7 O62 4_555 . . 144.4(1) no
O51 Fe7 O614 4_555 . 6_545 87.0(1) no
O62 Fe7 O614 . . 6_545 57.7(1) no
O11 Al1 O11 5_455 . 7_555 180 no
O11 Al1 O43 5_455 . . 88.47(6) no
O11 Al1 O43 5_455 . 3_565 91.53(6) no
O11 Al1 O53 5_455 . 5_455 88.12(7) no
O11 Al1 O53 5_455 . 7_555 91.88(7) no
O11 Al1 O11 7_555 . 5_455 180 no
O11 Al1 O43 7_555 . . 91.53(6) no
O11 Al1 O43 7_555 . 3_565 88.47(6) no
O11 Al1 O53 7_555 . 5_455 91.88(7) no
O11 Al1 O53 7_555 . 7_555 88.12(7) no
O43 Al1 O43 . . 3_565 180 no
O43 Al1 O53 . . 5_455 87.57(7) no
O43 Al1 O53 . . 7_555 92.43(7) no
O43 Al1 O43 3_565 . . 180 no
O43 Al1 O53 3_565 . 5_455 92.43(7) no
O43 Al1 O53 3_565 . 7_555 87.57(7) no
O53 Al1 O53 5_455 . 7_555 180 no
O53 Al1 O53 7_555 . 5_455 180 no
O41 Cr1 O41 . . 7_555 159.60(8) no
O41 Cr1 O42 . . . 142.20(8) no
O41 Cr1 O42 . . 7_555 60.99(6) no
O41 Cr1 O51 . . . 92.60(7) no
O41 Cr1 O51 . . 7_555 99.77(8) no
O41 Cr1 O52 . . . 75.60(7) no
O41 Cr1 O614 . . . 75.51(9) no
O41 Cr1 O41 7_555 . . 159.60(8) no
O41 Cr1 O42 7_555 . . 55.82(6) no
O41 Cr1 O42 7_555 . 7_555 99.57(6) no
O41 Cr1 O51 7_555 . . 77.62(6) no
O41 Cr1 O51 7_555 . 7_555 82.54(6) no
O41 Cr1 O52 7_555 . . 111.49(6) no
O41 Cr1 O614 7_555 . . 124.30(9) no
O42 Cr1 O42 . . 7_555 154.52(7) no
O42 Cr1 O51 . . . 85.77(7) no
O42 Cr1 O51 . . 7_555 98.75(8) no
O42 Cr1 O52 . . . 72.67(6) no
```

```
O42 Cr1 O614 . . . 77.6(1) no
O42 Cr1 O42 7_555 . . 154.52(7) no
O42 Cr1 O51 7_555 . . 81.96(7) no
O42 Cr1 O51 7_555 . 7_555 82.71(7) no
O42 Cr1 O52 7_555 . . 116.60(6) no
O42 Cr1 O614 7_555 . . 126.8(1) no
O51 Cr1 O51 . . 7_555 152.45(7) no
O51 Cr1 O52 . . . 55.01(5) no
O51 Cr1 O614 . . . 131.59(9) no
O51 Cr1 O51 7_555 . . 152.45(7) no
O51 Cr1 O52 7_555 . . 152.15(7) no
O51 Cr1 O614 7_555 . . 75.66(9) no
O52 Cr1 O614 . . . 76.62(8) no
O11 P1 O12 8_455 . . 110.0(1) no
O11 P1 O13 8_455 . 7_556 108.63(9) no
O11 P1 O14 8_455 . . 111.8(1) no
O12 P1 O13 . . 7_556 110.6(1) no
O12 P1 O14 . . . 108.9(1) no
O13 P1 O14 7_556 . . 107.0(1) no
O21 P2 O22 . . . 112.9(1) no
O21 P2 O23 . . . 107.6(1) no
O21 P2 O24 . . . 110.9(1) no
O22 P2 O23 . . . 109.8(1) no
O22 P2 O24 . . . 107.1(1) no
O23 P2 O24 . . . 108.6(1) no
O31 P3 O32 . . . 107.5(1) no
O31 P3 O33 . . . 109.1(1) no
O31 P3 O34 . . . 109.6(1) no
O32 P3 O33 . . . 112.1(1) no
O32 P3 O34 . . . 110.9(1) no
O33 P3 O34 . . . 107.7(1) no
O41 P4 O42 7_555 . . 109.7(1) no
O41 P4 O43 7_555 . . 112.1(1) no
O41 P4 O44 7_555 . . 110.5(1) no
O42 P4 O43 . . . 109.76(9) no
O42 P4 O44 . . . 112.3(1) no
O43 P4 O44 . . . 102.4(1) no
O51 P5 O52 . . . 108.5(1) no
O51 P5 O53 . . . 112.1(1) no
O51 P5 O54 . . 6_545 112.3(1) no
O52 P5 O53 . . . 102.8(1) no
O52 P5 O54 . . 6_545 112.0(1) no
O53 P5 O54 . . 6_545 108.8(1) no
O61 P61 O63 . . . 110.3(1) no
O61 P61 O614 . . . 111.8(2) no
O62 P61 O63 6_555 . . 113.9(1) no
O62 P61 O614 6_555 . . 107.9(1) no
O63 P61 O614 . . . 104.8(2) no
O61 P62 O62 6_545 . . 109.8(2) no
O61 P62 O63 6_545 . 6_545 113.7(2) no
O61 P62 O624 6_545 . . 106.3(2) no
O61 P62 O624 6_545 . 2_555 104.5(2) no
O62 P62 O63 . . 6_545 113.8(2) no
O62 P62 O624 . . . 111.5(2) no
O62 P62 O624 . . 2_555 113.8(2) no
```

```
O63 P62 O624 6_545 . . 101.2(2) no
O63 P62 O624 6_545 . 2_555 100.7(2) no
Mn1 O7 Mn2 6_545 . . 132.60(6) no
Mn1 O7 Fe4 6_545 . 4_554 112.68(8) no
Mn2 O7 Fe4 . . 4_554 112.21(8) no
```

Crystallographic structure of Arrojadite of the Nickle Plate mine in CIF-Format

```
data_publ

_publ_contact_author_name
'Christoph Kallfa\&s'
_publ_contact_author_address
;
;
_publ_contact_author_email
XXX
loop_
_publ_author_name
'Christoph Kallfa\&s'
_publ_author_address
'Stuttgart'
_publ_section_title
;Crystal structure, chemical composition and
thermal behaviour of arrojadite
;
_publ_section_abstract
;The crystal structure of arrojadite was reexamined and the disorder phe-
nomena were described applying modern X-ray diffraction and refinement
methods on samples from Nickel Plate (USA).The chemical composition of
different arrojadite samples was determined using SEM-EDX, ICP-OES and
ICP-MS. It crystallizes in the monoclinic system (space group C2/c) with
the lattice parameters a = 1664.4(1) pm, b = 1012.4(1) pm, c = 2486.9(1)
pm,\b = 105.838(1)\%. The thermal decomposition processes under various
conditions have been studied by in-situ synchrotron powder diffraction
experiments, and by simultaneous thermoanalytical and mass-
spectrometrical measurements.;

_publ_section_references
; IPDS2 (X-AREA Version 1.35, Stoe et Cie. 2006),
  PLATON (Spek 2006),
  SHELXL97/SHELXS97 (Sheldrick, 1997)
  JANA2000 (Petricek, Dusek, 2000),
  ENCIFER (Version 1.2, CCDC, 2005),
  OPENDX (Version 4.2.0, opendx.org, 2000),
  DRAWXTL (Version 5.1, Finger, Kroeker, Toby, 2005)
;
_audit_creation_method          JANA2000,ENCIFER
_chemical_name_systematic
; Sodium Potassium Aluminium Chromium Iron Manganese Phosphate Hydrate
```

```
;
_chemical_name_common                         'Arrojadite'
_chemical_formula_moiety   ; Al Cr Fe7.53 H2 K1.21 Mn6 Na3 O50 P12;
_chemical_formula_sum
; Al Cr Fe7.53 H2 K1.21 Mn6 Na3 O50 P12
;
_chemical_formula_weight                      2119
_chemical_compound_source                     'Nickel Plate (USA)'
_symmetry_cell_setting                        monoclinic
_symmetry_space_group_name_H-M                C2/c
_symmetry_space_group_name_Hall               '-C 2yc'
_symmetry_int_tables_number                   15
loop_
 _symmetry_equiv_pos_site_id
 _symmetry_equiv_pos_as_xyz
 1   x,y,z
 2   -x,y,1/2-z
 3   -x,-y,-z
 4   x,-y,1/2+z
 5   1/2+x,1/2+y,z
 6   1/2-x,1/2+y,1/2-z
 7   1/2-x,1/2-y,-z
 8   1/2+x,1/2-y,1/2+z
_cell_length_a                                16.644(1)
_cell_length_b                                10.1248(5)
_cell_length_c                                24.869(2)
_cell_angle_alpha                             90
_cell_angle_beta                              105.838(4)
_cell_angle_gamma                             90
_cell_volume                                  4031.8(4)
_cell_formula_units_Z                         4
_cell_measurement_reflns_used                 32104
_cell_measurement_theta_min                   3.4
_cell_measurement_theta_max                   59.0
_cell_measurement_temperature                 293(2)
_exptl_crystal_density_diffrn                 3.487
_exptl_crystal_density_meas                   3.560(4)
_exptl_crystal_density_method                 'gas pycnometer'
_exptl_crystal_F_000                          4075
_exptl_absorpt_coefficient_mu                 5.493
_exptl_crystal_description                    'xenomorphic fragment'
_exptl_crystal_size_max                       0.28
_exptl_crystal_size_mid                       0.21
_exptl_crystal_size_min                       0.13
_exptl_crystal_colour                         'pale green'
_exptl_absorpt_correction_type                multi-scan
_exptl_absorpt_process_details                'SHXABS in PLATON'
_exptl_absorpt_correction_T_min               0.234348
_exptl_absorpt_correction_T_max               0.695788
_diffrn_ambient_temperature                   293(2)
_diffrn_radiation_probe                  x-ray
_diffrn_radiation_type                        'Mo K\a'
_diffrn_radiation_wavelength                  0.71069
_diffrn_radiation_source                      'fine-focus sealed tube'
_diffrn_radiation_monochromator               graphite
```

```
_diffrn_measurement_device_type          'STOE IPDS2'
_diffrn_measurement_method               '\w scan'
_diffrn_reflns_number                    18827
_diffrn_reflns_theta_min                 1.71
_diffrn_reflns_theta_max                 29.49
_diffrn_measured_fraction_theta_max      0.984
_diffrn_measured_fraction_theta_full     0.984
_diffrn_reflns_theta_full                29.21
_diffrn_reflns_av_R_equivalents          0.0301
_diffrn_reflns_av_sigmaI/netI            0.0222
_diffrn_reflns_limit_h_min               -22
_diffrn_reflns_limit_h_max               22
_diffrn_reflns_limit_k_min               -13
_diffrn_reflns_limit_k_max               13
_diffrn_reflns_limit_l_min               -34
_diffrn_reflns_limit_l_max               34
_refine_special_details
;
Refinement of F^2^ against ALL reflections. The weighted R-factor wR and
goodness of fit S are based on F^2^, conventional R-factors R are based
on F, with F set to zero for negative F^2^. The threshold expression
ofF^2^ > 2sigma(F^2^) is used only for calculating R-factors(gt) etc. and
is not relevant to the choice of reflections for refinement.  R-factors
based on F^2^ are statistically about twice as large as those based on F,
and R-factors based on ALL data will be even larger. The anisotropic dis-
placement of the atoms Na(2) and Fe(7) were refined with anharmonic 3rd
order tensors. Highest residual electron density peak is in direct vicin-
ity of Fe(7). Structural model includes displacement disorder, mixed and
fractional occupation of several sites.;

_reflns_number_total                     5379
_reflns_number_gt                        5007
_reflns_threshold_expression             'I>2\s(I)'
_refine_ls_structure_factor_coef         Fsqd
_refine_ls_R_factor_gt                   0.0553
_refine_ls_wR_factor_gt                  0.0871
_refine_ls_R_factor_all                  0.0553
_refine_ls_wR_factor_ref                 0.0871
_refine_ls_goodness_of_fit_ref           1.043
_refine_ls_goodness_of_fit_gt            1.043
_refine_ls_number_reflns                 16456
_refine_ls_number_parameters             417
_refine_ls_number_restraints             4
_refine_ls_number_constraints            0
_refine_ls_weighting_scheme              sigma
_refine_ls_weighting_details             'w=1/\s^2^(I)'
_refine_ls_hydrogen_treatment            undef
_refine_ls_shift/su_max                  0.0005
_refine_ls_shift/su_mean                 0.0000
_refine_diff_density_max                 3.89
_refine_diff_density_min                 -2.86
_refine_diff_density_rms                 0.257
_refine_ls_extinction_method
 'B-C type 1 Gaussian isotropic (Becker & Coppens, 1974)'
_refine_ls_extinction_coef               0.055(3)
```

```
loop_
 _atom_type_symbol
 _atom_type_scat_dispersion_real
 _atom_type_scat_dispersion_imag
 _atom_type_scat_source
 _atom_type_scat_Cromer_Mann_a1
 _atom_type_scat_Cromer_Mann_b1
 _atom_type_scat_Cromer_Mann_a2
 _atom_type_scat_Cromer_Mann_b2
 _atom_type_scat_Cromer_Mann_a3
 _atom_type_scat_Cromer_Mann_b3
 _atom_type_scat_Cromer_Mann_a4
 _atom_type_scat_Cromer_Mann_b4
 _atom_type_scat_Cromer_Mann_c
Na   0.036   0.025 'International Tables Vol C Tables  4.2.6.8 and
6.1.1.4' 4.7626 3.285 3.1736 8.8422 1.2674 0.3136 1.1128 129.423996 0.676
Mg   0.049   0.036 'International Tables Vol C Tables  4.2.6.8 and
6.1.1.4' 5.4204 2.8275 2.1735 79.261101 1.2269 0.3808 2.3073 7.1937
0.8584
Mn   0.337   0.728 'International Tables Vol C Tables  4.2.6.8 and
6.1.1.4' 11.2819 5.3409 7.3573 0.3432 3.0193 17.867399 2.2441 83.754303
1.0896
Fe   0.346   0.844 'International Tables Vol C Tables  4.2.6.8 and
6.1.1.4' 11.7695 4.7611 7.3573 0.3072 3.5222 15.3535 2.3045 76.880501
1.0369
Al   0.064   0.051 'International Tables Vol C Tables  4.2.6.8 and
6.1.1.4' 6.4202 3.0387 1.9002 0.7426 1.5936 31.547199 1.9646 85.0886
1.1151
Cr   0.321   0.624 'International Tables Vol C Tables  4.2.6.8 and
6.1.1.4' 10.6406 6.1038 7.3537 0.392 3.324 20.2626 1.4922 98.739899
1.1832
P    0.102   0.094 'International Tables Vol C Tables  4.2.6.8 and
6.1.1.4' 6.4345 1.9067 4.1791 27.157 1.78 0.526 1.4908 68.164497 1.1149
O    0.011   0.006 'International Tables Vol C Tables  4.2.6.8 and
6.1.1.4' 3.0485 13.2771 2.2868 5.7011 1.5463 0.3239 0.867 32.908901
0.2508
K    0.201   0.249 'International Tables Vol C Tables  4.2.6.8 and
6.1.1.4' 8.2186 12.7949 7.4398 0.7748 1.0519 213.186996 0.8659 41.684101
1.4228

_computing_data_collection              'IPDS2'
_computing_cell_refinement              'IPDS2'
_computing_data_reduction               'IPDS2'
_computing_structure_solution           'SHELXS97'
_computing_structure_refinement         'JANA2000'
_computing_molecular_graphics           'DRAWXTL,OPENDX'
_computing_publication_material         'JANA2000,ENCIFER'

#========================================================================

# 9. ATOMIC COORDINATES AND DISPLACEMENT PARAMETERS

loop_
 _atom_site_label
```

```
_atom_site_type_symbol
_atom_site_adp_type
_atom_site_fract_x
_atom_site_fract_y
_atom_site_fract_z
_atom_site_U_iso_or_equiv
_atom_site_symmetry_multiplicity
_atom_site_occupancy
_atom_site_calc_flag
_atom_site_refinement_flags
_atom_site_disorder_assembly
_atom_site_disorder_group
 Na1 Na Uani 0 0 0 0.0280(9) 4 1 d . . .
 Na2 Na Uani 0.1339(4) 0.4853(5) 0.1194(2) 0.0578(12) 8 1 d . . .
 K1 K Uani 0 0.4962(2) 0.25 0.0398(7) 4 1 d . . .
 K2 K Uani 0 0.3339(12) 0.25 0.061(5) 4 0.213(9) d . . .
 Mn1 Mn Uani 0.20448(4) 0.30069(6) 0.35175(3) 0.0100(2) 8 1 d . . .
 Mn2 Mn Uani 0.28068(4) 0.20576(7) 0.15669(3) 0.0127(2) 8 1 d . . .
 Mn3 Mn Uani 0.28728(4) 0.49229(7) 0.23232(3) 0.00991(18) 8 1 d . . .
 Fe4 Fe Uani 0.10679(4) 0.01421(7) 0.63925(3) 0.0187(2) 8 1 d . . .
 Fe5 Fe Uani 0.03349(4) 0.25655(6) 0.40052(3) 0.00841(19) 8 1 d . . .
 Fe6 Fe Uani 0.47775(4) 0.25053(6) 0.09635(3) 0.00921(19) 8 1 d . . .
 Fe7 Fe Uani 0.21878(14) 0.0953(3) 0.47164(13) 0.0389(6) 8 0.764(4) d .
. .
 Al1 Al Uani 0 0.5 0 0.0034(4) 4 1 d . . .
 Cr1 Cr Uani 0.26856(10) 0.27854(15) 0.01563(8) 0.0243(7) 8 0.5 d . . .
 P1 P Uani 0.12588(6) 0.25146(10) 0.53842(5) 0.0050(3) 8 1 d . . .
 P2 P Uani 0.13043(7) 0.27542(10) 0.21144(5) 0.0072(3) 8 1 d . . .
 P3 P Uani 0.35711(7) 0.20346(10) 0.29534(5) 0.0091(3) 8 1 d . . .
 P4 P Uani 0.10272(7) 0.23279(10) 0.04721(5) 0.0060(3) 8 1 d . . .
 P5 P Uani 0.36993(7) 0.03318(9) 0.07556(5) 0.0066(3) 8 1 d . . .
 P61 P Uani 0.38530(12) 0.49081(19) 0.13219(10) 0.0056(6) 8 0.642(5) d .
. .
 P62 P Uani 0.0818(3) 0.0059(4) 0.3372(2) 0.0179(15) 8 0.358(5) d . . .
 O11 O Uani 0.59467(17) 0.1048(3) 0.03610(13) 0.0075(9) 8 1 d . . .
 O12 O Uani 0.08478(18) 0.1666(3) 0.57459(13) 0.0099(10) 8 1 d . . .
 O13 O Uani 0.27815(17) 0.2480(3) 0.43761(13) 0.0115(9) 8 1 d . . .
 O14 O Uani 0.10697(19) 0.1899(3) 0.47949(13) 0.0131(10) 8 1 d . . .
 O21 O Uani 0.1397(2) 0.1244(3) 0.20834(16) 0.0226(13) 8 1 d . . .
 O22 O Uani 0.1315(2) 0.3204(3) 0.27000(14) 0.0173(11) 8 1 d . . .
 O23 O Uani 0.20429(19) 0.3399(3) 0.19366(15) 0.0150(11) 8 1 d . . .
 O24 O Uani 0.0488(2) 0.3205(3) 0.17050(15) 0.0167(11) 8 1 d . . .
 O31 O Uani 0.2852(2) 0.1462(3) 0.31799(16) 0.0184(11) 8 1 d . . .
 O32 O Uani 0.3501(2) 0.3556(3) 0.29500(15) 0.0144(11) 8 1 d . . .
 O33 O Uani 0.3486(3) 0.1506(3) 0.23673(16) 0.0307(13) 8 1 d . . .
 O34 O Uani 0.4418(2) 0.1610(3) 0.33473(15) 0.0146(11) 8 1 d . . .
 O41 O Uani 0.4035(2) 0.3137(3) 0.01237(13) 0.0121(10) 8 1 d . . .
 O42 O Uani 0.19365(17) 0.2637(3) 0.07686(14) 0.0147(10) 8 1 d . . .
 O43 O Uani 0.04673(18) 0.3575(2) 0.04795(12) 0.0086(9) 8 1 d . . .
 O44 O Uani 0.06634(19) 0.1288(3) 0.07952(13) 0.0110(10) 8 1 d . . .
 O51 O Uani 0.29017(19) 0.0378(3) 0.02677(14) 0.0189(11) 8 1 d . . .
 O52 O Uani 0.37140(19) 0.1551(3) 0.11369(14) 0.0134(11) 8 1 d . . .
 O53 O Uani 0.44968(16) 0.0560(2) 0.05526(12) 0.0070(9) 8 1 d . . .
 O54 O Uani 0.12124(19) 0.4022(3) 0.39257(14) 0.0126(10) 8 1 d . . .
 O61 O Uani 0.38832(19) 0.6404(3) 0.13637(14) 0.0144(11) 8 1 d . . .
```

```
 O62 O Uani 0.02463(18) -0.0613(3) 0.36725(13) 0.0112(10) 8 1 d . . .
 O63 O Uani 0.3574(3) 0.4231(3) 0.17818(18) 0.0356(16) 8 1 d . . .
 O614 O Uani 0.3198(3) 0.4539(6) 0.0779(3) 0.0333(18) 8 0.642(5) d . . .
 O624 O Uani 0 -0.1527(8) 0.25 0.0333(18) 4 0.716(9) d . . .
 O7 O Uani 0.23126(15) -0.0013(3) 0.13780(12) 0.0108(8) 8 1 d . . .

loop_
 _atom_site_aniso_label
 _atom_site_aniso_type_symbol
 _atom_site_aniso_U_11
 _atom_site_aniso_U_22
 _atom_site_aniso_U_33
 _atom_site_aniso_U_12
 _atom_site_aniso_U_13
 _atom_site_aniso_U_23
 Na1 Na 0.0376(16) 0.0148(12) 0.0207(15) -0.0072(14) -0.0108(13)
0.0001(14)
 Na2 Na 0.110(3) 0.0156(11) 0.0206(12) -0.0079(16) -0.0278(16) 0.0015(11)
 K1 K 0.0221(8) 0.0385(9) 0.0703(14) 0 0.0321(9) 0
 K2 K 0.037(6) 0.099(10) 0.062(9) 0 0.038(6) 0
 Mn1 Mn 0.0099(3) 0.0132(3) 0.0070(4) 0.0018(2) 0.0024(3) -0.0007(3)
 Mn2 Mn 0.0099(3) 0.0199(3) 0.0082(4) 0.0061(3) 0.0024(3) -0.0018(3)
 Mn3 Mn 0.0116(3) 0.0091(3) 0.0075(3) 0.0006(3) 0.0001(3) 0.0006(3)
 Fe4 Fe 0.0179(3) 0.0196(4) 0.0180(4) 0.0009(3) 0.0037(3) -0.0006(3)
 Fe5 Fe 0.0063(3) 0.0101(3) 0.0094(3) 0.0010(2) 0.0030(3) 0.0001(2)
 Fe6 Fe 0.0092(3) 0.0089(3) 0.0102(3) -0.0017(2) 0.0036(3) -0.0011(2)
 Fe7 Fe 0.0193(6) 0.0522(11) 0.0525(11) 0.0215(6) 0.0223(7) 0.0397(9)
 Al1 Al 0.0026(7) 0.0035(6) 0.0042(8) 0.0009(6) 0.0011(6) 0.0011(7)
 Cr1 Cr 0.0239(10) 0.0234(10) 0.0337(12) 0.0098(7) 0.0213(10) 0.0125(7)
 P1 P 0.0042(4) 0.0047(4) 0.0065(5) 0.0022(4) 0.0020(4) 0.0013(4)
 P2 P 0.0076(5) 0.0066(5) 0.0069(6) -0.0003(4) 0.0012(5) -0.0001(4)
 P3 P 0.0118(6) 0.0058(5) 0.0081(6) 0.0001(4) -0.0001(5) -0.0015(4)
 P4 P 0.0072(5) 0.0046(5) 0.0058(5) 0.0006(4) 0.0011(4) 0.0015(4)
 P5 P 0.0067(5) 0.0064(5) 0.0078(5) -0.0013(3) 0.0040(4) -0.0013(4)
 P61 P 0.0034(9) 0.0077(8) 0.0066(10) 0.0001(7) 0.0028(8) 0.0008(8)
 P62 P 0.024(2) 0.0068(14) 0.031(3) -0.0067(16) 0.021(2) -0.0052(19)
 O11 O 0.0039(13) 0.0109(14) 0.0068(15) 0.0001(10) 0.0000(13) -0.0009(11)
 O12 O 0.0115(15) 0.0078(13) 0.0122(17) 0.0032(11) 0.0062(15) 0.0046(11)
 O13 O 0.0058(13) 0.0097(12) 0.0178(17) 0.0031(11) 0.0012(13) 0.0019(12)
 O14 O 0.0107(16) 0.0191(15) 0.0092(17) 0.0069(12) 0.0024(15) -0.0023(13)
 O21 O 0.035(2) 0.0080(15) 0.017(2) 0.0072(14) -0.0052(19) 0.0018(13)
 O22 O 0.0203(17) 0.0258(17) 0.0061(17) 0.0063(14) 0.0040(15) -0.0016(13)
 O23 O 0.0092(16) 0.0199(16) 0.0175(19) 0.0000(12) 0.0062(16) 0.0010(13)
 O24 O 0.0127(16) 0.0197(16) 0.0163(19) -0.0011(12) 0.0017(16) -
0.0033(14)
 O31 O 0.0073(15) 0.0202(16) 0.025(2) -0.0021(12) 0.0000(16) 0.0089(14)
 O32 O 0.0242(18) 0.0006(13) 0.0157(18) -0.0003(12) 0.0009(16) 0.0006(12)
 O33 O 0.049(3) 0.0244(19) 0.0100(19) 0.0225(17) -0.0069(19) -0.0103(15)
 O34 O 0.0111(16) 0.0158(15) 0.0142(19) 0.0052(12) -0.0010(15) -
0.0036(13)
 O41 O 0.0176(16) 0.0118(14) 0.0066(16) 0.0029(12) 0.0026(15) 0.0019(12)
 O42 O 0.0054(13) 0.0175(15) 0.0171(17) -0.0012(12) -0.0041(13)
0.0012(13)
 O43 O 0.0138(15) 0.0038(12) 0.0098(16) 0.0058(11) 0.0058(14) 0.0019(11)
 O44 O 0.0166(16) 0.0056(13) 0.0116(17) -0.0036(11) 0.0050(15) 0.0018(11)
```

```
 O51 O 0.0072(15) 0.037(2) 0.0104(17) 0.0085(12) -0.0014(14) -0.0003(13)
 O52 O 0.0125(15) 0.0118(14) 0.020(2) -0.0042(11) 0.0122(16) -0.0063(12)
 O53 O 0.0028(13) 0.0088(12) 0.0109(16) -0.0025(10) 0.0045(13) -
0.0016(11)
 O54 O 0.0107(15) 0.0128(14) 0.0168(18) 0.0010(11) 0.0083(15) 0.0004(13)
 O61 O 0.0182(16) 0.0111(14) 0.0190(19) 0.0031(12) 0.0135(16) 0.0028(12)
 O62 O 0.0090(14) 0.0082(13) 0.0175(18) -0.0018(10) 0.0056(14) 0.0028(12)
 O63 O 0.044(2) 0.0228(18) 0.054(3) 0.0111(16) 0.038(2) 0.0200(18)
 O614 O 0.007(2) 0.049(3) 0.044(3) 0.0032(18) 0.007(2) -0.004(2)
 O624 O 0.007(2) 0.049(3) 0.044(3) 0.0032(18) 0.007(2) -0.004(2)
 O7 O 0.0035(12) 0.0131(12) 0.0154(15) 0.0024(12) 0.0021(12) 0.0004(14)
loop_
 _geom_bond_atom_site_label_1
 _geom_bond_atom_site_label_2
 _geom_bond_site_symmetry_1
 _geom_bond_site_symmetry_2
 _geom_bond_distance
 _geom_bond_publ_flag
Na1 O12 . 2_555 2.617(3) no
Na1 O12 . 4_554 2.617(3) no
Na1 O14 . 2_555 2.761(3) no
Na1 O14 . 4_554 2.761(3) no
Na1 O41 . 5_445 2.549(3) no
Na1 O41 . 7_555 2.549(3) no
Na1 O44 . . 2.375(3) no
Na1 O44 . 3_555 2.375(3) no
Na2 O11 . 5_455 2.332(6) no
Na2 O23 . . 2.402(6) no
Na2 O24 . . 2.717(7) no
Na2 O31 . 6_555 2.399(6) no
Na2 O34 . 6_555 2.615(7) no
Na2 O42 . . 2.777(7) no
Na2 O43 . . 2.350(5) no
K1 K2 . . 1.643(13) no
K1 O22 . . 2.759(4) no
K1 O22 . 2_555 2.759(4) no
K1 O24 . . 2.934(4) no
K1 O24 . 2_555 2.934(4) no
K1 O33 . 5_455 2.906(4) no
K1 O33 . 6_555 2.906(4) no
K2 O22 . . 2.112(4) no
K2 O22 . 2_555 2.112(4) no
K2 O24 . . 2.338(4) no
K2 O24 . 2_555 2.338(4) no
Mn1 O13 . . 2.218(3) no
Mn1 O22 . . 2.074(3) no
Mn1 O31 . . 2.360(4) no
Mn1 O54 . . 2.185(4) no
Mn1 O61 . 6_545 2.314(3) no
Mn1 O7 . 6_555 2.254(3) no
Mn2 O23 . . 2.224(4) no
Mn2 O33 . . 2.080(4) no
Mn2 O42 . . 2.194(3) no
Mn2 O52 . . 2.137(4) no
Mn2 O63 . . 2.527(4) no
```

```
Mn2 O7 . . 2.254(3) no
Mn3 O21 . 6_555 2.113(3) no
Mn3 O23 . . 2.118(3) no
Mn3 O31 . 6_555 2.151(3) no
Mn3 O32 . . 2.133(3) no
Mn3 O63 . . 2.126(5) no
Fe4 O12 . . 2.186(3) no
Fe4 O21 . 4_555 2.170(4) no
Fe4 O32 . 7_556 2.070(3) no
Fe4 O44 . 4_555 2.052(3) no
Fe4 O62 . 3_556 2.201(3) no
Fe4 O7 . 4_555 2.086(3) no
Fe5 O14 . . 2.121(3) no
Fe5 O24 . 2_555 2.024(3) no
Fe5 O43 . 2_555 2.325(3) no
Fe5 O44 . 2_555 2.265(3) no
Fe5 O54 . . 2.122(3) no
Fe5 O61 . 6_545 2.138(4) no
Fe6 O12 . 8_554 2.167(3) no
Fe6 O34 . 2_655 2.074(3) no
Fe6 O41 . . 2.211(3) no
Fe6 O52 . . 2.161(3) no
Fe6 O53 . . 2.209(3) no
Fe6 O62 . 6_555 2.115(3) no
Fe7 P61 . 6_545 2.889(3) no
Fe7 O13 . . 2.131(4) no
Fe7 O13 . 7_556 2.748(4) no
Fe7 O14 . . 2.149(4) no
Fe7 O51 . 4_555 2.054(4) no
Fe7 O61 . 6_545 2.826(4) no
Fe7 O614 . 6_545 1.883(7) no
Al1 O11 . 5_455 1.908(3) no
Al1 O11 . 7_555 1.908(3) no
Al1 O43 . . 1.898(3) no
Al1 O43 . 3_565 1.898(3) no
Al1 O53 . 5_455 1.881(3) no
Al1 O53 . 7_555 1.881(3) no
Cr1 Cr1 . 7_555 1.028(2) no
Cr1 O41 . . 2.297(4) no
Cr1 O41 . 7_555 2.911(4) no
Cr1 O42 . . 2.221(4) no
Cr1 O42 . 7_555 2.580(4) no
Cr1 O51 . . 2.468(3) no
Cr1 O51 . 7_555 2.227(3) no
Cr1 O52 . . 2.857(3) no
Cr1 O614 . . 2.357(6) no
P1 O11 . 8_455 1.541(3) no
P1 O12 . . 1.533(4) no
P1 O13 . 7_556 1.545(3) no
P1 O14 . . 1.544(3) no
P2 O21 . . 1.541(3) no
P2 O22 . . 1.522(4) no
P2 O23 . . 1.559(4) no
P2 O24 . . 1.528(3) no
P3 O31 . . 1.566(4) no
```

```
P3 O32 . . 1.545(3) no
P3 O33 . . 1.523(4) no
P3 O34 . . 1.542(3) no
P4 O41 . 7_555 1.531(4) no
P4 O42 . . 1.524(3) no
P4 O43 . . 1.573(3) no
P4 O44 . . 1.544(4) no
P5 O51 . . 1.536(3) no
P5 O52 . . 1.552(3) no
P5 O53 . . 1.561(3) no
P5 O54 . 6_545 1.531(3) no
P61 P62 . 6_555 0.821(5) no
P61 O61 . . 1.518(3) no
P61 O62 . 6_555 1.586(4) no
P61 O63 . . 1.512(5) no
P61 O614 . . 1.532(6) no
P62 O61 . 6_545 1.534(5) no
P62 O62 . . 1.521(7) no
P62 O63 . 6_545 1.445(7) no
P62 O624 . . 2.744(7) no
loop_
 _geom_angle_atom_site_label_1
 _geom_angle_atom_site_label_2
 _geom_angle_atom_site_label_3
 _geom_angle_site_symmetry_1
 _geom_angle_site_symmetry_2
 _geom_angle_site_symmetry_3
 _geom_angle
 _geom_angle_publ_flag
O12 Na1 O12 2_555 . 4_554 180 no
O12 Na1 O14 2_555 . 2_555 55.38(10) no
O12 Na1 O14 2_555 . 4_554 124.62(10) no
O12 Na1 O41 2_555 . 5_445 109.08(9) no
O12 Na1 O41 2_555 . 7_555 70.92(9) no
O12 Na1 O44 2_555 . . 105.93(9) no
O12 Na1 O44 2_555 . 3_555 74.07(9) no
O12 Na1 O12 4_554 . 2_555 180 no
O12 Na1 O14 4_554 . 2_555 124.62(10) no
O12 Na1 O14 4_554 . 4_554 55.38(10) no
O12 Na1 O41 4_554 . 5_445 70.92(9) no
O12 Na1 O41 4_554 . 7_555 109.08(9) no
O12 Na1 O44 4_554 . . 74.07(9) no
O12 Na1 O44 4_554 . 3_555 105.93(9) no
O14 Na1 O14 2_555 . 4_554 180 no
O14 Na1 O41 2_555 . 5_445 91.93(10) no
O14 Na1 O41 2_555 . 7_555 88.07(10) no
O14 Na1 O44 2_555 . . 68.92(9) no
O14 Na1 O44 2_555 . 3_555 111.08(9) no
O14 Na1 O14 4_554 . 2_555 180 no
O14 Na1 O41 4_554 . 5_445 88.07(10) no
O14 Na1 O41 4_554 . 7_555 91.93(10) no
O14 Na1 O44 4_554 . . 111.08(9) no
O14 Na1 O44 4_554 . 3_555 68.92(9) no
O41 Na1 O41 5_445 . 7_555 180 no
O41 Na1 O44 5_445 . . 118.09(11) no
```

```
O41 Na1 O44 5_445 . 3_555 61.91(11) no
O41 Na1 O41 7_555 . 5_445 180 no
O41 Na1 O44 7_555 . . 61.91(11) no
O41 Na1 O44 7_555 . 3_555 118.09(11) no
O44 Na1 O44 . . 3_555 180 no
O44 Na1 O44 3_555 . . 180 no
O11 Na2 O23 5_455 . . 163.8(3) no
O11 Na2 O24 5_455 . . 132.7(3) no
O11 Na2 O31 5_455 . 6_555 101.3(2) no
O11 Na2 O34 5_455 . 6_555 89.0(2) no
O11 Na2 O42 5_455 . . 97.1(2) no
O11 Na2 O43 5_455 . . 69.47(16) no
O23 Na2 O24 . . . 58.08(16) no
O23 Na2 O31 . . 6_555 81.19(18) no
O23 Na2 O34 . . 6_555 105.8(2) no
O23 Na2 O42 . . . 69.37(17) no
O23 Na2 O43 . . . 108.4(2) no
O24 Na2 O31 . . 6_555 112.6(2) no
O24 Na2 O34 . . 6_555 80.7(2) no
O24 Na2 O42 . . . 88.21(18) no
O24 Na2 O43 . . . 73.93(19) no
O31 Na2 O34 6_555 . 6_555 60.39(16) no
O31 Na2 O42 6_555 . . 126.9(3) no
O31 Na2 O43 6_555 . . 170.4(3) no
O34 Na2 O42 6_555 . . 168.8(3) no
O34 Na2 O43 6_555 . . 115.7(3) no
O42 Na2 O43 . . . 58.63(14) no
O22 K1 O22 . . 2_555 99.64(12) no
O22 K1 O24 . . . 51.57(9) no
O22 K1 O24 . . 2_555 80.76(11) no
O22 K1 O33 . . 5_455 171.10(12) no
O22 K1 O33 . . 6_555 72.91(10) no
O22 K1 O22 2_555 . . 99.64(12) no
O22 K1 O24 2_555 . . 80.76(11) no
O22 K1 O24 2_555 . 2_555 51.57(9) no
O22 K1 O33 2_555 . 5_455 72.91(10) no
O22 K1 O33 2_555 . 6_555 171.10(12) no
O24 K1 O24 . . 2_555 105.38(11) no
O24 K1 O33 . . 5_455 129.83(9) no
O24 K1 O33 . . 6_555 90.66(10) no
O24 K1 O24 2_555 . . 105.38(11) no
O24 K1 O33 2_555 . 5_455 90.66(10) no
O24 K1 O33 2_555 . 6_555 129.83(9) no
O33 K1 O33 5_455 . 6_555 114.91(12) no
O33 K1 O33 6_555 . 5_455 114.91(12) no
O22 K2 O22 . . 2_555 172.6(7) no
O22 K2 O24 . . . 67.57(12) no
O22 K2 O24 . . 2_555 111.97(13) no
O22 K2 O22 2_555 . . 172.6(7) no
O22 K2 O24 2_555 . . 111.97(13) no
O22 K2 O24 2_555 . 2_555 67.57(12) no
O24 K2 O24 . . 2_555 173.4(6) no
O24 K2 O24 2_555 . . 173.4(6) no
O13 Mn1 O22 . . . 171.51(12) no
O13 Mn1 O31 . . . 87.95(12) no
```

```
O13 Mn1 O54 . . . 85.40(12) no
O13 Mn1 O61 . . 6_545 85.49(11) no
O13 Mn1 O7 . . 6_555 89.00(10) no
O22 Mn1 O31 . . . 87.32(13) no
O22 Mn1 O54 . . . 97.70(13) no
O22 Mn1 O61 . . 6_545 87.69(12) no
O22 Mn1 O7 . . 6_555 99.22(12) no
O31 Mn1 O54 . . . 166.31(12) no
O31 Mn1 O61 . . 6_545 92.61(12) no
O31 Mn1 O7 . . 6_555 109.39(11) no
O54 Mn1 O61 . . 6_545 74.96(12) no
O54 Mn1 O7 . . 6_555 82.47(11) no
O61 Mn1 O7 6_545 . 6_555 157.12(12) no
O23 Mn2 O33 . . . 89.50(15) no
O23 Mn2 O42 . . . 84.26(12) no
O23 Mn2 O52 . . . 156.24(12) no
O23 Mn2 O63 . . . 72.14(13) no
O23 Mn2 O7 . . . 115.91(11) no
O33 Mn2 O42 . . . 171.97(16) no
O33 Mn2 O52 . . . 98.08(15) no
O33 Mn2 O63 . . . 85.41(14) no
O33 Mn2 O7 . . . 91.26(12) no
O42 Mn2 O52 . . . 89.63(12) no
O42 Mn2 O63 . . . 97.43(12) no
O42 Mn2 O7 . . . 86.95(10) no
O52 Mn2 O63 . . . 85.99(13) no
O52 Mn2 O7 . . . 86.55(11) no
O63 Mn2 O7 . . . 171.32(12) no
O21 Mn3 O23 6_555 . . 163.23(16) no
O21 Mn3 O31 6_555 . 6_555 94.13(12) no
O21 Mn3 O32 6_555 . . 80.00(12) no
O21 Mn3 O63 6_555 . . 109.90(16) no
O23 Mn3 O31 . . 6_555 94.06(12) no
O23 Mn3 O32 . . . 89.33(12) no
O23 Mn3 O63 . . . 82.83(14) no
O31 Mn3 O32 6_555 . . 168.71(15) no
O31 Mn3 O63 6_555 . . 100.84(15) no
O32 Mn3 O63 . . . 90.26(15) no
O12 Fe4 O21 . . 4_555 173.92(12) no
O12 Fe4 O32 . . 7_556 94.82(12) no
O12 Fe4 O44 . . 4_555 90.56(11) no
O12 Fe4 O62 . . 3_556 80.18(12) no
O12 Fe4 O7 . . 4_555 89.96(12) no
O21 Fe4 O32 4_555 . 7_556 80.10(13) no
O21 Fe4 O44 4_555 . 4_555 94.52(12) no
O21 Fe4 O62 4_555 . 3_556 103.25(14) no
O21 Fe4 O7 4_555 . 4_555 86.33(14) no
O32 Fe4 O44 7_556 . 4_555 174.62(13) no
O32 Fe4 O62 7_556 . 3_556 92.47(13) no
O32 Fe4 O7 7_556 . 4_555 85.54(13) no
O44 Fe4 O62 4_555 . 3_556 88.65(12) no
O44 Fe4 O7 4_555 . 4_555 94.26(13) no
O62 Fe4 O7 3_556 . 4_555 169.76(12) no
O14 Fe5 O24 . . 2_555 172.78(15) no
O14 Fe5 O43 . . 2_555 84.39(12) no
```

```
O14 Fe5 O44 . . 2_555 83.55(12) no
O14 Fe5 O54 . . . 93.99(12) no
O14 Fe5 O61 . . 6_545 87.57(13) no
O24 Fe5 O43 2_555 . 2_555 89.22(13) no
O24 Fe5 O44 2_555 . 2_555 90.66(13) no
O24 Fe5 O54 2_555 . . 90.90(13) no
O24 Fe5 O61 2_555 . 6_545 98.51(14) no
O43 Fe5 O44 2_555 . 2_555 64.16(10) no
O43 Fe5 O54 2_555 . . 105.02(12) no
O43 Fe5 O61 2_555 . 6_545 170.76(11) no
O44 Fe5 O54 2_555 . . 169.04(13) no
O44 Fe5 O61 2_555 . 6_545 110.43(11) no
O54 Fe5 O61 . . 6_545 80.05(12) no
O12 Fe6 O34 8_554 . 2_655 89.21(13) no
O12 Fe6 O41 8_554 . . 86.42(12) no
O12 Fe6 O52 8_554 . . 175.48(12) no
O12 Fe6 O53 8_554 . . 108.30(12) no
O12 Fe6 O62 8_554 . 6_555 82.57(12) no
O34 Fe6 O41 2_655 . . 167.29(14) no
O34 Fe6 O52 2_655 . . 91.08(13) no
O34 Fe6 O53 2_655 . . 89.99(11) no
O34 Fe6 O62 2_655 . 6_555 97.10(12) no
O41 Fe6 O52 . . . 92.34(12) no
O41 Fe6 O53 . . . 80.09(10) no
O41 Fe6 O62 . . 6_555 94.17(11) no
O52 Fe6 O53 . . . 67.18(12) no
O52 Fe6 O62 . . 6_555 101.87(13) no
O53 Fe6 O62 . . 6_555 167.17(11) no
O13 Fe7 O13 . . 7_556 90.04(14) no
O13 Fe7 O14 . . . 102.68(16) no
O13 Fe7 O51 . . 4_555 119.66(16) no
O13 Fe7 O61 . . 6_545 75.27(13) no
O13 Fe7 O614 . . 6_545 113.8(3) no
O13 Fe7 O13 7_556 . . 90.04(14) no
O13 Fe7 O14 7_556 . . 59.36(12) no
O13 Fe7 O51 7_556 . 4_555 87.31(15) no
O13 Fe7 O61 7_556 . 6_545 123.56(13) no
O13 Fe7 O614 7_556 . 6_545 154.5(3) no
O14 Fe7 O51 . . 4_555 126.1(2) no
O14 Fe7 O61 . . 6_545 71.15(13) no
O14 Fe7 O614 . . 6_545 104.4(2) no
O51 Fe7 O61 4_555 . 6_545 147.18(17) no
O51 Fe7 O614 4_555 . 6_545 88.3(2) no
O61 Fe7 O614 6_545 . 6_545 59.1(2) no
O11 Al1 O11 5_455 . 7_555 180 no
O11 Al1 O43 5_455 . . 89.01(11) no
O11 Al1 O43 5_455 . 3_565 90.99(11) no
O11 Al1 O53 5_455 . 5_455 87.93(13) no
O11 Al1 O53 5_455 . 7_555 92.07(13) no
O11 Al1 O11 7_555 . 5_455 180 no
O11 Al1 O43 7_555 . . 90.99(11) no
O11 Al1 O43 7_555 . 3_565 89.01(11) no
O11 Al1 O53 7_555 . 5_455 92.07(13) no
O11 Al1 O53 7_555 . 7_555 87.93(13) no
O43 Al1 O43 . . 3_565 180 no
```

```
O43 Al1 O53 . . 5_455 87.59(13) no
O43 Al1 O53 . . 7_555 92.41(13) no
O43 Al1 O43 3_565 . . 180 no
O43 Al1 O53 3_565 . 5_455 92.41(13) no
O43 Al1 O53 3_565 . 7_555 87.59(13) no
O53 Al1 O53 5_455 . 7_555 180 no
O53 Al1 O53 7_555 . 5_455 180 no
O41 Cr1 O41 . . 7_555 161.63(13) no
O41 Cr1 O42 . . . 140.52(13) no
O41 Cr1 O42 . . 7_555 61.04(11) no
O41 Cr1 O51 . . . 92.48(12) no
O41 Cr1 O51 . . 7_555 99.26(13) no
O41 Cr1 O52 . . . 74.59(11) no
O41 Cr1 O614 . . . 73.98(18) no
O41 Cr1 O41 7_555 . . 161.63(13) no
O41 Cr1 O42 7_555 . . 56.11(10) no
O41 Cr1 O42 7_555 . 7_555 101.36(10) no
O41 Cr1 O51 7_555 . . 79.26(10) no
O41 Cr1 O51 7_555 . 7_555 83.03(11) no
O41 Cr1 O52 7_555 . . 112.64(11) no
O41 Cr1 O614 7_555 . . 123.72(18) no
O42 Cr1 O42 . . 7_555 156.78(12) no
O42 Cr1 O51 . . . 87.02(13) no
O42 Cr1 O51 . . 7_555 97.19(14) no
O42 Cr1 O52 . . . 72.70(11) no
O42 Cr1 O614 . . . 76.8(2) no
O42 Cr1 O42 7_555 . . 156.78(12) no
O42 Cr1 O51 7_555 . . 82.70(12) no
O42 Cr1 O51 7_555 . 7_555 84.18(13) no
O42 Cr1 O52 7_555 . . 116.97(11) no
O42 Cr1 O614 7_555 . . 125.3(2) no
O51 Cr1 O51 . . 7_555 155.38(13) no
O51 Cr1 O52 . . . 55.74(9) no
O51 Cr1 O614 . . . 130.89(17) no
O51 Cr1 O51 7_555 . . 155.38(13) no
O51 Cr1 O52 7_555 . . 148.49(12) no
O51 Cr1 O614 7_555 . . 73.47(17) no
O52 Cr1 O614 . . . 75.16(16) no
O11 P1 O12 8_455 . . 110.57(18) no
O11 P1 O13 8_455 . 7_556 108.27(16) no
O11 P1 O14 8_455 . . 111.48(17) no
O12 P1 O13 . . 7_556 110.81(17) no
O12 P1 O14 . . . 108.85(17) no
O13 P1 O14 7_556 . . 106.80(18) no
O21 P2 O22 . . . 111.7(2) no
O21 P2 O23 . . . 107.7(2) no
O21 P2 O24 . . . 110.25(18) no
O22 P2 O23 . . . 110.02(19) no
O22 P2 O24 . . . 108.9(2) no
O23 P2 O24 . . . 108.18(19) no
O31 P3 O32 . . . 107.9(2) no
O31 P3 O33 . . . 109.5(2) no
O31 P3 O34 . . . 108.90(19) no
O32 P3 O33 . . . 111.0(2) no
O32 P3 O34 . . . 109.63(17) no
```

```
O33 P3 O34 . . . 109.9(2) no
O41 P4 O42 7_555 . . 109.1(2) no
O41 P4 O43 7_555 . . 111.98(16) no
O41 P4 O44 7_555 . . 111.17(17) no
O42 P4 O43 . . . 110.06(16) no
O42 P4 O44 . . . 111.51(17) no
O43 P4 O44 . . . 102.92(18) no
O51 P5 O52 . . . 108.94(17) no
O51 P5 O53 . . . 111.60(18) no
O51 P5 O54 . . 6_545 112.06(17) no
O52 P5 O53 . . . 101.95(17) no
O52 P5 O54 . . 6_545 112.89(19) no
O53 P5 O54 . . 6_545 109.00(17) no
O61 P61 O62 . . 6_555 108.5(2) no
O61 P61 O63 . . . 114.3(3) no
O61 P61 O614 . . . 107.8(3) no
O62 P61 O63 6_555 . . 109.1(2) no
O62 P61 O614 6_555 . . 111.7(3) no
O63 P61 O614 . . . 105.4(3) no
O61 P62 O62 6_545 . . 111.1(4) no
O61 P62 O63 6_545 . 6_545 117.4(4) no
O61 P62 O624 6_545 . . 153.0(3) no
O62 P62 O63 . . 6_545 116.6(3) no
O62 P62 O624 . . . 83.3(2) no
O63 P62 O624 6_545 . . 71.5(2) no
Mn1 O7 Mn2 6_545 . . 131.96(11) no
Mn1 O7 Fe4 6_545 . 4_554 112.61(14) no
Mn2 O7 Fe4 . . 4_554 111.24(14) no
```

## Claims

1. Use of an Arrojadite phosphate based compound as an electroactive material, said phosphate based compound comprising :

    - A: extractable cations used in charging and discharging and being at least one of Li, Na, K and Ag,

        - wherein up to 25 Mol-% of the compound may be present in each of the following categories:

            - elements of Group 1 of the periodic table of elements,
            - elements of Group 2 of the periodic table of elements,
            - elements of Group 13 of the periodic table of elements
            - elements of the group of transition metals, group 3 - 12 of the periodic table of elements, e. g. Mn, Fe, Ag
            - elements of Group 14 of the periodic table of elements, e. g. Pb

    - B: non-exchangeable cations from the transition metals, e. g. Fe, Mn, Co, Cr, Ti, V, Cu, Sc

        - wherein 9 Mol-% - 23 Mol-%, preferably 16 Mol-% of the compound may be present in each of the following categories:

            - elements of Group 1 of the periodic table of elements,
            - elements of Group 2 of the periodic table of elements,
            - elements of Group 13 of the periodic table of elements,
            - elements of the group of transition metals, group 3 - 12 of the periodic table of elements, e. g. Mn, Fe,
            - elements of Group 14 of the periodic table of elements, e. g. Pb

    - C: 60 Mol-% - 90 Mol-%, preferably 75 Mol-% of the compound is anionic in the form of phosphate $(PO_4)^{3-}$

anions, where oxygen is or may be partially substituted by a halide (e. g. $F^-$, $Cl^-$) and/or $OH^-$ to a maximum concentration of 10 Mol-% of the oxygen of the anions,

- wherein said phosphate $(PO_4)^{3-}$ anions may be partially substituted by one or more of:

  - $SiO_4^{4-}$ silicate,
  - $BO_3^{3-}$ borate,
  - $CO_3^{2-}$ carbonate,
  - $H_2O$ water

up to a maximum amount of < 31 Mol-% of the anions,

- said compound being in crystalline form and having open elongate channels extending through the unit cell of the structure and
- with the compound being present either in single crystal form or as an anisotropic microcrystalline or nanocrystalline material,
- wherein said compound in crystalline form has been treated to remove said extractable cations to leave open elongate channels extending through the unit cell of the compound, said elongate channels optionally being subsequently fillable with a desired species of cation.

**2.** Use in accordance with claim 1, wherein the compound additionally comprises at least one element selected from the group consisting of Group 2 of the periodic table of elements and aluminium.

**3.** Use in accordance with claim 1 or claim 2, wherein the element selected from the group of transition metals, group 3 - 12 of the periodic table of elements, comprises at least one of Sc, Ti, V, Cr, Mn, Fe, Co, Ni, Cu and Zn.

**4.** Use in accordance with any one of the preceding claims, wherein said electroactive material is used as an electrode material such as a cathode for a primary or secondary battery, or in another form of electrochemical storage device or as an anode for a primary or secondary battery.

**5.** Use in accordance with any one of the preceding claims 1 to 3, wherein said electroactive material is used in an electronically insulating form e.g. as a semipermeable membrane used as separator in an electrochemical cell or a battery.

**6.** Use in accordance with claim 4 wherein, in a lithium battery, the element selected for the exchangeable cations is Li, or, in a sodium battery, the element selected for the exchangeable cations is Na, or, in a potassium battery the element selected for the exchangeable cations is K, or, in a silver battery, the element selected for the exchangeable cations is Ag.

**7.** Use in accordance with any one of the preceding claims 1 to 3, wherein said electroactive material is comprised in an ion exchange material.

**8.** Use in accordance with any one of claims 1 to 3 wherein the phosphate based compound is prepared by a method comprising the steps of:

- removing from the earth in a suitable location, e. g. the Nickel Plate mine in South Dakota, USA or the Hagendorf mine in the Oberpfalz, Bavaria, Germany, a naturally occurring compound having the chemical composition of any one of claims 1 to 3 together with impurities,
- purification of the naturally occurring compound to remove the impurities, and
- chemically treating the naturally occurring compound, preferably after purification, to remove, so far as possible, mobile cations of the type A and the naturally occurring impurities to clean the open elongate channels extending through the unit cell of the structure.

**9.** Use in accordance with claim 8, wherein said purification process comprises a flotation process.

**10.** Use in accordance with any one of claims 1 to 3, wherein the compound is made by synthesis and is chemically treated to remove an element forming exchangeable cations, for example Li, Na, K, Ag and/or Al to unload or clean the elongate channels extending through the unit cell of the structure.

**11.** Use accordance with claim 10, wherein said synthesis:

is a hydrothermal synthesis, carried out using:

B: non-exchangeable cations, e.g. in the form of an oxide of one or more transition metals, group 3 - 12 of the periodic table of elements, e. g. $Fe_2O_3$
C: anions in the form of a phosphate, e. g. $(NH4)_2HPO_4$ or $(Na,K)_2HPO_4$,
A: exchangeable cations as a soluble salt of one of Li, Na, K and Ag , e. g. KCl, the method being carried out in a pressure vessel in the presence of water in a temperature range of 300° C - 600° C, e. g. 450° C with the initial concentration of the aqueous solution being selected so that the concentration of type A cations, e. g. KCl amounts to 30 - 70 wt%, preferably to about 50 wt% and with CsCl being present in an mount of 70 - 30 wt%, preferably e. g. 50 wt%.

**12.** Use in accordance with any one of claims 7 to 8, wherein said chemical treatment step is carried out using a complex forming agent, e. g. EDTA (2-[2-(Bis(carboxymethyl)amino)ethyl-(carboxymethyl)amino]acetic acid), pentan-2,4-dion (acetyl-acetone), crown-ethers e.g. 18-crown-6, or 1,5-diphenylthiocarbazon (dithizone).

**13.** Use in accordance with any one of claims 8 to 12 and including the further step of at least partially filling the open elongate channels with an active element selected from Group 1 of the periodic table of elements, e. g. Li, Na, K and Ag.

**14.** Use in accordance with claim 13, wherein said filling step is carried out by a chemical process e. g. by immersing the said compound in a salt melt, or by preparing the said compound in suspension or electrochemically.

**Patentansprüche**

**1.** Verwendung einer arrojaditphosphatbasierten Verbindung als elektroaktives Material, wobei die phosphatbasierte Verbindung umfasst:

- A: extrahierbare Kationen, die beim Laden und Entladen verwendet werden und zumindest eines von Li, Na, K und Ag sind,

  - wobei bis zu 25 Mol-% der Verbindung in jeder der folgenden Kategorien vorhanden sein können:

    - Elemente der Gruppe 1 des Periodensystems der Elemente,
    - Elemente der Gruppe 2 des Periodensystems der Elemente,
    - Elemente der Gruppe 13 des Periodensystems der Elemente,
    - Elemente der Gruppe der Übergangsmetalle, Gruppe 3 - 12 des Periodensystems der Elemente, z.B. Mn, Fe, Ag,
    - Elemente der Gruppe 14 des Periodensystems der Elemente, z.B. Pb,

- B: nicht austauschbare Kationen von den Übergangsmetallen, z.B. Fe, Mn, Co, Cr, Ti, V, Cu, Sc,

  - wobei 9 Mol-% - 23 Mol-%, bevorzugt 16 Mol-% der Verbindung in jeder der folgenden Kategorien vorhanden sein können:

    - Elemente der Gruppe 1 des Periodensystems der Elemente,
    - Elemente der Gruppe 2 des Periodensystems der Elemente,
    - Elemente der Gruppe 13 des Periodensystems der Elemente,
    - Elemente der Gruppe der Übergangsmetalle, Gruppe 3 - 12 des Periodensystems der Elemente, z.B. Mn, Fe,
    - Elemente der Gruppe 14 des Periodensystems der Elemente, z.B. Pb,

- C: 60 Mol-% - 90 Mol-%, bevorzugt 75 Mol-% der Verbindung anionisch in der Form von Phosphat-$(PO_4)^{3-}$-Anionen ist, wobei Sauerstoff durch ein Halid (z.B. $F^-$, $Cl^-$) und/oder $OH^-$ zu einer maximalen Konzentration von 10 Mol-% des Sauerstoffs der Anionen teilweise substituiert ist oder sein kann,

- wobei die Phosphat-$(PO_4)^{3-}$-Anionen teilweise substituiert sein können durch eines oder mehrere von

  - $SiO_4^{4-}$ Silikat,
  - $BO_3^{3-}$ Borat,
  - $CO_3^{2-}$ Carbonat,
  - $H_2O$ Wasser

bis zu einer Menge < 31 Mol-% der Anionen,

- die Verbindung in kristalliner Form vorliegt und offene längliche Kanäle aufweist, die sich durch die Einheitszelle der Struktur erstrecken, und
- wobei die Verbindung entweder in einkristalliner Form oder als ein anisotropes mikrokristallines oder nanokristallines Material vorliegt,
- wobei die Verbindung in kristalliner Form behandelt worden ist, um die extrahierbaren Kationen zu entfernen und somit offene längliche Kanäle zurückzulassen, die sich durch die Einheitszelle der Verbindung erstrecken, wobei die länglichen Kanäle optional anschließend mit einer gewünschten Kationenart füllbar sind.

**2.** Verwendung nach Anspruch 1, wobei die Verbindung zusätzlich zumindest ein Element umfasst, das aus der Gruppe ausgewählt ist, die aus der Gruppe 2 des Periodensystems der Elemente und Aluminium besteht.

**3.** Verwendung nach Anspruch 1 oder Anspruch 2, wobei das Element, das aus der Gruppe der Übergangsmetalle, Gruppe 3 - 12 des Periodensystems der Elemente, ausgewählt ist, zumindest eines von Sc, Ti, V, Cr, Mn, Fe, Co, Ni, Cu und Zn umfasst.

**4.** Verwendung nach einem der vorhergehenden Ansprüche, wobei das elektroaktive Material als ein Elektrodenmaterial, wie etwa eine Kathode, für eine primäre oder sekundäre Batterie, oder in einer anderen Form einer elektrochemischen Speichereinrichtung oder als eine Anode für eine primäre oder sekundäre Batterie verwendet wird.

**5.** Verwendung nach einem der vorhergehenden Ansprüche 1 bis 3, wobei das elektroaktive Material in einer elektrisch isolierenden Form verwendet wird, z.B. als eine halbdurchlässige Membran, die als ein Separator in einer elektrochemischen Zelle oder einer Batterie verwendet wird.

**6.** Verwendung nach Anspruch 4, wobei, in einer Lithiumbatterie, das Element, das für die austauschbaren Kationen ausgewählt wird, Li ist, oder, in einer Natriumbatterie, das Element, das für die austauschbaren Kationen ausgewählt wird, Na ist, oder, in einer Kaliumbatterie, das Element, das für die austauschbaren Kationen ausgewählt wird, K ist, oder, in einer Silberbatterie, das Element, das für die austauschbaren Kationen ausgewählt wird, Ag ist.

**7.** Verwendung nach einem der vorhergehenden Ansprüche 1 bis 3, wobei das elektroaktive Material in einem Ionenaustauschmaterial enthalten ist.

**8.** Verwendung nach einem der Ansprüche 1 bis 3, wobei die phosphatbasierte Verbindung durch ein Verfahren hergestellt wird, das die Schritte umfasst:

- Entnahme aus der Erde an einem geeigneten Ort, z.B. der Nickel Plate Mine in South Dakota, USA, oder der Hagendorf-Mine in der Oberpfalz, Bayern, Deutschland, einer natürlich auftretenden Verbindung mit der chemischen Zusammensetzung nach einem der Ansprüche 1 bis 3 zusammen mit Fremdstoffen,
- Reinigung der natürlich auftretenden Verbindung, um die Fremdstoffe zu entfernen, und
- chemisches Behandeln der natürlich auftretenden Verbindung, bevorzugt nach der Reinigung, um so weit wie möglich mobile Kationen des Typs A und die natürlich auftretenden Fremdstoffe zu entfernen und somit die offenen länglichen Kanäle, die sich durch die Einheitszelle der Struktur erstrecken, freizumachen.

**9.** Verwendung nach Anspruch 8, wobei der Reinigungsprozess einen Flotationsprozess umfasst.

**10.** Verwendung nach einem der Ansprüche 1 bis 3, wobei die Verbindung durch Synthese hergestellt und chemisch behandelt wird, um ein Element, das austauschbare Kationen bildet, zum Beispiel Li, Na, K, Ag und/oder Al, zu entfernen und somit die länglichen Kanäle, die sich durch die Einheitszelle der Struktur erstrecken, zu leeren oder freizumachen.

**11.** Verwendung nach Anspruch 10, wobei die Synthese eine hydrothermale Synthese ist, ausgeführt unter Verwendung:

B: nicht austauschbarer Kationen, z.B. in der Form eines Oxids von einem oder mehreren Übergangsmetallen, Gruppe 3 - 12 des Periodensystems der Elemente, z.B. $Fe_2O_3$,
C: Anionen in der Form eines Phosphats, z.B. $(NH4)_2HPO_4$ oder $(Na,K)_2HPO_4$,
A: austauschbarer Kationen als lösliches Salz von einem von Li, Na, K und Ag, z.B. KCl, wobei das Verfahren in einem Druckgefäß in Gegenwart von Wasser in einem Temperaturbereich von 300°C - 600°C, z.B. 450°C, ausgeführt wird, wobei die Anfangskonzentration der wässrigen Lösung derart gewählt wird, dass die Konzentration von Kationen des Typs A, z.B. KCl bis zu 30 - 70 Gew.-%, bevorzugt bis etwa 50 Gew.-% beträgt, und wobei CsCl in einer Menge von 70 - 30 Gew.-%, bevorzugt z.B. 50 Gew.-% vorhanden ist.

**12.** Verwendung nach einem der Ansprüche 7 bis 8, wobei der chemische Behandlungsschritt unter Verwendung eines komplexbildenden Mittels, z.B. EDTA (2-[2-(Bis(carboxymethyl)amino)ethyl-(carboxymethyl)amino]essigsäure, Pentan-2,4-dion(acetyl-aceton), Kronenether, z.B. 18-Krone-6, oder 1,5-Diphenylthiocarbazon(dithizon) ausgeführt wird.

**13.** Verwendung nach einem der Ansprüche 8 bis 12 und mit dem weiteren Schritt eines zumindest teilweisen Füllens der offenen länglichen Kanäle mit einem aktiven Element, das aus der Gruppe 1 des Periodensystems der Elemente ausgewählt ist, z.B. Li, Na, K und Ag.

**14.** Verwendung nach Anspruch 13, wobei der Füllschritt durch einen chemischen Prozess, z.B. durch Eintauchen der Verbindung in eine Salzschmelze oder durch Herstellen der Verbindung in Suspension oder elektrochemisch ausgeführt wird.

## Revendications

**1.** Utilisation d'un composé à base de phosphate d'arrojadite en tant que matériau électro-actif, ledit composé à base de phosphate comprenant :

- A : des cations extractibles utilisés dans la charge et la décharge et étant au moins l'un parmi Li, Na, K et Ag,

  - dans lequel jusqu'à 25 % en mol du composé peuvent être présents dans chacune des catégories suivantes :

    - éléments du Groupe 1 du tableau périodique des éléments,
    - éléments du Groupe 2 du tableau périodique des éléments,
    - éléments du Groupe 13 du tableau périodique des éléments,
    - éléments du groupe des métaux de transition, Groupes 3 à 12 du tableau périodique des éléments, par exemple Mn, Fe, Ag,
    - éléments du Groupe 14 du tableau périodique des éléments, par exemple Pb,

- B : des cations non échangeables provenant des métaux de transition, par exemple Fe, Mn, Co, Cr, Ti, V, Cu, Sc,

  - dans lequel 9 % en mol à 23 % en mol, de préférence 16 % en mol du composé peuvent être présents dans chacune des catégories suivantes :

    - éléments du Groupe 1 du tableau périodique des éléments,
    - éléments du Groupe 2 du tableau périodique des éléments,
    - éléments du Groupe 13 du tableau périodique des éléments,
    - éléments du groupe des métaux de transition, Groupes 3 à 12 du tableau périodique des éléments, par exemple Mn, Fe,
    - éléments du Groupe 14 du tableau périodique des éléments, par exemple Pb,

- C : 60 % en mol à 90 % en mol, de préférence 75 % en mol du composé sont anioniques sous la forme d'anions de phosphate $(PO_4)^{3-}$, où l'oxygène est ou peut être partiellement remplacé par un halogénure (par exemple $F^-$, $Cl^-$) et/ou $OH^-$ à une concentration maximale de 10 % en mol d'oxygène des anions,

- dans lequel lesdits anions de phosphate $(PO_4)^{3-}$ peuvent être partiellement remplacés par un ou plusieurs des éléments suivants :

  - silicate $SiO_4^{4-}$,
  - borate $BO_3^{3-}$,
  - carbonate $CO_3^{2-}$,
  - eau $H_2O$

jusqu'à une quantité maximale de < 31 % en mol des anions,

- ledit composé étant sous une forme cristalline et ayant des canaux oblongs ouverts s'étendant à travers la cellule unitaire de la structure, et
- le composé étant présent soit sous forme mono-cristalline soit sous forme de matériau anisotrope microcristallin ou nano-cristallin,
- dans laquelle ledit composé sous une forme cristalline a été traité pour enlever lesdits cations extractibles afin de laisser des canaux oblongs ouverts s'étendant à travers la cellule unitaire du composé, lesdits canaux oblongs pouvant être éventuellement remplis ultérieurement par une espèce souhaitée de cation.

**2.** Utilisation selon la revendication 1, dans laquelle le composé comprend en plus au moins un élément choisi dans le groupe se composant du Groupe 2 du tableau périodique des éléments et de l'aluminium.

**3.** Utilisation selon la revendication 1 ou la revendication 2, dans laquelle l'élément choisi dans le groupe des métaux de transition, Groupes 3 à 12 du tableau périodique des éléments, comprend au moins l'un parmi Sc, Ti, V, Cr, Mn, Fe, Co, Ni, Cu et Zn.

**4.** Utilisation selon l'une quelconque des revendications précédentes, dans laquelle ledit matériau électro-actif est utilisé comme matériau d'électrode tel qu'une cathode pour une batterie primaire ou secondaire, ou sous une autre forme de dispositif de stockage électrochimique ou tel qu'une anode pour une batterie primaire ou secondaire.

**5.** Utilisation selon l'une quelconque des revendications précédentes 1 à 3, dans laquelle ledit matériau électro-actif est utilisé sous une forme électroniquement isolante par exemple en tant que membrane semi-perméable utilisée comme séparateur dans une pile électrochimique ou une batterie.

**6.** Utilisation selon la revendication 4, dans laquelle, dans une batterie au lithium, l'élément choisi pour les cations échangeables est Li, ou, dans une batterie au sodium, l'élément choisi pour les cations échangeables est Na, ou, dans une batterie au potassium, l'élément choisi pour les cations échangeables est K, ou dans une batterie à l'argent, l'élément choisi pour les cations échangeables est Ag.

**7.** Utilisation selon l'une quelconque des revendications précédentes 1 à 3, dans laquelle ledit matériau électro-actif est compris dans un matériau d'échange ionique.

**8.** Utilisation selon l'une quelconque des revendications 1 à 3, dans laquelle le composé à base de phosphate est préparé par un procédé comprenant les étapes de :

- retrait de la terre à un endroit approprié, par exemple la mine de plaque de nickel du Dakota du Sud, USA, ou la mine d'Hagendorf, Haut Palatinat, Bavière, Allemagne, d'un composé présent naturellement ayant la composition chimique selon l'une quelconque des revendications 1 à 3 conjointement avec des impuretés,
- purification du composé présent naturellement pour retirer les impuretés, et
- traitement chimique du composé présent naturellement, de préférence après purification, pour retirer autant que possible les cations mobiles de type A et les impuretés présentes naturellement pour nettoyer les canaux oblongs ouverts s'étendant à travers l'unité cellulaire de la structure.

**9.** Utilisation selon la revendication 8, dans laquelle ledit procédé de purification comprend un procédé de flottation.

**10.** Utilisation selon l'une quelconque des revendications 1 à 3, dans laquelle le composé est fabriqué par synthèse et est traité chimiquement pour retirer un élément formant des cations échangeables, par exemple Li, Na, K, Ag et/ou Al pour décharger ou nettoyer les canaux oblongs s'étendant à travers l'unité cellulaire de la structure.

**11.** Utilisation selon la revendication 10, dans laquelle ladite synthèse est une synthèse hydrothermale, réalisée en utilisant :

B : des cations non échangeables, par exemple sous la forme d'un oxyde d'un ou de plusieurs métaux de transition, Groupes 3 à 12 du tableau périodique des éléments, par exemple $Fe_2O_3$,
C : des anions sous la forme d'un phosphate, par exemple $(NH_4)_2HPO_4$ ou $(Na,K)_2HPO_4$,
A : des cations échangeables sous forme d'un sel soluble de l'un parmi Li, Na, K et Ag, par exemple KCl, le procédé étant réalisé dans une cuve sous pression en présence d'eau dans une plage de températures allant de 300°C à 600°C, par exemple à 450°C, la concentration initiale en solution aqueuse étant choisie de sorte que la concentration en cations de type A, par exemple KCl, s'élève à 30 à 70 % en poids, de préférence à environ 50 % en poids et CsCl soit présent en une quantité de 70 à 30 % en poids, de préférence par exemple 50 % en poids.

**12.** Utilisation selon l'une quelconque des revendications 7 à 8, dans laquelle ladite étape de traitement chimique est réalisée en utilisant un agent complexant, par exemple l'EDTA (acide 2-[2-(bis(carboxyméthyl)amino)éthyl-(carboxyméthyl)amino]-acétique), la pentane-2,4-dione (acétyl-acétone), les éthers couronnes par exemple l'éther 18-couronne-6, ou la 1,5-diphénylthiocarbazone (dithizone).

**13.** Utilisation selon l'une quelconque des revendications 8 à 12 et comprenant l'étape ultérieure de remplissage au moins partiel des canaux oblongs ouverts par un élément actif choisi dans le Groupe 1 du tableau périodique des éléments, par exemple Li, Na, K et Ag.

**14.** Utilisation selon la revendication 13, dans laquelle ladite étape de remplissage est réalisée par un procédé chimique, par exemple par immersion dudit composé dans une matière fondue de sel, ou par préparation dudit composé en suspension ou électrochimiquement.

Krutik, V.M.;Pushcharovskii, D.Yu.;Pobedimskaya, E.A.;Belov, N.V. "Crystal structure of arrojadite", Kristallografiya 24, 743-750, 1979
ICSD CC=201275

Merlino, S.;Mellini, M.;Zanazzi, P.F. "Structure of arrojadite, K Na4 Ca Mn4 Fe10 Al (P O4)12 (O H)2" Acta Crystallographica B37, 1733-1736, 1981
ICSD CC=31752

Moore, P.B.;Araki, T.;Merlino, S.;Mellini, M.;Zanazzi, P.F.
"The Arrojdite - Dickinsonite series, K Na4 Ca (Fe, Mn)14 Al (O H)2 (P O4)12: crystal structure and crystal chemistry", American Mineralogist 66, 1034-1049, 1981
ICSD CC=100871, CC=100872

Yakubovich, O.V.;Matvienko, E.N.;Simonov, M.A.;Mel'nikov, O.K.
"Crystal structure of synthetic Fe3+arrojadite, with the ideal formula K2 Na5 Fe14 Fe (P O4)12 (O H)2", Vestnik Moskovskogo Universiteta, Geologiya 41, 36-47, 1986
ICSD CC=56299

Camara, F.;Oberti, R.;Chopin, C.;Medenbach, O.
"The arrojadite enigma: I. A new formula and a new model for the arrojadite structure", American Mineralogist 91, 1249-1259, 2006
ICSD CC=156571

**FIG. 1**

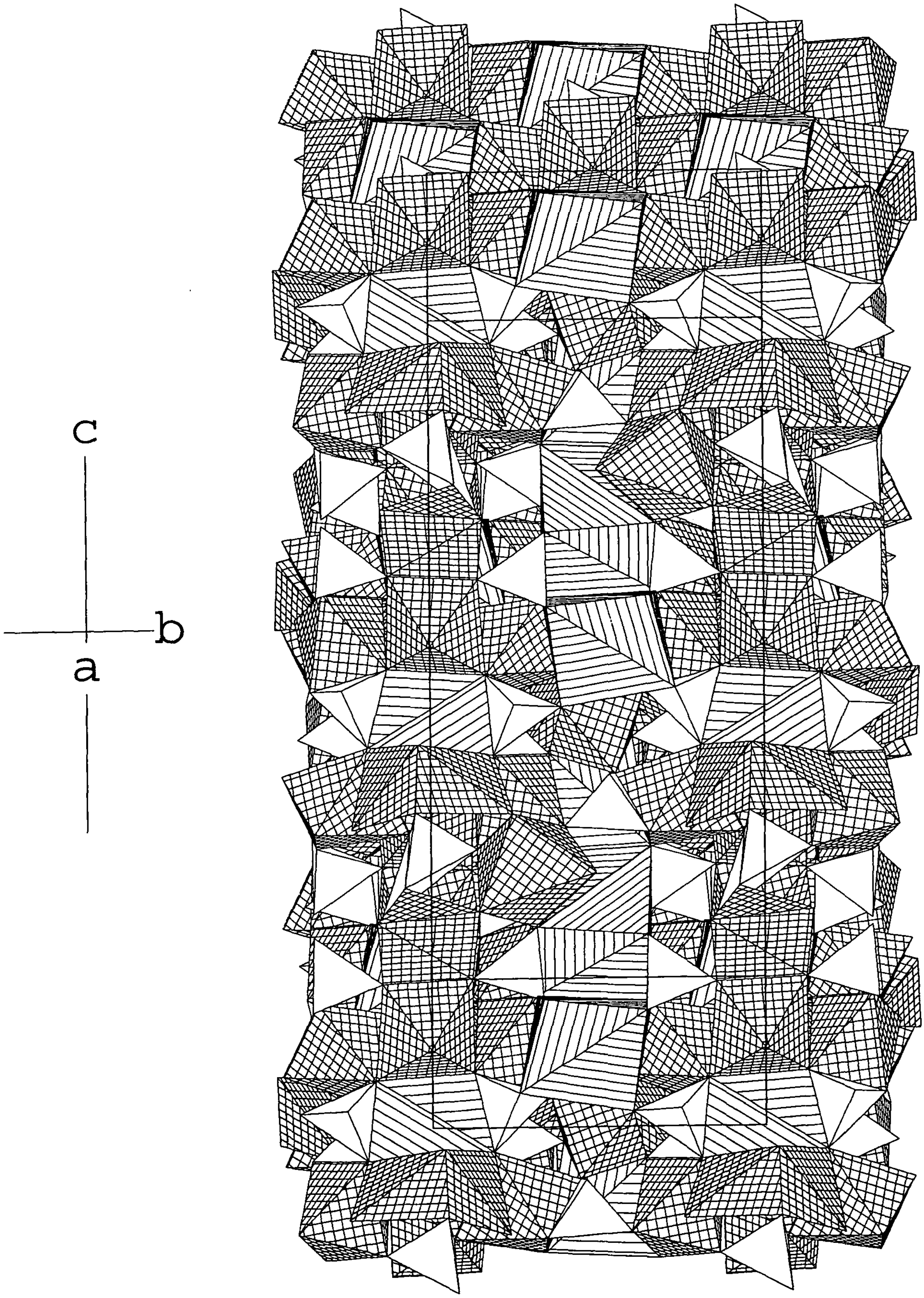


FIG 2A

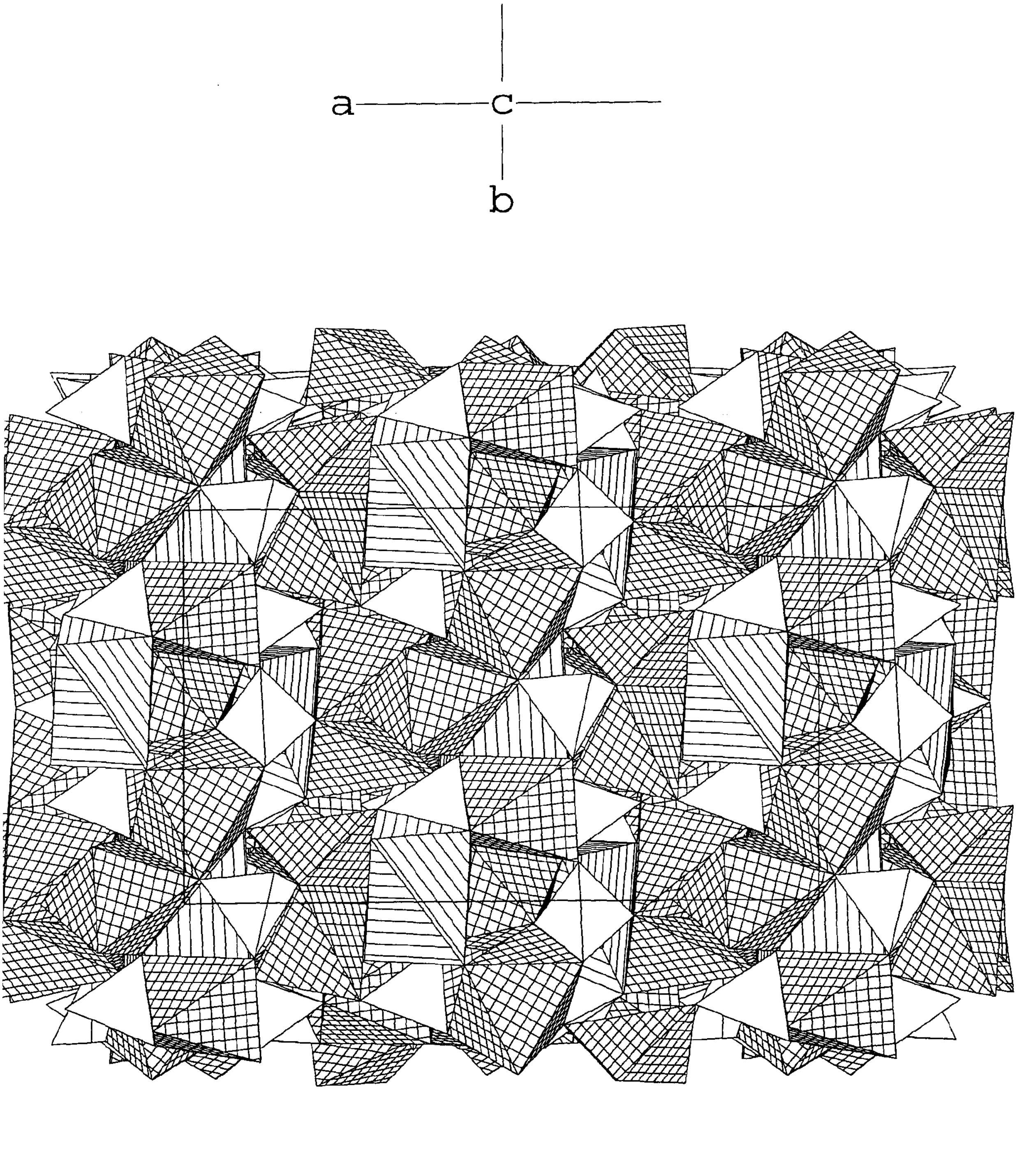


FIG 2B

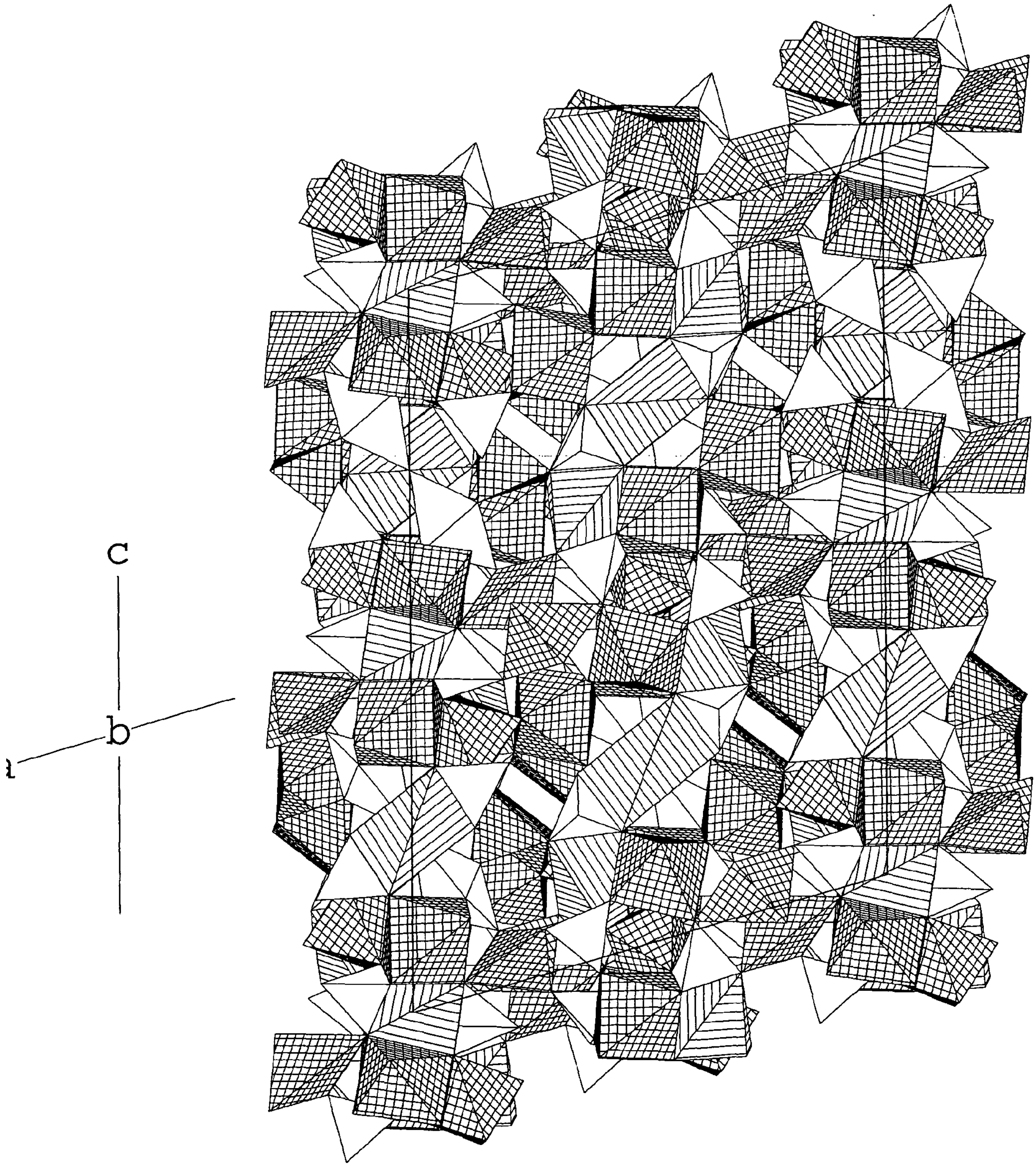


FIG. 2C

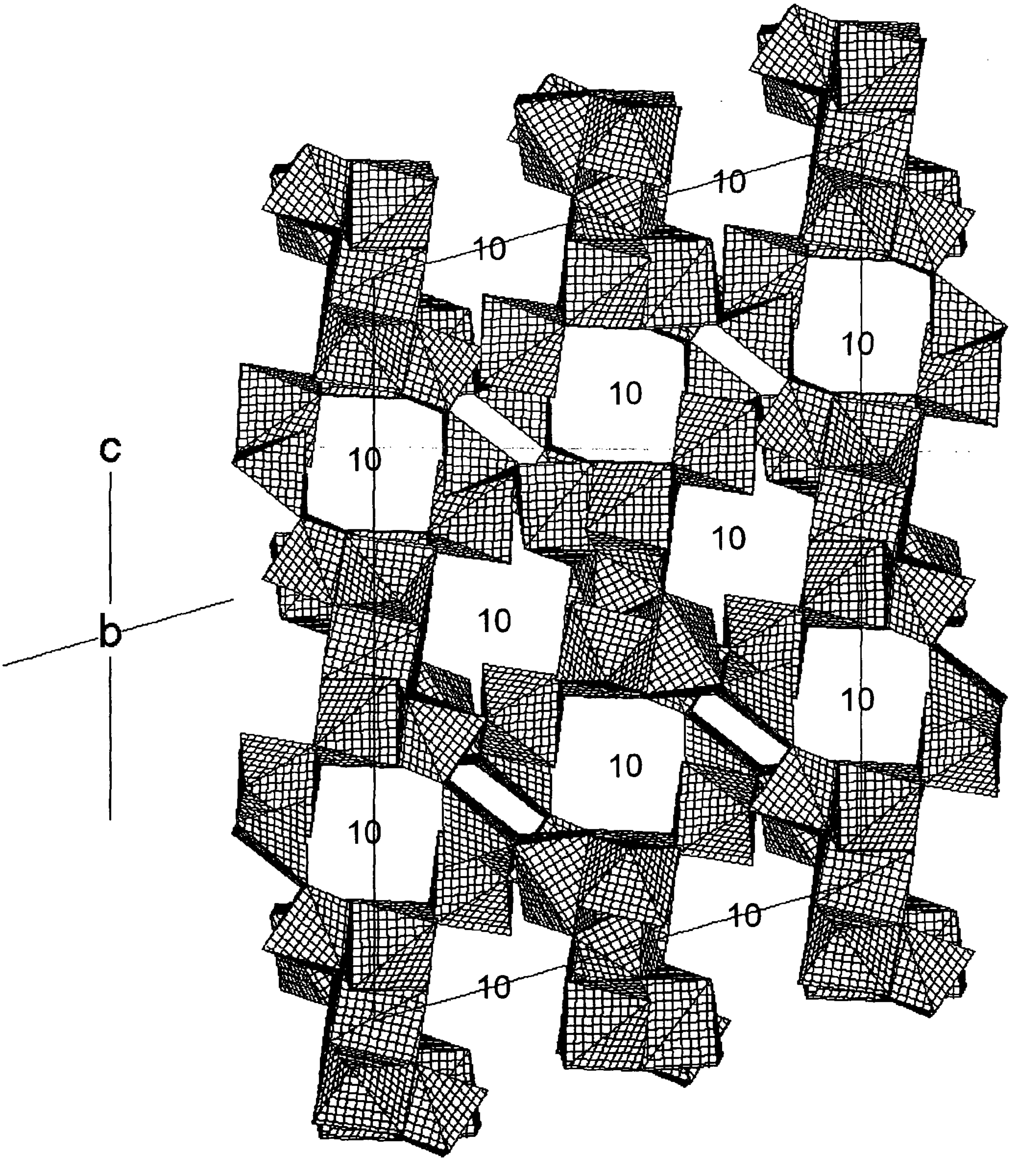


FIG 2D

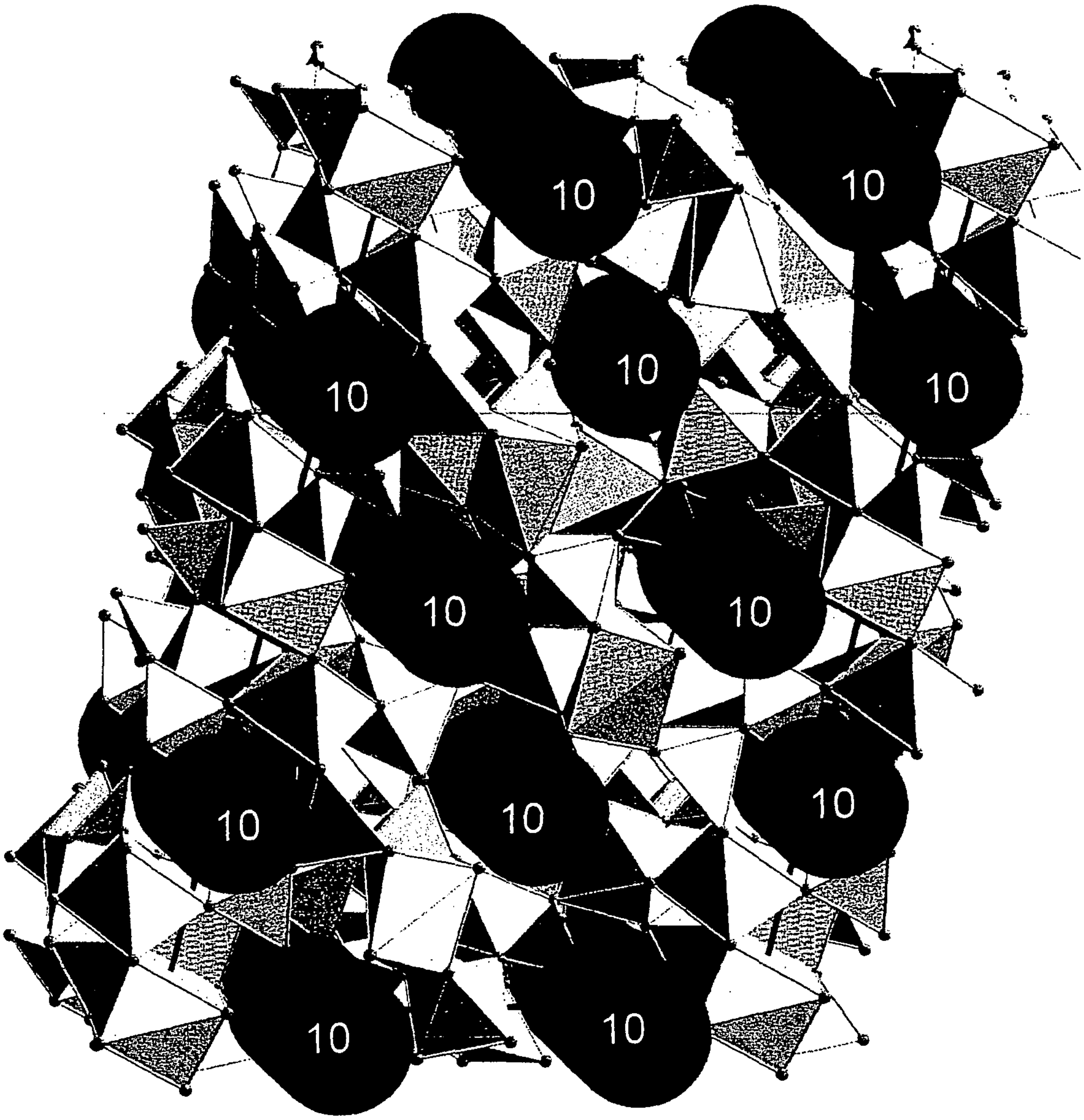


FIG 2E

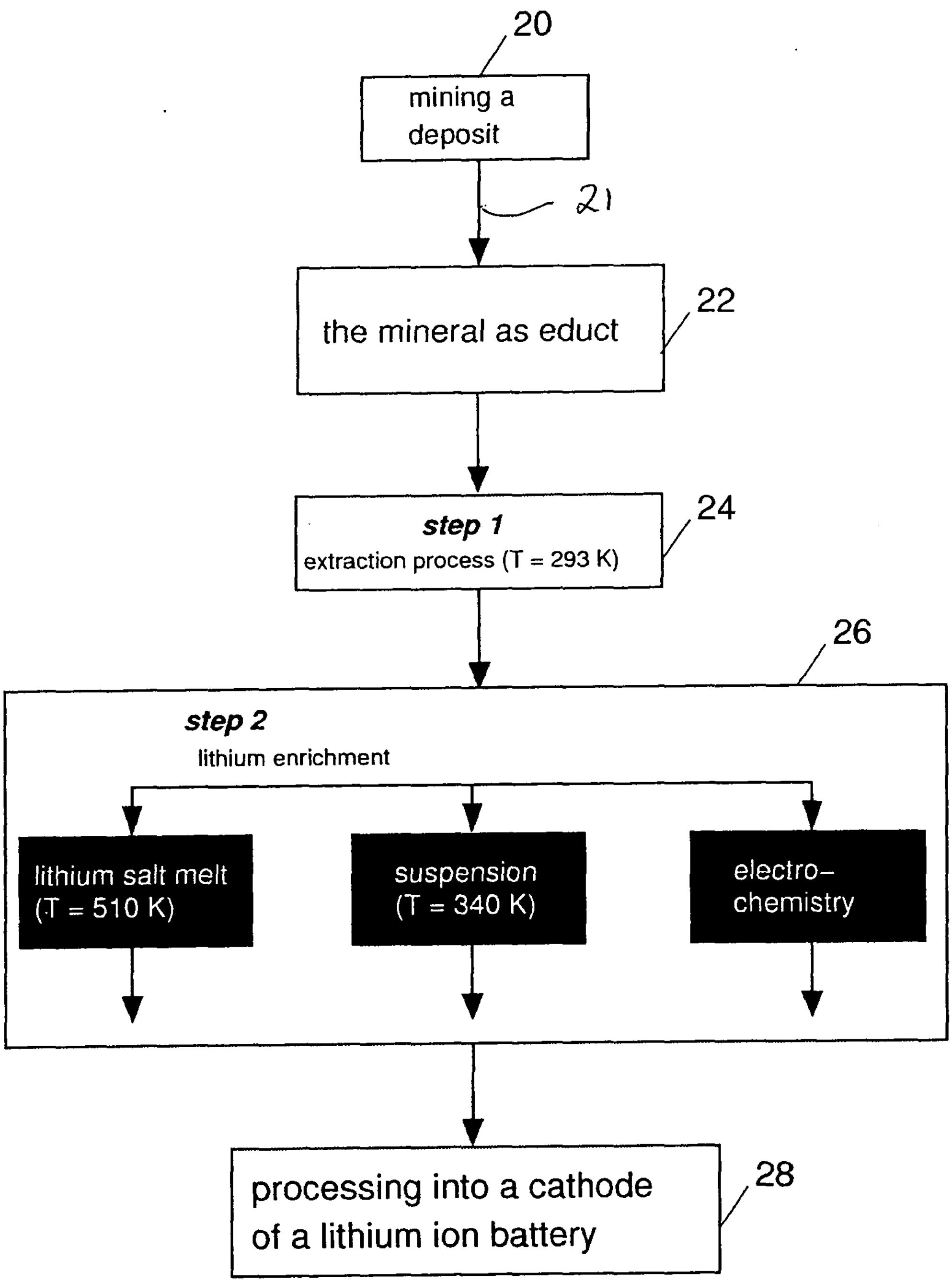
20
mining a deposit
21
the mineral as educt
22
step 1
extraction process (T = 293 K)
24
26
step 2
lithium enrichment
lithium salt melt (T = 510 K)
suspension (T = 340 K)
electro-chemistry
processing into a cathode of a lithium ion battery
28

FIG. 3A

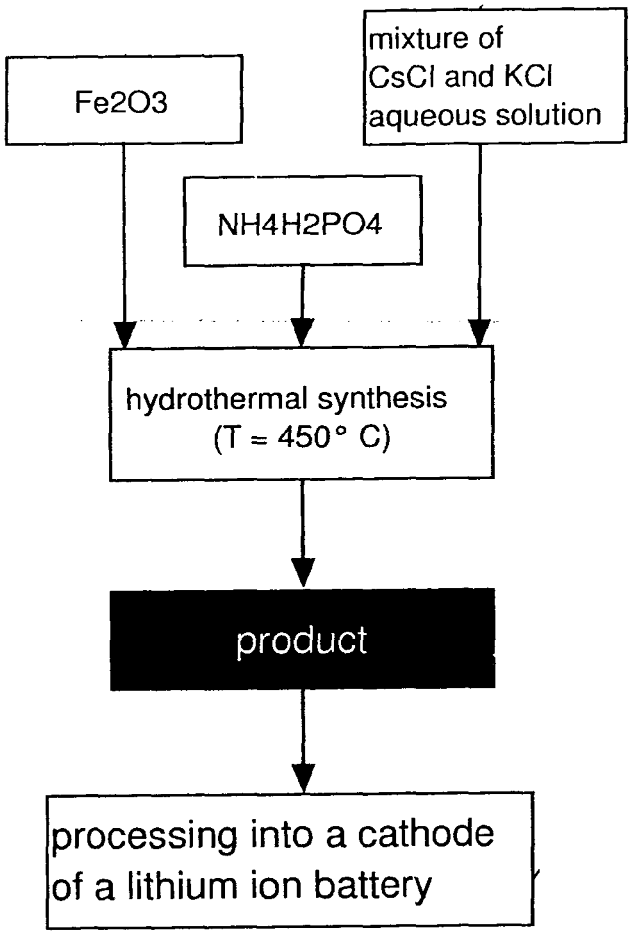
Fe2O3
mixture of CsCl and KCl aqueous solution
NH4H2PO4
hydrothermal synthesis (T = 450° C)
product
processing into a cathode of a lithium ion battery

FIG 3B

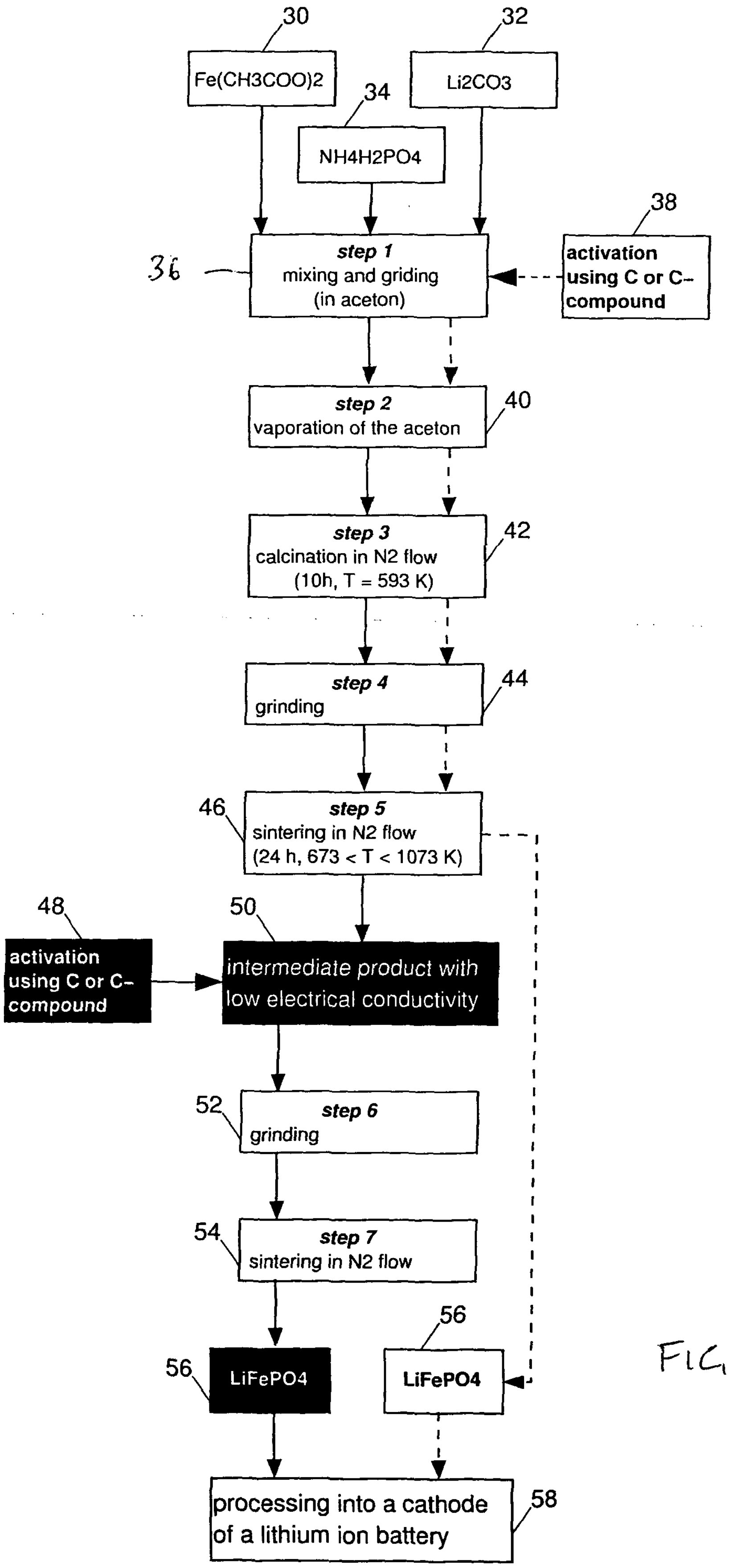
30
32
Fe(CH3COO)2
34
Li2CO3
NH4H2PO4
38
36
step 1
mixing and griding
(in aceton)
activation
using C or C-
compound
step 2
vaporation of the aceton
40
step 3
calcination in N2 flow
(10h, T = 593 K)
42
step 4
grinding
44
46
step 5
sintering in N2 flow
(24 h, 673 < T < 1073 K)
48
50
activation
using C or C-
compound
intermediate product with
low electrical conductivity
52
step 6
grinding
54
step 7
sintering in N2 flow
56
56
LiFePO4
LiFePO4
processing into a cathode
of a lithium ion battery
58

FIG. 3C

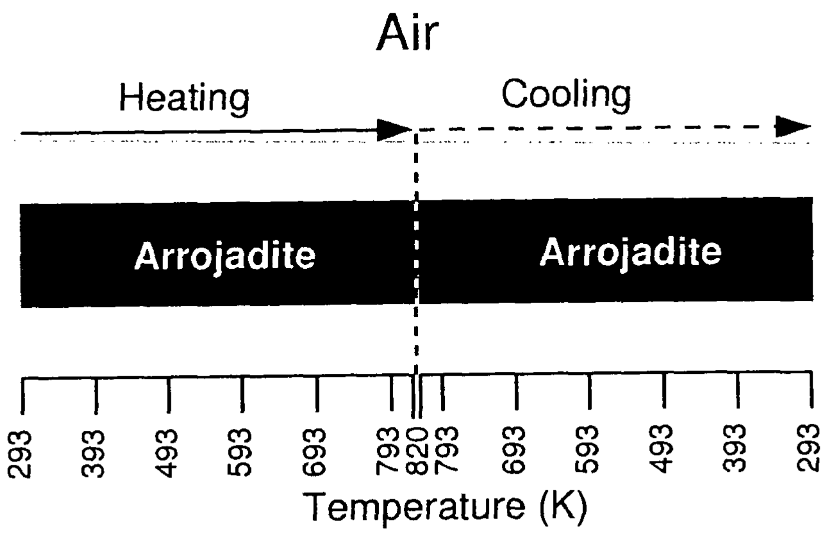
Air
Heating
Cooling
Arrojadite
Arrojadite
293
393
493
593
693
793
820
793
693
593
493
393
293
Temperature (K)

FIG. 4A

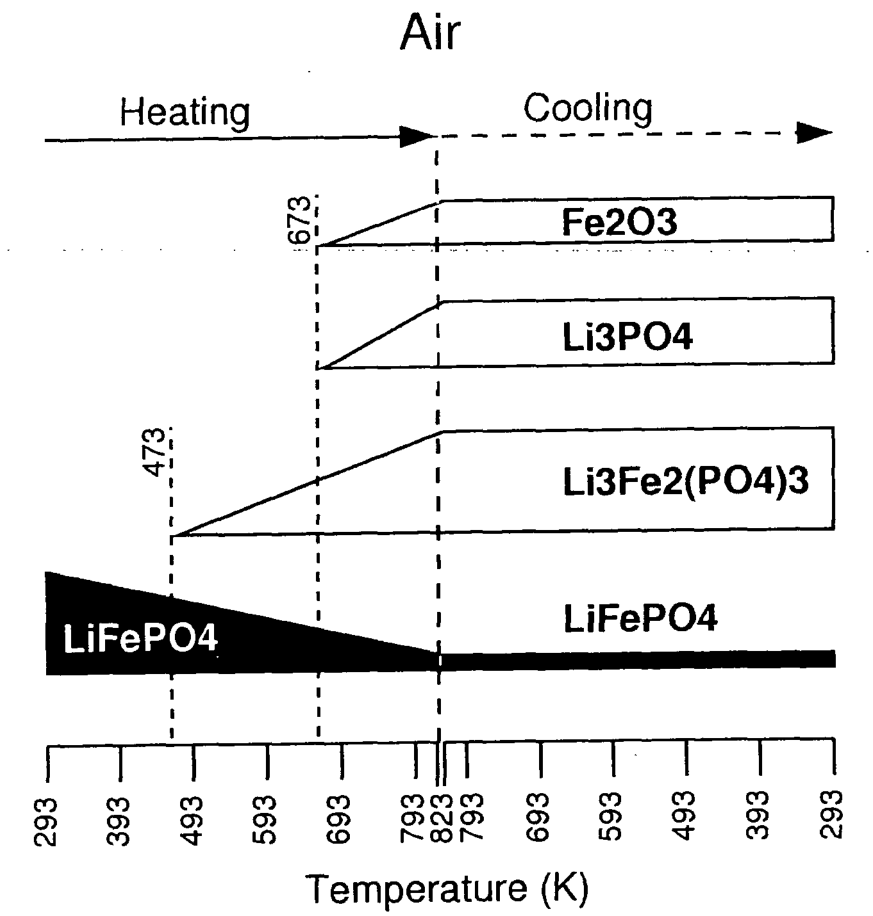
Air
Heating
Cooling
673
Fe2O3
Li3PO4
473
Li3Fe2(PO4)3
LiFePO4
LiFePO4
293
393
493
593
693
793
823
793
693
593
493
393
293
Temperature (K)

FIG 4B

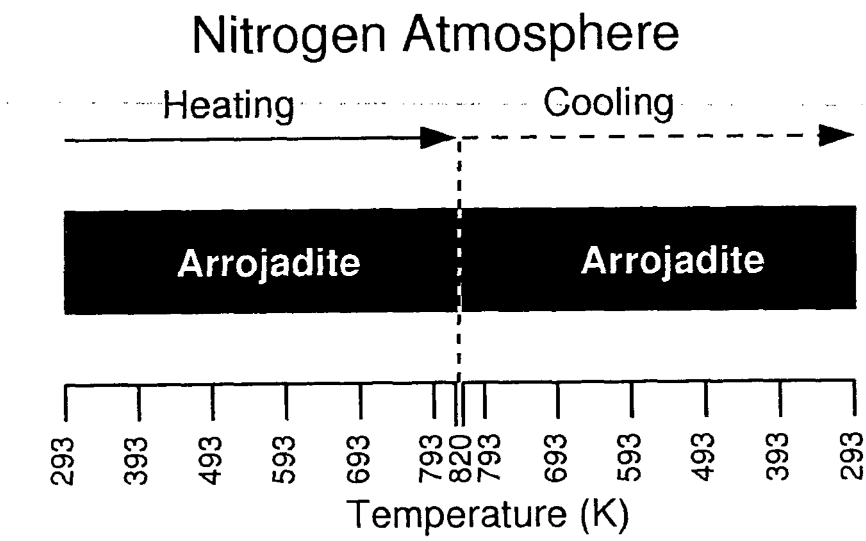
Nitrogen Atmosphere
Heating
Cooling
Arrojadite
Arrojadite
293
393
493
593
693
793
820
793
693
593
493
393
293
Temperature (K)

FIG. 5A

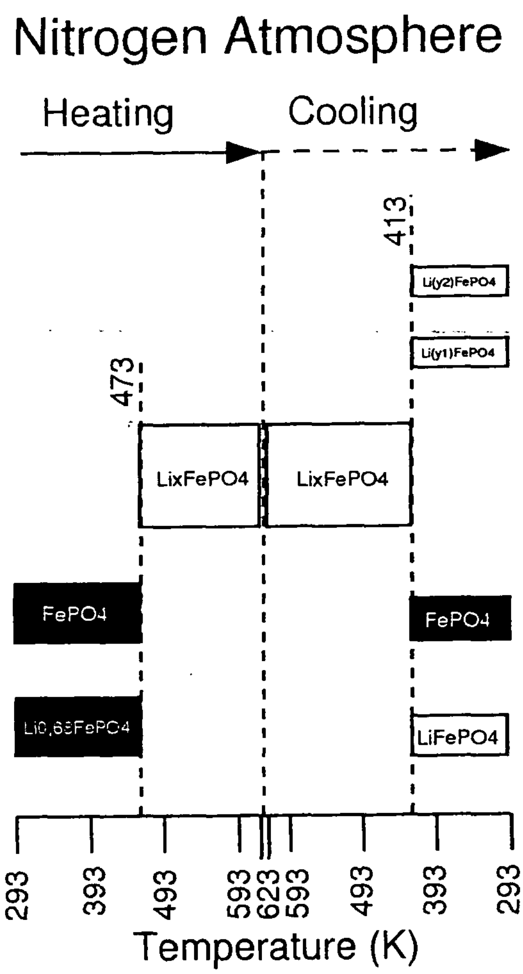
Nitrogen Atmosphere
Heating
Cooling
413
473
Li(y2)FePO4
Li(y1)FePO4
LixFePO4
LixFePO4
FePO4
FePO4
LiFePO4
293
393
493
593
623
593
493
393
293
Temperature (K)

FIG 5B

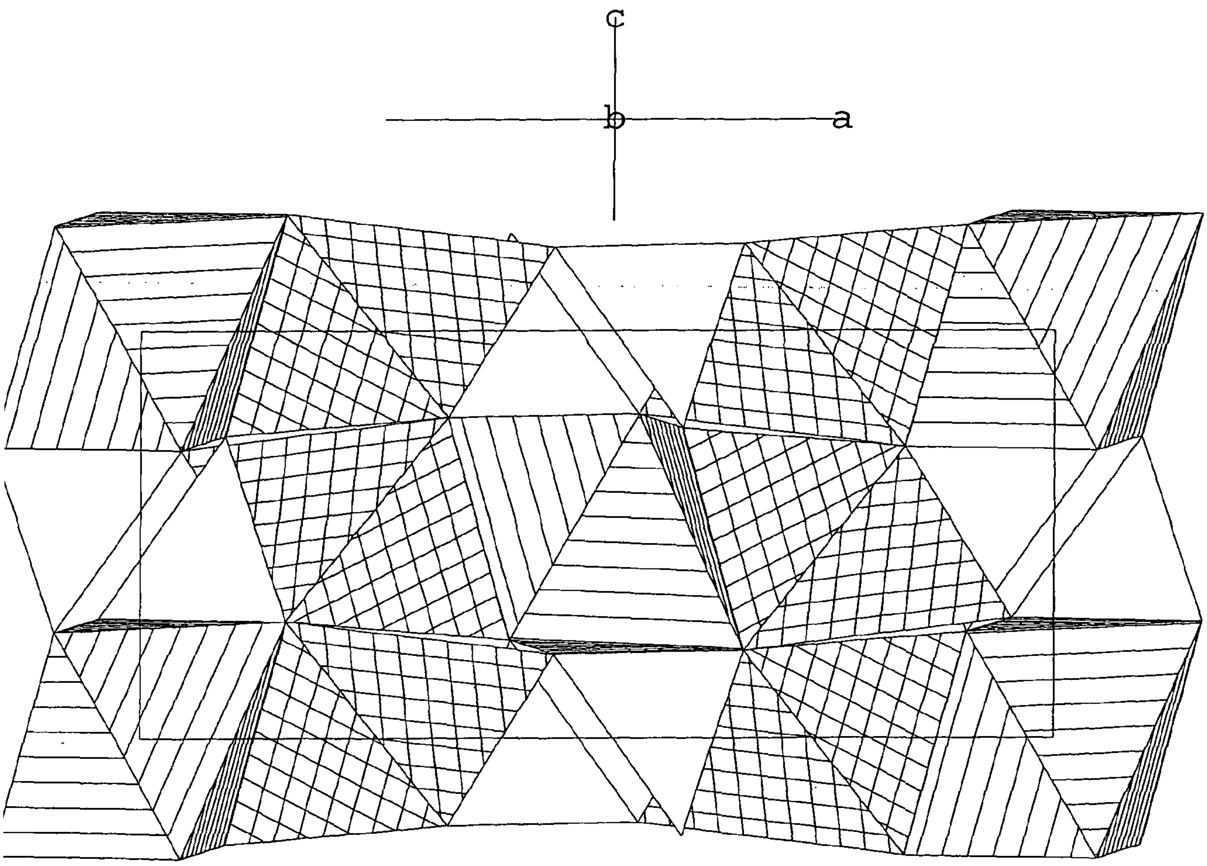


FIG. 6

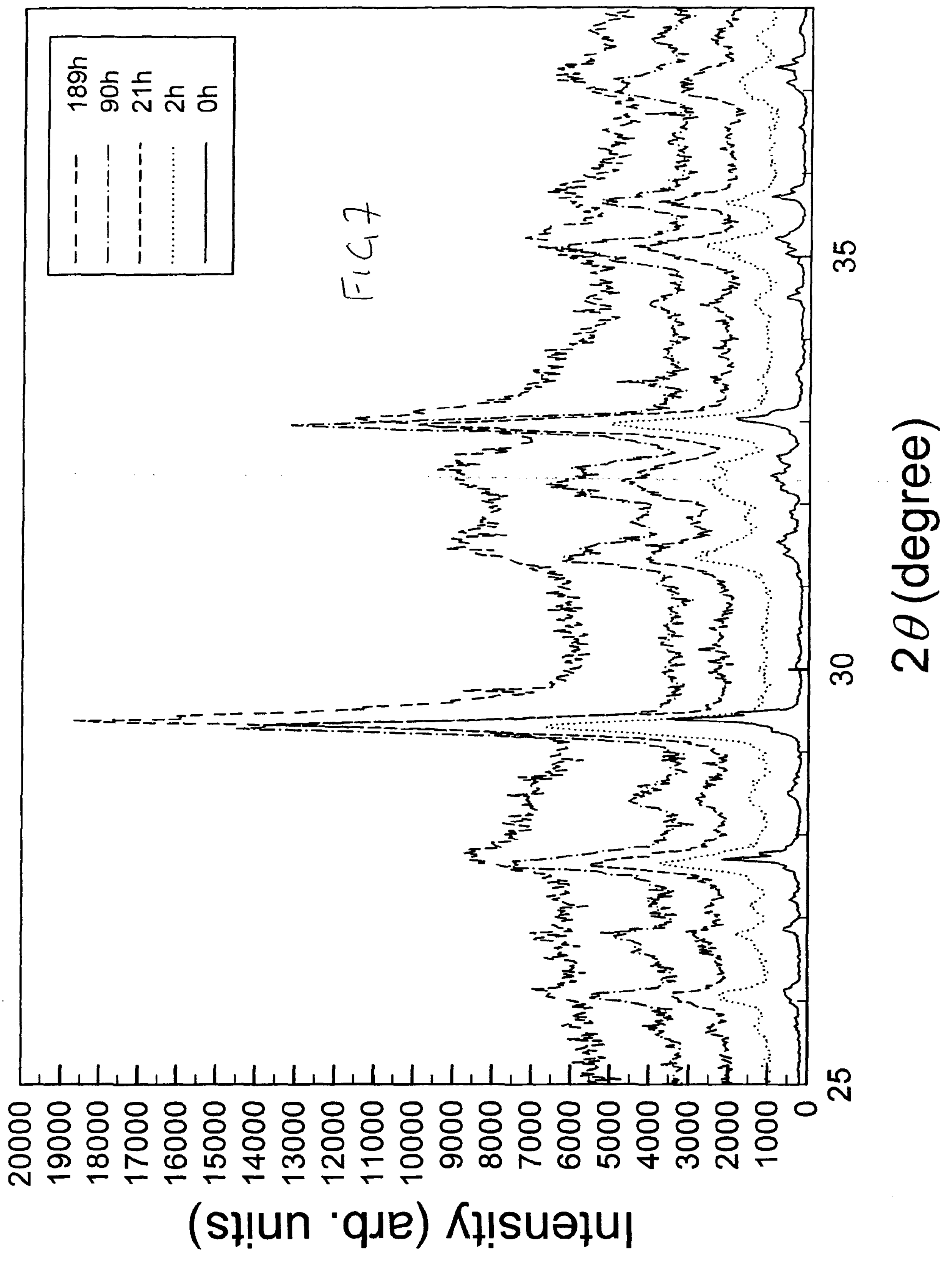
FIG 7
189h
90h
21h
2h
0h
Intensity (arb. units)
20000
19000
18000
17000
16000
15000
14000
13000
12000
11000
10000
9000
8000
7000
6000
5000
4000
3000
2000
1000
0
25
30
35
2θ (degree)

| | $LiFePO_4$ | $FePO_4$ | Difference $\frac{LiFePO_4}{FePO_4}$ |
|---|---|---|---|
| Crystal system | orthorhombic | | |
| Space group | Nr. 62, *Pnmb* | | |
| $a$ [pm] | 600,8(3) | 579,2(1) | -3,7(3) % |
| $b$ [pm] | 1033,4(4) | 982,1(1) | -5,2(3) % |
| $c$ [pm] | 469,3(1) | 478,8(1) | +1,9(8) % |
| $\beta$ [°] | 90 | 90 | |
| $V$ [$10^6 pm^3$] | 291 | 272 | -6,9(9) % |

FIG. 8

# IUPAC Periodic Table of the Elements

Key:
atomic number
**Symbol**
name
standard atomic weight

| 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|
| 1<br>**H**<br>hydrogen<br>1.007 94(7) | | | | | | | | | | | | | | | | | 2<br>**He**<br>helium<br>4.002 602(2) |
| 3<br>**Li**<br>lithium<br>6.941(2) | 4<br>**Be**<br>beryllium<br>9.012 182(3) | | | | | | | | | | | 5<br>**B**<br>boron<br>10.811(7) | 6<br>**C**<br>carbon<br>12.0107(8) | 7<br>**N**<br>nitrogen<br>14.0067(2) | 8<br>**O**<br>oxygen<br>15.9994(3) | 9<br>**F**<br>fluorine<br>18.998 4032(5) | 10<br>**Ne**<br>neon<br>20.1797(6) |
| 11<br>**Na**<br>sodium<br>22.989 769 28(2) | 12<br>**Mg**<br>magnesium<br>24.3050(6) | | | | | | | | | | | 13<br>**Al**<br>aluminium<br>26.981 538 6(8) | 14<br>**Si**<br>silicon<br>28.0855(3) | 15<br>**P**<br>phosphorus<br>30.973 762(2) | 16<br>**S**<br>sulfur<br>32.065(5) | 17<br>**Cl**<br>chlorine<br>35.453(2) | 18<br>**Ar**<br>argon<br>39.948(1) |
| 19<br>**K**<br>potassium<br>39.0983(1) | 20<br>**Ca**<br>calcium<br>40.078(4) | 21<br>**Sc**<br>scandium<br>44.955 912(6) | 22<br>**Ti**<br>titanium<br>47.867(1) | 23<br>**V**<br>vanadium<br>50.9415(1) | 24<br>**Cr**<br>chromium<br>51.9961(6) | 25<br>**Mn**<br>manganese<br>54.938 045(5) | 26<br>**Fe**<br>iron<br>55.845(2) | 27<br>**Co**<br>cobalt<br>58.933 195(5) | 28<br>**Ni**<br>nickel<br>58.6934(2) | 29<br>**Cu**<br>copper<br>63.546(3) | 30<br>**Zn**<br>zinc<br>65.409(4) | 31<br>**Ga**<br>gallium<br>69.723(1) | 32<br>**Ge**<br>germanium<br>72.64(1) | 33<br>**As**<br>arsenic<br>74.921 60(2) | 34<br>**Se**<br>selenium<br>78.96(3) | 35<br>**Br**<br>bromine<br>79.904(1) | 36<br>**Kr**<br>krypton<br>83.798(2) |
| 37<br>**Rb**<br>rubidium<br>85.4678(3) | 38<br>**Sr**<br>strontium<br>87.62(1) | 39<br>**Y**<br>yttrium<br>88.905 85(2) | 40<br>**Zr**<br>zirconium<br>91.224(2) | 41<br>**Nb**<br>niobium<br>92.906 38(2) | 42<br>**Mo**<br>molybdenum<br>95.94(2) | 43<br>**Tc**<br>technetium<br>[98] | 44<br>**Ru**<br>ruthenium<br>101.07(2) | 45<br>**Rh**<br>rhodium<br>102.905 50(2) | 46<br>**Pd**<br>palladium<br>106.42(1) | 47<br>**Ag**<br>silver<br>107.8682(2) | 48<br>**Cd**<br>cadmium<br>112.411(8) | 49<br>**In**<br>indium<br>114.818(3) | 50<br>**Sn**<br>tin<br>118.710(7) | 51<br>**Sb**<br>antimony<br>121.760(1) | 52<br>**Te**<br>tellurium<br>127.60(3) | 53<br>**I**<br>iodine<br>126.904 47(3) | 54<br>**Xe**<br>xenon<br>131.293(6) |
| 55<br>**Cs**<br>caesium<br>132.905 451 9(2) | 56<br>**Ba**<br>barium<br>137.327(7) | 57-71<br>lanthanoids | 72<br>**Hf**<br>hafnium<br>178.49(2) | 73<br>**Ta**<br>tantalum<br>180.947 88(2) | 74<br>**W**<br>tungsten<br>183.84(1) | 75<br>**Re**<br>rhenium<br>186.207(1) | 76<br>**Os**<br>osmium<br>190.23(3) | 77<br>**Ir**<br>iridium<br>192.217(3) | 78<br>**Pt**<br>platinum<br>195.084(9) | 79<br>**Au**<br>gold<br>196.966 569(4) | 80<br>**Hg**<br>mercury<br>200.59(2) | 81<br>**Tl**<br>thallium<br>204.3833(2) | 82<br>**Pb**<br>lead<br>207.2(1) | 83<br>**Bi**<br>bismuth<br>208.980 40(1) | 84<br>**Po**<br>polonium<br>[209] | 85<br>**At**<br>astatine<br>[210] | 86<br>**Rn**<br>radon<br>[222] |
| 87<br>**Fr**<br>francium<br>[223] | 88<br>**Ra**<br>radium<br>[226] | 89-103<br>actinoids | 104<br>**Rf**<br>rutherfordium<br>[261] | 105<br>**Db**<br>dubnium<br>[262] | 106<br>**Sg**<br>seaborgium<br>[266] | 107<br>**Bh**<br>bohrium<br>[264] | 108<br>**Hs**<br>hassium<br>[277] | 109<br>**Mt**<br>meitnerium<br>[268] | 110<br>**Ds**<br>darmstadtium<br>[271] | 111<br>**Rg**<br>roentgenium<br>[272] | | | | | | | |

| | | | | | | | | | | | | | | |
|---|---|---|---|---|---|---|---|---|---|---|---|---|---|---|
| 57<br>**La**<br>lanthanum<br>138.905 47(7) | 58<br>**Ce**<br>cerium<br>140.116(1) | 59<br>**Pr**<br>praseodymium<br>140.907 65(2) | 60<br>**Nd**<br>neodymium<br>144.242(3) | 61<br>**Pm**<br>promethium<br>[145] | 62<br>**Sm**<br>samarium<br>150.36(2) | 63<br>**Eu**<br>europium<br>151.964(1) | 64<br>**Gd**<br>gadolinium<br>157.25(3) | 65<br>**Tb**<br>terbium<br>158.925 35(2) | 66<br>**Dy**<br>dysprosium<br>162.500(1) | 67<br>**Ho**<br>holmium<br>164.930 32(2) | 68<br>**Er**<br>erbium<br>167.259(3) | 69<br>**Tm**<br>thulium<br>168.934 21(2) | 70<br>**Yb**<br>ytterbium<br>173.04(3) | 71<br>**Lu**<br>lutetium<br>174.967(1) |
| 89<br>**Ac**<br>actinium<br>[227] | 90<br>**Th**<br>thorium<br>232.038 06(2) | 91<br>**Pa**<br>protactinium<br>231.035 88(2) | 92<br>**U**<br>uranium<br>238.028 91(3) | 93<br>**Np**<br>neptunium<br>[237] | 94<br>**Pu**<br>plutonium<br>[244] | 95<br>**Am**<br>americium<br>[243] | 96<br>**Cm**<br>curium<br>[247] | 97<br>**Bk**<br>berkelium<br>[247] | 98<br>**Cf**<br>californium<br>[251] | 99<br>**Es**<br>einsteinium<br>[252] | 100<br>**Fm**<br>fermium<br>[257] | 101<br>**Md**<br>mendelevium<br>[258] | 102<br>**No**<br>nobelium<br>[259] | 103<br>**Lr**<br>lawrencium<br>[262] |

**Notes**

- 'Aluminum' and 'cesium' are commonly used alternative spellings for 'aluminium' and 'caesium'.
- IUPAC 2005 standard atomic weights (mean relative atomic masses) are listed with uncertainties in the last figure in parentheses [M. E. Wieser, *Pure Appl. Chem.* 78, 2051 (2006)]. These values correspond to current best knowledge of the elements in natural terrestrial sources. For elements that have no stable or long-lived nuclides, the mass number of the nuclide with the longest confirmed half-life is listed between square brackets.
- Elements with atomic numbers 112 and above have been reported but not fully authenticated.

Copyright © 2007 IUPAC, the International Union of Pure and Applied Chemistry. For updates to this table, see http://www.iupac.org/reports/periodic_table/. This version is dated 22 June 2007.

FIG 9

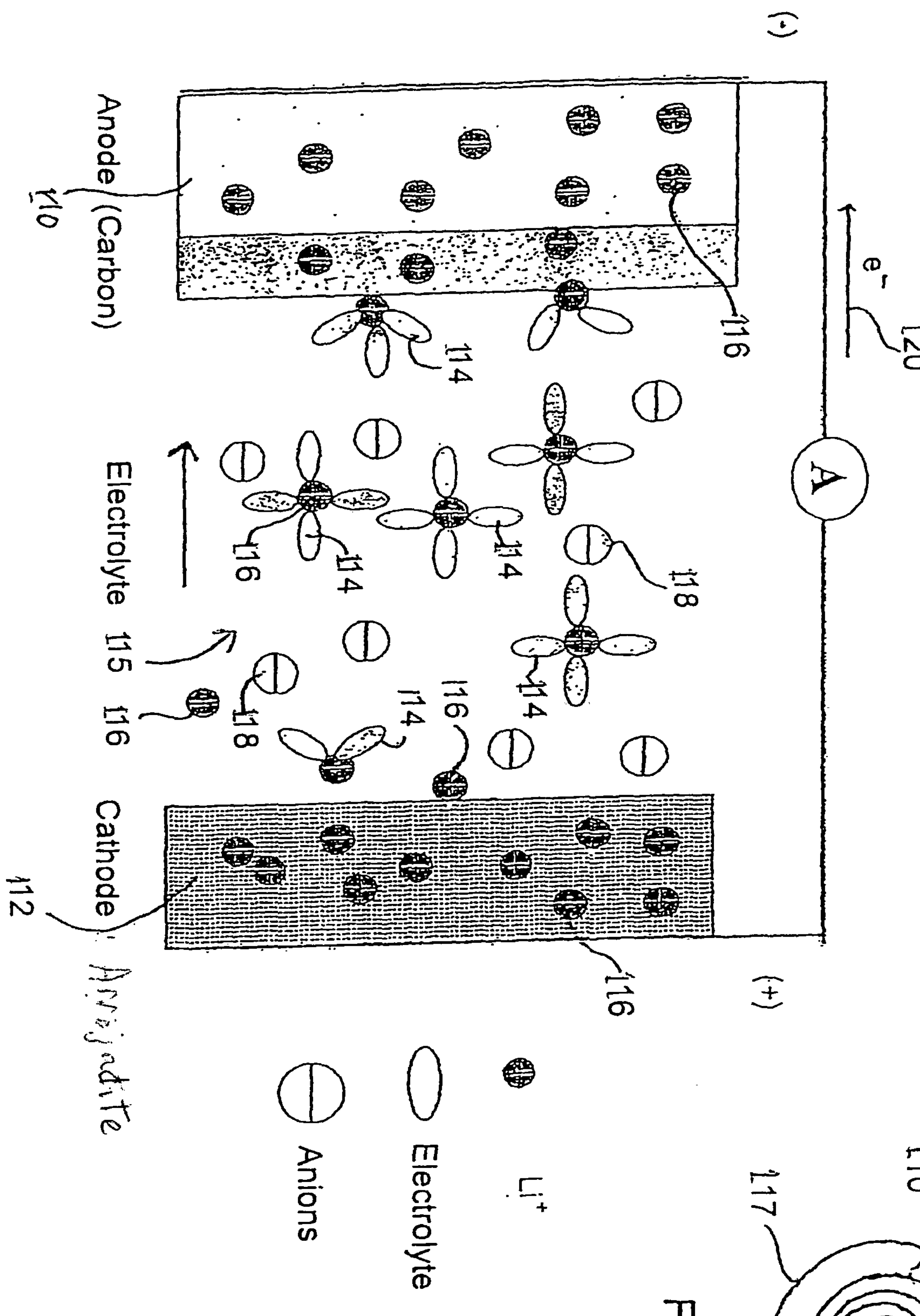
(-)
Anode (Carbon)
110
120
e⁻
116
114
A
Electrolyte
116
114
114
118
114
115
116
118
114
116
Cathode
112
Argyrodite
116
(+)
Li⁺
Electrolyte
Anions

FIG. 10

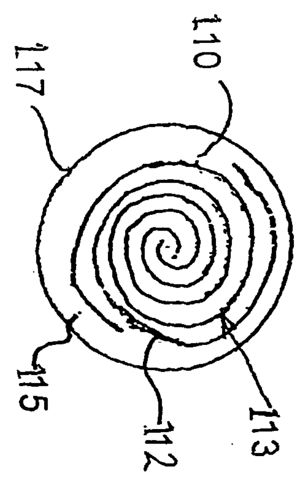
110
117
113
112
115

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4289612 A
- EP 1505680 B1

### Non-patent literature cited in the description


- **RAVET, N. ; CHOUINARD, J. ; BESNER, S. ; GAUTIER, M. ; ARMAND, M.** Electroactivity of natural and synthetic triphylite. *Journal of power sources,* 2001, vol. 97-98, 503-507
- Sigismundite, (Ba, K, Pb) Na3(ca, Sr)(Fe, Mg, Mn)14Al(OH2(PO4)12, a new Ba-rich member of the arrojadite group from Spluga Valley, Italy. **DEMARTIN F. et al.** Canadian Mineralogist. Mineralogical Association of Canada Ottowa, 01 January 1996, vol. 34, 827-834
- **SHINNO I et al.** Octahedral site Fe2+ quadrupole splitting distributions from the Mossbauer spectra of arrojadite. American Mineralogist, vol. 83, 1316-1322
- **CAMARA F et al.** The arrojadite enigma: I. A new formula and a new model for the arrojadite structure. American Mineralogist, vol. 91, 1249-1259
- **O. V. YAKUBOVICH ; E. N. MATVIENKO ; M. A. SIMONOV ; O.K. MEL'NIKOV.** Crystal Structure of Synnthetic Fe3+- Arrojadite with ideal formula of K2Na5Fe2+14Fe3+(PO4)12(OH). Vestnik Moskovskogo Universiteta, 1986, vol. 41, 36-47
- **LINDBERG, M.L.** Arrojadite, hühnerkobelite and graftonite. *Am. Mineral.,* 1950, vol. 35, 59-76
- **YAKUBOVICH, O. ; MATVIENKO, E. N. ; SIMONOV, M. A ; MELLNIKOV, O. K.** Crystal structure of synthetic Fe3+ - arrojadite with ideal formula of K2Na5Fe2+14Fe3+(PO4)12(OH). *Geologiya,* 1986, vol. 41, 36-47
- **YAMADA, A ; CHUNG, S. C. ; HINOKUMA, K.** Optimised LiFePO4 for lithium battery cathodes. *Journal of the Electrochemical Society,* 2001, vol. 148, A224-229
- Modern zeolites. **TOMLINSON A. A. G.** Structure and function in detergents and petrochemicals. Trans Tech Publications Ltd, 1998
- **J. L. SUDWORTH.** Zebra batteries. *Journal of Power Sources,* 1994, vol. 51, 105-114